(19) **Europäisches Patentamt / European Patent Office / Office européen des brevets**

(11) **EP 4 779 919 A1**

(12) **EUROPEAN PATENT APPLICATION**
published in accordance with Art. 153(4) EPC

(43) Date of publication:
**22.07.2026 Bulletin 2026/30**

(21) Application number: **24873048.3**

(22) Date of filing: **27.09.2024**

(51) International Patent Classification (IPC):
**H04L 5/00** (2006.01)   **H04W 72/232** (2023.01)
**H04W 72/0457** (2023.01)

(52) Cooperative Patent Classification (CPC):
**H04L 5/00; H04W 72/0457; H04W 72/232**

(86) International application number:
**PCT/KR2024/014743**

(87) International publication number:
**WO 2025/071341 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.09.2023 KR 20230130420**

(71) Applicant: **Samsung Electronics Co., Ltd.**
**Suwon-si, Gyeonggi-do 16677 (KR)**

(72) Inventors:
• **CHOI, Kyungjun**
  **Suwon-si Gyeonggi-do 16677 (KR)**
• **KIM, Younsun**
  **Suwon-si Gyeonggi-do 16677 (KR)**
• **JI, Hyoungju**
  **Suwon-si Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

(54) **METHOD AND DEVICE FOR RECEIVING DOWNLINK CONTROL INFORMATION IN WIRELESS COMMUNICATION SYSTEM**

(57)   The present disclosure relates to a 5G or 6G communication system for supporting a higher data transmission rate. The present disclosure relates to a method performed by a terminal in a wireless communication system, the method comprising the steps of: receiving, from a base station, downlink control information (DCI) including a bandwidth part (BWP) indicator field and a first field; and performing DCI size alignment for the first field included in the DCI and a second field required for DCI format interpretation for a BWP indicated by the BWP indicator field corresponding to the first field, wherein the DCI is related to multi-cell scheduling, and if the first field includes a plurality of first blocks corresponding to respective cells configured for the multi-cell scheduling, the DCI size alignment may be applied on the basis of a block unit.

FIG.14

**Description**

[Technical Field]

The disclosure relates to operations of a terminal and a base station in a communication system. Specifically, the disclosure relates to a method and device for transmit and receive, by a terminal, data through multiple cells by using single downlink control information.

[Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with extended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

As described above, and with the advancement of wireless communication systems enabling the provision of diverse services, methods are required to ensure efficiently providing of these services.

[Disclosure of Invention]

[Technical Problem]

Embodiments set forth herein are to provide a device and a method capable of effectively providing services in a mobile communication system.

[Solution to Problem]

The disclosure proposes a method and device for determining a scheduled cell in a communication system.

The disclosure proposes a method for indicating a cell to be scheduled in DCI for scheduling multiple cells.

In the disclosure, in a method performed by a UE in a wireless communication system, the method may include receiving, from a base station, downlink control information including a bandwidth part (BWP) indicator field and a first field; and performing DCI size alignment for the first field included in the DCI and a second field corresponding to the first field, the second field being required for DCI format interpretation for a BWP indicated by the BWP indicator field, wherein the DCI may be associated with multi-cell scheduling, and when the first field includes a plurality of first blocks corresponding to respective cells configured for the multi-cell scheduling, the DCI size alignment may be applied on a per-block unit basis.

In the disclosure, in a UE in a wireless communication system, the UE may include a transceiver; and a controller connected to the transceiver, wherein the controller may be configured to receive, from a base station, downlink control information including a bandwidth part (BWP) indicator field and a first field, and perform DCI size alignment for the first field included in the DCI and a second field corresponding to the first field, the second field being required for DCI format interpretation for a BWP indicated by the BWP indicator field corresponding to the first field, wherein the DCI may be associated with multi-cell scheduling, and when the first field includes a plurality of first blocks corresponding to respective cells configured for the multi-cell scheduling, the DCI size alignment may be applied on a per-block unit basis.

[Advantageous Effects of Invention]

Embodiments set forth herein provide a device and a method capable of effectively providing services in a mobile communication system.

[Brief Description of Drawings]

FIG. 1 illustrates a basic structure of a time-frequency domain in a wireless communication system according to an embodiment of the disclosure.

FIG. 2 illustrates a structure of a frame, a subframe, and a slot in a wireless communication system according to an embodiment of the disclosure.

FIG. 3 illustrates an example of a bandwidth part configuration in a wireless communication system according to an embodiment of the disclosure.

FIG. 4 illustrates an example of a control resource set (CORESET) used to transmit a downlink control channel in a 5G wireless communication system.

FIG. 5 illustrates an example of a basic unit of time and frequency resources constituting a downlink control channel available in 5G.

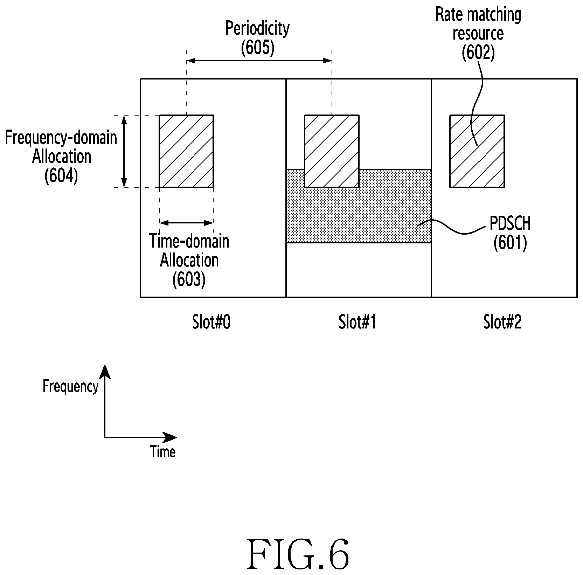

FIG. 6 illustrates a method in which a base station and a UE transmit/receive data in consideration of a downlink data channel and a rate matching resource in a wireless communication system according to an embodiment of the disclosure.

FIG. 7 illustrates an example of frequency domain resource allocation with regard to a PDSCH in a wireless communication system according to an embodiment of the disclosure.

FIG. 8 illustrates an example of time domain resource allocation with regard to a PDSCH in a wireless communication system according to an embodiment of the disclosure.

FIG. 9 illustrates an example of time domain resource allocation according to subcarrier spacings with regard to a data channel and a control channel in a wireless communication system according to an embodiment of the disclosure.

FIG. 10 illustrates radio protocol structures of a base station and a UE in single cell, carrier aggregation, and dual connectivity situations in a wireless communication system according to an embodiment of the disclosure.

FIG. 11 illustrates an example of DCI field length alignment according to an embodiment of the disclosure.

FIG. 12 illustrates an example of DCI field length alignment according to an embodiment of the disclosure.

FIG. 13 illustrates an example of DCI field length alignment according to an embodiment of the disclosure.

FIG. 14 illustrates an example of DCI field length alignment according to an embodiment of the disclosure.

FIG. 15 illustrates an example of DCI field length alignment according to an embodiment of the disclosure.

FIG. 16 illustrates an example of DCI field length alignment according to an embodiment of the disclosure.

FIG. 17 illustrates an example of DCI field length alignment according to an embodiment of the disclosure.

FIG. 18 illustrates a structure of a UE in a wireless communication system according to an embodiment of the disclosure.

FIG. 19 illustrates a structure of a base station in a wireless communication system according to an embodiment of the disclosure.

[Mode for the Invention]

Hereinafter, embodiments of the disclosure will be described in detail with reference to the accompanying drawings.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size thereof. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the disclosure, the same or like reference numerals designate the same or like elements. Furthermore, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. In the disclosure, a "downlink (DL)" refers to a radio link via which a base station transmits a signal to a terminal, and an "uplink (UL)" refers to a radio link via which a terminal transmits a signal to a base station. Furthermore, in the following description, LTE or LTE-A systems may be described by way of example, but the embodiments of the disclosure may also be applied to other communication systems having similar technical backgrounds or channel types. Examples of such communication systems may include the 5th generation mobile communication technologies (5G, new radio, and NR) developed beyond LTE-A, and in the following description, the "5G" may be the concept that covers the exiting LTE, LTE-A, and other similar services. In addition, based on determinations by those skilled in the art, the disclosure may also be applied to other communication systems through some modifications without significantly departing from the scope of the disclosure.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a user equipment (UE) or a mobile station (MS) transmits data or control signals to a base station (BS) (or eNode B), and the downlink refers to a radio link via which the base station transmits data or control signals to the UE. The above multiple access scheme may separate data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

eMBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique are required to be improved. Also, the data rate required for the 5G communication system may be obtained using a frequency bandwidth more than 20MHz in a frequency band of 3 to 6GHz or 6GHz or above, instead of transmitting signals using a transmission bandwidth up to 20MHz in a band of 2GHz used in LTE.

In addition, mMTC is being considered to support application services such as the Internet of Things (IoT) in the 5G communication system. mMTC has requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km$^2$) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC is a cellular-based mission-critical wireless communication service. For example, URLLC may be used for services such as remote control for robots or machines, industrial automation, unmanned aerial vehicles, remote health care, and emergency alert. Thus, URLLC must provide communication with ultra-low latency and ultra-high reliability. For example, a service supporting URLLC must satisfy an air interface latency of less than 0.5ms, and also requires a packet error rate of 10$^{-5}$ or less. Therefore, for the services supporting URLLC, a 5G system must provide a transmit time interval (TTI) shorter than those of other services, and also may require a design for assigning a large number of resources in a frequency band in order to secure reliability of a communication link.

The three services in 5G, that is, eMBB, URLLC, and mMTC, may be multiplexed and transmitted in a single system. In this case, different transmission/reception techniques and transmission/reception parameters may be used between services in order to satisfy different requirements of the respective services. Of course, 5G is not limited to the three services described above.

[NR time-frequency resources]

Hereinafter, a frame structure of a 5G system will be described in more detail with reference to the accompanying drawings.

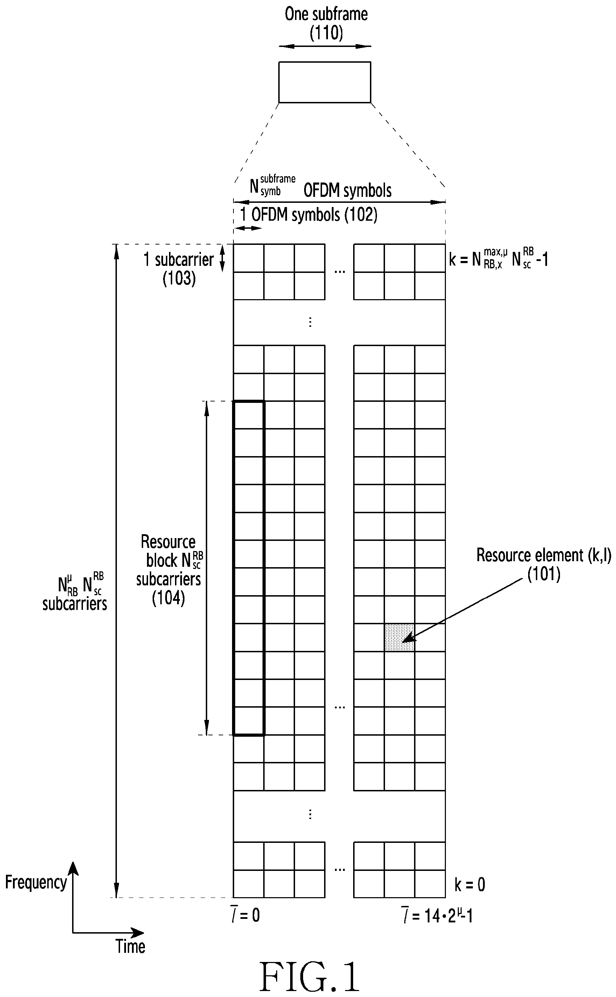

FIG. 1 illustrates a basic structure of a time-frequency domain, which is a radio resource domain used to transmit data or control channels, in a 5G system.

In FIG. 1, the horizontal axis denotes a time domain, and the vertical axis denotes a frequency domain. The basic unit of resources in the time-frequency domain is a resource element (RE) 101, which may be defined as one orthogonal frequency division multiplexing (OFDM) symbol 102 on the time axis and one subcarrier 103 on the frequency axis. In the frequency domain, $N_{SC}^{RB}$ (for example, 12) consecutive REs may constitute one resource block (RB) 104.

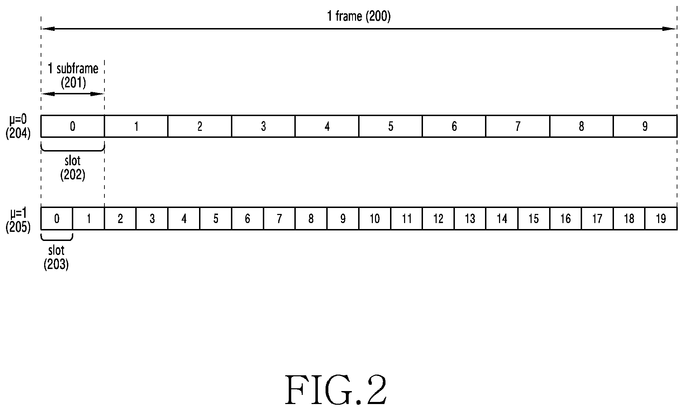

FIG. 2 illustrates a structure of a frame, a subframe, and a slot in a wireless communication system according to an embodiment of the disclosure.

An example of a structure of a frame 200, a subframe 201, and a slot 202 is illustrated in FIG. 2. One frame 200 may be defined as 10ms. One subframe 201 may be defined as 1ms, and thus one frame 200 may include a total of ten subframes 201. One slot 202 or 203 may be defined as 14 OFDM symbols (that is, the number of symbols per one slot $N_{symb}^{slot}=14$). One subframe 201 may include one or multiple slots 202 and 203, and the number of slots 202 and 203 per one subframe 201 may vary depending on configuration values $\mu$ for the subcarrier spacing 204 or 205. The example in FIG. 2 illustrates a case in which the subcarrier spacing configuration value is $\mu$=0 (204), and a case in which $\mu$=1 (205). In the case of $\mu$=0 (204), one subframe 201 may include one slot 202, and in the case of $\mu$=1 (205), one subframe 201 may include two slots 203. That is, the number of slots per one subframe $N_{slot}^{subframe,\mu}$ may differ depending on the subcarrier spacing configuration value $\mu$, and the number of slots per one frame $N_{slot}^{frame,\mu}$ may differ accordingly. $N_{slot}^{subframe,\mu}$ and $N_{slot}^{frame,\mu}$ may be defined according to each subcarrier spacing configuration $\mu$ as in Table 1 below.

[Table 1]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

[Bandwidth part (BWP)]

Next, a bandwidth part (BWP) configuration in a 5G communication system will be described in detail with reference to the accompanying drawings.

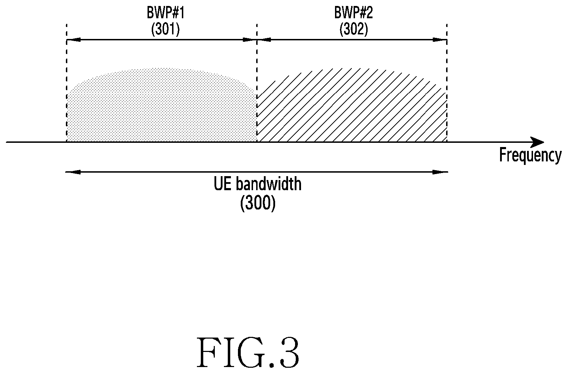

FIG. 3 illustrates an example of a bandwidth part configuration in a wireless communication system according to an embodiment of the disclosure.

FIG. 3 illustrates an example in which a UE bandwidth 300 is configured to include two bandwidth parts, that is, bandwidth part #1 (BWP#1) 301 and bandwidth part #2 (BWP#2) 302. A base station may configure one or multiple bandwidth parts for a UE, and may configure the following pieces of information with regard to each bandwidth part as given in Table 2 below.

[Table 2]

```
BWP ::=                          SEQUENCE {

    bwp-Id                       BWP-Id,
      (bandwidth part identifier)

    locationAndBandwidth         INTEGER (1..65536),
      (bandwidth part location)

    subcarrierSpacing            ENUMERATED {n0, n1, n2, n3, n4, n5},
      (subcarrier spacing)

    cyclicPrefix                 ENUMERATED { extended }
      (cyclic prefix)

}
```

Obviously, the above example is not limiting, and various parameters related to the bandwidth part may be configured for the UE, in addition to the above configuration information. The base station may transfer the configuration information to the UE through upper layer signaling, for example, radio resource control (RRC) signaling. One configured bandwidth part or at least one bandwidth part among multiple configured bandwidth parts may be activated. Whether or not the configured bandwidth part is activated may be transferred from the base station to the UE semi-statically through RRC signaling, or dynamically through downlink control information (DCI).

According to some embodiments, before a radio resource control (RRC) connection, an initial bandwidth part (BWP) for initial access may be configured for the UE by the base station through a master information block (MIB). More specifically, the UE may receive configuration information regarding a control resource set (CORESET) and a search space which may be used to transmit a PDCCH for receiving system information (which may correspond to remaining system information (RMSI) or system information block 1 (SIB1) necessary for initial access through the MIB in the initial access step. Each of the control resource set and the search space configured through the MIB may be considered identity (ID) 0. The base station may notify the UE of configuration information, such as frequency allocation information, time allocation information, and numerology, regarding control resource set #0 through the MIB. In addition, the base station may notify the UE of configuration information regarding the monitoring periodicity and occasion with regard to control resource set #0, that is, configuration information regarding search space #0, through the MIB. The UE may consider that a frequency domain configured by control resource set #0 acquired from the MIB is an initial bandwidth part for initial access. The ID of the initial bandwidth part may be considered to be 0.

The bandwidth part-related configuration supported by 5G may be used for various purposes.

According to some embodiments, if the bandwidth supported by the UE is smaller than the system bandwidth, this may be supported through the bandwidth part configuration. For example, the base station may configure the frequency location (configuration information 2) of the bandwidth part for the UE, so that the UE can transmit/receive data at a specific frequency location within the system bandwidth.

In addition, according to some embodiments, the base station may configure multiple bandwidth parts for the UE for the purpose of supporting different numerologies. For example, in order to support a UE's data transmission/reception using both a subcarrier spacing of 15kHz and a subcarrier spacing of 30kHz, two bandwidth parts may be configured as subcarrier spacings of 15kHz and 30kHz, respectively. Different bandwidth parts may be subjected to frequency division multiplexing (FDM), and if data is to be transmitted/received at a specific subcarrier spacing, the bandwidth part configured as the corresponding subcarrier spacing may be activated.

In addition, according to some embodiments, the base station may configure bandwidth parts having different sizes of bandwidths for the UE for the purpose of reducing power consumed by the UE. For example, if the UE supports a substantially large bandwidth, for example, 100MHz, and always transmits/receives data with the corresponding bandwidth, a substantially large amount of power consumption may occur. Particularly, it may be substantially inefficient from the viewpoint of power consumption to unnecessarily monitor the downlink control channel with a large In order to reduce power consumed by the UE, the base station may configure a bandwidth part of a relatively small bandwidth (for example, a bandwidth part of 20MHz) for the UE. The UE may perform a monitoring operation in the 20MHz bandwidth part in the absence of traffic, and may transmit/receive data with the 100MHz bandwidth part as instructed by the base station if data has occurred.

In connection with the bandwidth part configuring method, UEs, before being RRC-connected, may receive configuration information regarding the initial bandwidth part through an MIB in the initial access step. To be more specific, a UE may have a control resource set (CORESET) configured for a downlink control channel which may be used to transmit downlink control information (DCI) for scheduling a system information block (SIB) from the MIB of a physical broadcast channel (PBCH). The bandwidth of the control resource set configured by the MIB may be considered as the initial bandwidth part, and the UE may receive, through the configured initial bandwidth part, a physical downlink shared channel (PDSCH) through which an SIB is transmitted. The initial bandwidth part may be used not only for the purpose of receiving the SIB, but also for other system information (OSI), paging, random access, or the like.

If a UE has one or more bandwidth parts configured therefor, the base station may indicate, to the UE, to change (or switch or transition) the bandwidth parts by using a bandwidth part indicator field inside DCI. As an example, if the currently activated bandwidth part of the UE is bandwidth part #1 301 in FIG. 3, the base station may indicate bandwidth part #2 302 with a bandwidth part indicator inside DCI, and the UE may change the bandwidth part to bandwidth part #2 302 indicated by the bandwidth part indicator inside received DCI.

As described above, DCI-based bandwidth part changing may be indicated by DCI for scheduling a PDSCH or a PUSCH, and thus, upon receiving a bandwidth part change request, the UE needs to be able to receive or transmit the PDSCH or PUSCH scheduled by the corresponding DCI in the changed bandwidth part with no problem. To this end, requirements for the delay time ($T_{BWP}$) required during a bandwidth part change are specified in standards, and may be defined as given in Table 3, for example.

[Table 3]

| $\mu$ | NR Slot length (ms) | BWP switch delay $T_{BWP}$ (slots) | |
|---|---|---|---|
| | | Type 1[Note 1] | Type 2[Note 1] |
| 0 | 1 | 1 | 3 |
| 1 | 0.5 | 2 | 5 |
| 2 | 0.25 | 3 | 9 |
| 3 | 0.125 | 6 | 18 |
| Note 1: Depends on UE capability. | | | |
| Note 2: If the BWP switch involves changing of SCS, the BWP switch delay is determined by the larger one between the SCS before BWP switch and the SCS after BWP switch. | | | |

The requirements for the bandwidth part change delay time support type 1 or type 2, depending on the capability of the UE. The UE may report the supportable bandwidth part change delay time type to the base station.

If the UE has received DCI including a bandwidth part change indicator in slot n, according to the above-described requirement regarding the bandwidth part change delay time, the UE may complete a change to the new bandwidth part indicated by the bandwidth part change indicator at a time point not later than slot n+$T_{BWP}$, and may transmit/receive a data channel scheduled by the corresponding DCI in the newly changed bandwidth part. If the base station wants to schedule a data channel by using the new bandwidth part, the base station may determine time domain resource allocation regarding the data channel in consideration of the UE's bandwidth part change delay time ($T_{BWP}$). That is, when scheduling a data channel by using the new bandwidth part, the base station may schedule the corresponding data channel after the bandwidth part change delay time, in connection with the method for determining time domain resource allocation regarding the data channel. Accordingly, the UE may not expect that the DCI indicating a bandwidth part change will indicate a slot offset (K0 or K2) value smaller than the bandwidth part change delay time ($T_{BWP}$).

If the UE has received DCI (for example, DCI format 1_1 or 0_1) indicating a bandwidth part change, the UE may perform no transmission or reception during a time interval from the third symbol of the slot used to receive a PDCCH including the corresponding DCI to the start point of the slot indicated by a slot offset (K0 or K2) value indicated by a time domain resource allocation indicator field in the corresponding DCI. For example, if the UE has received DCI indicating a bandwidth part change in slot n, and if the slot offset value indicated by the corresponding DCI is K, the UE may perform no transmission or reception from the third symbol of slot n to the symbol before slot n+K (for example, the last symbol of slot n+K-1).

[SS/PBCH block]

Next, synchronization signal (SS)/PBCH blocks in 5G will be described.

An SS/PBCH block may refer to a physical layer channel block including a primary synchronization signal (PSS), a secondary synchronization signal (SSS), and a PBCH. Details thereof are as follows.

- PSS: a signal which becomes a reference of downlink time/frequency synchronization, and provides partial information of a cell ID.
- SSS: becomes a reference of downlink time/frequency synchronization, and provides remaining cell ID information not provided by the PSS. Additionally, the SSS may serve as a reference signal for PBCH demodulation of a PBCH.
- PBCH: provides an MIB which is mandatory system information necessary for the UE to transmit/receive data channels and control channels. The mandatory system information may include search space-related control information indicating a control channel's radio resource mapping information, scheduling control information regarding a separate data channel for transmitting system information, and the like.
- SS/PBCH block: the SS/PBCH block includes a combination of a PSS, an SSS, and a PBCH. One or multiple SS/PBCH blocks may be transmitted within a time period of 5ms, and each transmitted SS/PBCH block may be distinguished by an index.

The UE may detect the PSS and the SSS in the initial access stage, and may decode the PBCH. The UE may acquire an MIB from the PBCH, and this may be used to configure control resource set (CORESET) #0 (which may correspond to a control resource set having a control resource set index of 0). The UE may monitor control resource set #0 by assuming that the demodulation reference signal (DMRS) transmitted in the selected SS/PBCH block and control resource set #0 are quasi-co-located (QCL). The UE may receive system information with downlink control information transmitted in control resource set #0. The UE may acquire configuration information related to a random access channel (RACH) necessary for initial access from the received system information. The UE may transmit a physical RACH (PRACH) to the base station in consideration of a selected SS/PBCH index, and the base station, upon receiving the PRACH, may acquire information regarding the SS/PBCH block index selected by the UE. The base station may know which block the UE has selected from respective SS/PBCH blocks, and the fact that control resource set #0 associated therewith is monitored.

[PDCCH: regarding DCI]

Next, downlink control information (DCI) in a 5G system will be described in detail.

In a 5G system, scheduling information regarding uplink data (or physical uplink shared channel (PUSCH)) or downlink data (or physical downlink shared channel (PDSCH)) is included in DCI and transferred from a base station to a UE through the DCI. The UE may monitor, with regard to the PUSCH or PDSCH, a fallback DCI format and a non-fallback DCI format. The fallback DCI format may include a fixed field predefined between the base station and the UE, and the non-fallback DCI format may include a configurable field.

The DCI may be subjected to channel coding and modulation processes and then transmitted through a physical downlink control channel (PDCCH) after a channel coding and modulation process. A cyclic redundancy check (CRC) may be attached to the payload of a DCI message, and the CRC may be scrambled by a radio network temporary identifier (RNTI) corresponding to the identity of the UE. Different RNTIs may be used according to the purpose of the DCI message, for example, UE-specific data transmission, power control command, or random access response. That is, the RNTI may not be explicitly transmitted, but may be transmitted while being included in a CRC calculation process. Upon receiving a DCI message transmitted through the PDCCH, the UE may identify the CRC by using the allocated RNTI, and if the CRC identification result is right, the UE may know that the corresponding message has been transmitted to the UE.

For example, DCI for scheduling a PDSCH regarding system information (SI) may be scrambled by an SI-RNTI. DCI for scheduling a PDSCH regarding a random access response (RAR) message may be scrambled by an RA-RNTI. DCI for scheduling a PDSCH regarding a paging message may be scrambled by a P-RNTI. DCI for notifying of a slot format indicator (SFI) may be scrambled by an SFI-RNTI. DCI for notifying of transmit power control (TPC) may be scrambled by a TPC-RNTI. DCI for scheduling a UE-specific PDSCH or PUSCH may be scrambled by a cell RNTI (C-RNTI).

DCI format 0_0 may be used as fallback DCI for scheduling a PUSCH, and in this case, the CRC may be scrambled by a C-RNTI. DCI format 0_0 in which the CRC is scrambled by a C-RNTI may include the following pieces of information given in Table 4 below, for example.

[Table 4]

| |
|---|
| - Identifier for DCI formats - [1] bit |
| - Frequency domain resource assignment - $\left[ \left\lceil \log_2 (N_{\mathrm{RB}}^{\mathrm{UL,BWP}} (N_{\mathrm{RB}}^{\mathrm{UL,BWP}} + 1)/2) \right\rceil \right]$ bits |
| - Time domain resource assignment - X bits |
| - Frequency hopping flag - 1 bit. |

(continued)

- Modulation and coding scheme - 5 bits
- New data indicator - 1 bit
- Redundancy version - 2 bits
- HARQ process number - 4 bits
- Transmit power control (TPC) command for scheduled PUSCH - [2] bits
- Uplink/ supplementary uplink (UL/SUL) indicator - 0 or 1 bit

DCI format 0_1 may be used as non-fallback DCI for scheduling a PUSCH, and in this case, the CRC may be scrambled by a C-RNTI. DCI format 0_1 in which the CRC is scrambled by a C-RNTI may include the following pieces of information given in Table 5 below, for example.

[Table 5]

- Carrier indicator - 0 or 3 bits
- UL/SUL indicator - 0 or 1 bit
- Identifier for DCI formats - [1] bits
- Bandwidth part indicator - 0, 1 or 2 bits
- Frequency domain resource assignment

* For resource allocation type 0, $\left\lceil N_{\mathrm{RB}}^{\mathrm{UL,BWP}}/P \right\rceil$ bits

* For resource allocation type 1, $\left\lceil \log_2(N_{\mathrm{RB}}^{\mathrm{UL,BWP}}(N_{\mathrm{RB}}^{\mathrm{UL,BWP}}+1)/2) \right\rceil$ bits

- Time domain resource assignment -1, 2, 3, or 4 bits
- Virtual resource block (VRB)-to-physical resource block (PRB) mapping - 0 or 1 bit, only for resource allocation type 1.
          * 0 bit if only resource allocation type 0 is configured;
          * 1 bit otherwise.
- Frequency hopping flag - 0 or 1 bit, only for resource allocation type 1.
          * 0 bit if only resource allocation type 0 is configured;
          * 1 bit otherwise.
- Modulation and coding scheme - 5 bits
- New data indicator - 1 bit
- Redundancy version - 2 bits
- HARQ process number - 4 bits
- 1st downlink assignment index- 1 or 2 bits
          * 1 bit for semi-static HARQ-ACK codebook;
          * 2 bits for dynamic HARQ-ACK codebook with single HARQ-ACK codebook.
- 2nd downlink assignment index - 0 or 2 bits
          * 2 bits for dynamic HARQ-ACK codebook with two HARQ-ACK sub-codebooks;
          * 0 bit otherwise.
- TPC command for scheduled PUSCH - 2 bits

- SRS resource indicator - $\left\lceil \log_2\left( \sum_{k=1}^{L_{\max}} \binom{N_{\mathrm{SRS}}}{k} \right) \right\rceil$ or $\left\lceil \log_2(N_{\mathrm{SRS}}) \right\rceil$ bits

   * $\left\lceil \log_2\left( \sum_{k=1}^{L_{\max}} \binom{N_{\mathrm{SRS}}}{k} \right) \right\rceil$ bits for non-codebook based PUSCH transmission;

   * $\left\lceil \log_2(N_{\mathrm{SRS}}) \right\rceil$ bits for codebook based PUSCH transmission.
- Precoding information and number of layers - up to 6 bits
- Antenna ports - up to 5 bits
- SRS request - 2 bits

(continued)

- Channel state information (CSI) request - 0, 1, 2, 3, 4, 5, or 6 bits
- Code block group (CBG) transmission information - 0, 2, 4, 6, or 8 bits
- Phase tracking reference signal (PTRS)-demodulation reference signal (DMRS) association - 0 or 2 bits.
- beta_offset indicator - 0 or 2 bits
- DMRS sequence initialization - 0 or 1 bit

DCI format 1_0 may be used as fallback DCI for scheduling a PDSCH, and in this case, the CRC may be scrambled by a C-RNTI. DCI format 1_0 in which the CRC is scrambled by a C-RNTI may include the following pieces of information given in Table 6 below, for example.

[Table 6]

- Identifier for DCI formats - [1] bit

- Frequency domain resource assignment - $\left\lceil \left\lceil \log_2 (N_{RB}^{DL,BWP}(N_{RB}^{DL,BWP}+1)/2) \right\rceil \right\rceil$ bits

- Time domain resource assignment - X bits
- VRB-to-PRB mapping - 1 bit.
- Modulation and coding scheme - 5 bits
- New data indicator - 1 bit
- Redundancy version - 2 bits
- HARQ process number - 4 bits
- Downlink assignment index - 2 bits
- TPC command for scheduled PUCCH - [2] bits
- Physical uplink control channel (PUCCH) resource indicator - 3 bits
- PDSCH-to-HARQ feedback timing indicator - [3] bits

DCI format 1_1 may be used as non-fallback DCI for scheduling a PDSCH, and in this case, the CRC may be scrambled by a C-RNTI. DCI format 1_1 in which the CRC is scrambled by a C-RNTI may include the following pieces of information given in Table 7 below, for example.

[Table 7]

- Carrier indicator - 0 or 3 bits
- Identifier for DCI formats - [1] bits
- Bandwidth part indicator - 0, 1 or 2 bits
- Frequency domain resource assignment

          * For resource allocation type 0, $\left\lceil N_{RB}^{DL,BWP}/P \right\rceil$ bits

          * For resource allocation type 1,

          $\left\lceil \log_2 (N_{RB}^{DL,BWP}(N_{RB}^{DL,BWP}+1)/2) \right\rceil$ bits

- Time domain resource assignment -1, 2, 3, or 4 bits
- VRB-to-PRB mapping - 0 or 1 bit, only for resource allocation type 1.
          * 0 bit if only resource allocation type 0 is configured;
          * 1 bit otherwise.
- Physical resource block (PRB) bundling size indicator - 0 or 1 bit
- Rate matching indicator - 0, 1, or 2 bits
- Zero power (ZP) channel state information (CSI)-reference signal (RS) trigger - 0, 1, or 2 bits
For transport block 1:
- Modulation and coding scheme - 5 bits
- New data indicator - 1 bit
- Redundancy version - 2 bits

(continued)

| For transport block 2: |
| --- |
| - Modulation and coding scheme - 5 bits |
| - New data indicator - 1 bit |
| - Redundancy version - 2 bits |
| - HARQ process number - 4 bits |
| - Downlink assignment index - 0 or 2 or 4 bits |
| - TPC command for scheduled PUCCH - 2 bits |
| - PUCCH resource indicator - 3 bits |
| - PDSCH-to-HARQ_feedback timing indicator - 3 bits |
| - Antenna ports - 4, 5 or 6 bits |
| - Transmission configuration indication - 0 or 3 bits |
| - SRS request - 2 bits |
| - CBG transmission information - 0, 2, 4, 6, or 8 bits |
| - CBG flushing out information - 0 or 1 bit |
| - DMRS sequence initialization - 1 bit |

[PDCCH: CORESET, REG, CCE, and Search Space]

Hereinafter, a downlink control channel in a 5G communication system will be described in more detail with reference to the accompanying drawings.

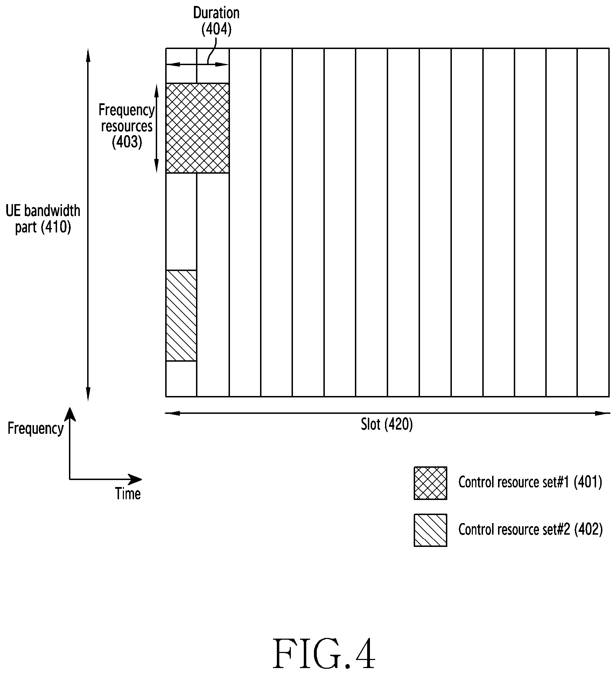

FIG. 4 illustrates an example of a control resource set (CORESET) used to transmit a downlink control channel in a 5G wireless communication system. FIG. 4 illustrates an example in which a UE bandwidth part 410 is configured along the frequency axis, and two control resource sets (control resource set #1 420 and control resource set #2 401) are configured within one slot 402 along the time axis. The control resource sets 401 and 402 may be configured in a specific frequency resource 410 within the entire UE bandwidth part 403 along the frequency axis. The control resource sets 401 and 402 may be each configured as one or multiple OFDM symbols along the time domain, and the number of the OFDM symbols may be defined as a control resource set duration 404. Referring to the example illustrated in FIG. 4, control resource set #1 401 is configured to have a control resource set duration corresponding to two symbols, and control resource set #2 402 is configured to have a control resource set duration corresponding to one symbol.

A control resource set in 5G described above may be configured for a UE by a base station through upper layer signaling (for example, system information, master information block (MIB), radio resource control (RRC) signaling). The description that a control resource set is configured for a UE means that information such as a control resource set identity, the control resource set's frequency location, and the control resource set's symbol duration is provided. For example, the control resource set may include the following pieces of information: given in Table 8 below.

[Table 8]

```
ControlResourceSet ::=                    SEQUENCE {
    -- Corresponds to L1 parameter 'CORESET-ID'


    controlResourceSetId              ControlResourceSetId,
    (control resource set identity))
    frequencyDomainResources          BIT STRING (SIZE (45)),
    (frequency domain resource assignment information)
    duration                          INTEGER (1..maxCoReSetDuration),
    (time domain resource assignment information )
    cce-REG-MappingType                        CHOICE {
    (CCE-to-REG mapping scheme)
        interleaved                   SEQUENCE {

            reg-BundleSize                ENUMERATED {n2, n3, n6},
            (REG bundle size)

            precoderGranularity           ENUMERATED
        {sameAsREG-bundle, allContiguousRBs},

            interleaverSize               ENUMERATED {n2, n3, n6}
            (interleaver size)
```

```
            shiftIndex                INTEGER(0..maxNrofPhysicalResourceBlocks-
        1)  OPTIONAL
            (interleaver shift)
            },
        nonInterleaved                NULL
        },
        tci-StatesPDCCH               SEQUENCE(SIZE
        (1..maxNrofTCI-StatesPDCCH)) OF TCI-StateId            OPTIONAL,
        (QCL configuration information)
        tci-PresentInDCI              ENUMERATED {enabled}
                OPTIONAL,      -- Need S
}
```

In Table 8, tci-StatesPDCCH (simply referred to as transmission configuration indication (TCI) state) configuration information may include information of one or multiple SS/PBCH block indexes or channel state information reference signal (CSI-RS) indexes, which are quasi-co-located (QCLed) with a DMRS transmitted in a corresponding control resource set.

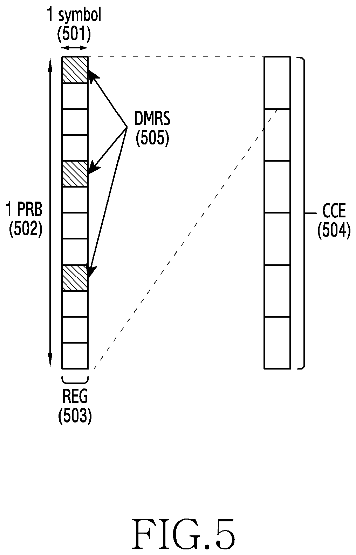

FIG. 5 illustrates an example of a basic unit of time and frequency resources constituting a downlink control channel available in 5G. According to FIG. 5, the basic unit of time and frequency resources constituting a control channel may be referred to as a resource element group (REG) 503, and the REG 503 may be defined by one OFDM symbol 501 along the time axis and one physical resource block (PRB) 502, that is, 12 subcarriers, along the frequency axis. The base station may configure a downlink control channel allocation unit by concatenating the REGs 503.

Provided that the basic unit of downlink control channel allocation in 5G is a control channel element 504 as illustrated in FIG. 5, one CCE 504 may include multiple REGs 503. To describe the REG 503 illustrated in FIG. 5, for example, the REG 503 may include 12 REs, and if one CCE 504 includes six REGs 503, one CCE 504 may then include 72 REs. A downlink control resource set, once configured, may include multiple CCEs 504, and a specific downlink control channel may be mapped to one or multiple CCEs 504 and then transmitted according to the aggregation level (AL) in the control resource set. The CCEs 504 in the control resource set are distinguished by numbers, and the numbers of CCEs 504 may be allocated according to a logical mapping scheme.

The basic unit of the downlink control channel illustrated in FIG. 5, that is, the REG 503, may include both REs to which DCI is mapped, and an area to which a reference signal (DMRS 505) for decoding the same is mapped. As in FIG. 5, three DRMSs 503 may be transmitted inside one REG 505. The number of CCEs necessary to transmit a PDCCH may be 1, 2, 4, 8, or 16 according to the aggregation level (AL), and different number of CCEs may be used to implement link adaption of the downlink control channel. For example, in the case of AL=L, one downlink control channel may be transmitted through L CCEs. The UE needs to detect a signal while being no information regarding the downlink control channel, and thus a search space indicating a set of CCEs has been defined for blind decoding. The search space is a set of downlink control channel candidates including CCEs which the UE needs to attempt to decode at a given AL, and since 1, 2, 4, 8, or 16 CCEs may constitute a bundle at various ALs, the UE may have multiple search spaces. A search space set may be defined as a set of search spaces at all configured aggregation levels.

Search spaces may be classified into common search spaces and UE-specific search spaces. A group of UEs or all UEs may search a common search space of the PDCCH in order to receive cell-common control information such as dynamic scheduling regarding system information or a paging message. For example, PDSCH scheduling allocation information for transmitting an SIB including a cell operator information or the like may be received by searching the common search space of the PDCCH. In the case of a common search space, a group of UEs or all UEs need to receive the PDCCH, and the common search space may thus be defined as a predetermined set of CCEs. Scheduling allocation information regarding a UE-specific PDSCH or PUSCH may be received by searching the UE-specific search space of the PDCCH. The UE-specific search space may be defined UE-specifically as a function of various system parameters and the identity of the UE.

In 5G, parameters for a search space regarding a PDCCH may be configured for the UE by the base station through upper layer signaling (for example, SIB, MIB, or RRC signaling). For example, the base station may provide the UE with configurations such as the number of PDCCH candidates at each aggregation level L, the monitoring cycle regarding the search space, the monitoring occasion with regard to each symbol in a slot regarding the search space, the search space type (common search space or UE-specific search space), a combination of an RNTI and a DCI format to be monitored in the corresponding search space, a control resource set index for monitoring the search space, and the like. For example, the control resource set may include the following pieces of information: given in Table 9 below.

[Table 9]

```
SearchSpace ::=                          SEQUENCE {
    -- Identity of the search space. SearchSpaceId = 0 identifies the SearchSpace configured
via PBCH (MIB) or ServingCellConfigCommon.
    searchSpaceId                        SearchSpaceId,
       (search space identity)
    controlResourceSetId                 ControlResourceSetId,
       (control resource set identity)
    monitoringSlotPeriodicityAndOffset   CHOICE {
       (monitoring slot level periodicity)
          sl1                                NULL,
          sl2                                INTEGER (0..1),
          sl4                                INTEGER (0..3),
          sl5                             INTEGER (0..4),
          sl8                                INTEGER (0..7),
          sl10                               INTEGER (0..9),
          sl16                               INTEGER (0..15),
          sl20                               INTEGER (0..19)
    }
       OPTIONAL,
       duration(monitoring duration)            INTEGER (2..2559)
    monitoringSymbolsWithinSlot          BIT STRING (SIZE (14))
OPTIONAL,
       (monitoring symbols within slot)
    nrofCandidates                       SEQUENCE {
       (number of PDCCH candidates for each aggregation level)
          aggregationLevel1              ENUMERATED {n0, n1, n2, n3, n4,
n5, n6, n8},
          aggregationLevel2              ENUMERATED {n0, n1, n2, n3, n4,
n5, n6, n8},
          aggregationLevel4              ENUMERATED {n0, n1, n2, n3, n4,
n5, n6, n8},
```

```
              aggregationLevel8                    ENUMERATED {n0, n1, n2, n3, n4,
n5, n6, n8},
              aggregationLevel16                   ENUMERATED {n0, n1, n2, n3,
n4, n5, n6, n8}
         },

     searchSpaceType                    CHOICE {
     (search space type)
          -- Configures this search space as common search space (CSS) and DCI formats to
monitor.
          common                             SEQUENCE {
          (common search space)
             }
          ue-Specific                        SEQUENCE {
          (UE-specific search space)
               -- Indicates whether the UE monitors in this USS for DCI formats 0-0 and 1-0
or for formats 0-1 and 1-1.
               formats                             ENUMERATED {formats0-0-
And-1-0, formats0-1-And-1-1},
               ...
          }
```

According to configuration information, the base station may configure one or multiple search space sets for the UE. According to some embodiments, the base station may configure search space set 1 and search space set 2 for the UE, may configure DCI format A scrambled by an X-RNTI to be monitored in a common search space in search space set 1, and may configure DCI format B scrambled by a Y-RNTI to be monitored in a UE-specific search space in search space set 2.

According to configuration information, one or multiple search space sets may exist in a common search space or a UE-specific search space. For example, search space set #1 and search space set #2 may be configured as a common search space, and search space set #3 and search space set #4 may be configured as a UE-specific search space.

Combinations of DCI formats and RNTIs given below may be monitored in a common search space. Obviously, the examples given below are not limiting.

DCI format 0_0/1_0 with CRC scrambled by C-RNTI, CS-RNTI, SP-CSI-RNTI, RA-RNTI, TC-RNTI, P-RNTI, SI-RNTI
DCI format 2_0 with CRC scrambled by SFI-RNTI
DCI format 2_1 with CRC scrambled by INT-RNTI
DCI format 2_2 with CRC scrambled by TPC-PUSCH-RNTI, TPC-PUCCH-RNTI
DCI format 2_3 with CRC scrambled by TPC-SRS-RNTI

Combinations of DCI formats and RNTIs given below may be monitored in a UE-specific search space. Obviously, the examples given below are not limiting.

DCI format 0_0/1_0 with CRC scrambled by C-RNTI, CS-RNTI, TC-RNTI
DCI format 1_0/1_1 with CRC scrambled by C-RNTI, CS-RNTI, TC-RNTI

Enumerated RNTIs may follow the definition and usage given below

Cell RNTI (C-RNTI): used to schedule a UE-specific PDSCH

Temporary cell RNTI (TC-RNTI): used to schedule a UE-specific PDSCH
Configured scheduling RNTI (CS-RNTI): used to schedule a semi-statically configured UE-specific PDSCH
Random access RNTI (RA-RNTI): used to schedule a PDSCH in a random access step
Paging RNTI (P-RNTI): used to schedule a PDSCH in which paging is transmitted
System information RNTI (SI-RNTI): used to schedule a PDSCH in which system information is transmitted
Interruption RNTI (INT-RNTI): used to indicate whether a PDSCH is punctured
Transmit power control for PUSCH RNTI (TPC-PUSCH-RNTI): used to indicate a power control command regarding a PUSCH
Transmit power control for PUCCH RNTI (TPC-PUCCH-RNTI): used to indicate a power control command regarding a PUCCH
Transmit power control for SRS RNTI (TPC-SRS-RNTI): used to indicate a power control command regarding an SRS

The DCI formats enumerated above may follow the definitions given in Table 10 below, for example.

[Table 10]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol (s) where UE may assume no transmission is intended for the UE |
| 2_2 | Transmission of TPC commands for PUCCH and PUSCH |
| 2_3 | Transmission of a group of TPC commands for SRS transmis sions by one or more UEs |

In 5G, the search space at aggregation level L in connection with control resource set p and search space set s may be expressed by Equation 1 below.

[Equation 1]

$$L \cdot \left\{ \left( Y_{p,n_{s,f}^{\mu}} + \left\lfloor \frac{m_{s,n_{CI}} \cdot N_{CCE,p}}{L \cdot M_{s,max}^{(L)}} \right\rfloor + n_{CI} \right) \bmod \left\lfloor \frac{N_{CCE,p}}{L} \right\rfloor \right\} + i$$

-    L: aggregation level

-    $n_{CI}$: carrier index

-    $N_{CCE,p}$: total number of CCEs existing in control resource set $p$

-    $n_{s,f}^{\mu}$ : slot index

-    $M_{s,max}^{(L)}$ : number of PDCCH candidates at aggregation level L

-    $m_{s,n_{CI}} = 0, \ldots, M_{s,max}^{(L)} -1$ : PDCCH candidate index at aggregation level

-    $i = 0, \ldots, L -1$

- $$Y_{p,n_{s,f}^{\mu}} = \left( A_p \cdot Y_{p,n_{s,f}^{\mu}-1} \right) \bmod D$$ , $Y_{p,-1} = n_{RNTI} \neq A_p = 39827$ *for pmod3* = 0 , $A_p = 39829$ *for pmod3* = 1 , $A_p = 39839$ *for pmod3* = 2, $D = 65537$

- $n_{RNTI}$: UE identity

The $Y_{p,n_{s,f}^{\mu}}$ value may correspond to 0 in the case of a common search space.

The $Y_{p,n_{s,f}^{\mu}}$ value may correspond to a value changed by the UE's identity (C-RNTI or ID configured for the UE by the base station) and the time index in the case of a UE-specific search space.

In 5G, multiple search space sets may be configured by different parameters (for example, parameters in Table 9), and the group of search space sets monitored by the UE at each time point may differ accordingly. For example, if search space set #1 is configured at X-slot periodicity, if search space set #2 is configured at Y-slot periodicity, and if X and Y are different, the UE may monitor search space set #1 and search space set #2 both in a specific slot, and may monitor one of search space set #1 and search space set #2 both in another specific slot.

[PDSCH/PUSCH: regarding frequency resource allocation]

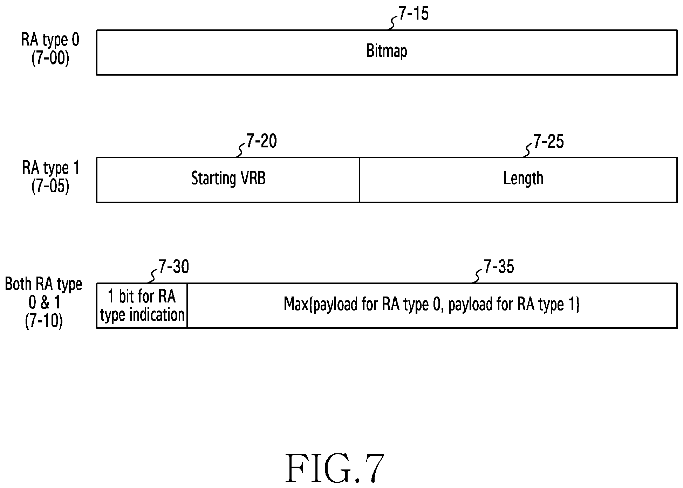

FIG. 7 illustrates an example of frequency domain resource allocation with regard to a physical downlink shared channel (PDSCH) or physical uplink shared channel (PUSCH) in a wireless communication system according to an embodiment of the disclosure.

FIG. 7 illustrates three frequency domain resource allocation methods of type-0 7-00, type-1 7-05, and dynamic switch 7-10 which can be configured through an upper layer in an NR wireless communication system.

Referring to FIG. 7, in case that a UE is configured to use only resource allocation type-0 through upper-layer signaling (7-00), partial downlink control information (DCI) for allocating a PDSCH/ to the UE includes a bitmap configured by $N_{RBG}$ bits. As used herein, $N_{RBG}$ refers to the number of resource block groups (RBGs) determined according to the size of the bandwidth part indicated by the bandwidth part indicator and higher layer parameter rbg-Size, as in Table 11 below, and data is transmitted in the RBG marked as 1 by the bitmap.

[Table 11]

| Bandwidth Part Size | Configuration 1 | Configuration 2 |
|---|---|---|
| 1-36 | 2 | 4 |
| 37-72 | 4 | 8 |
| 73-144 | 8 | 16 |
| 145-275 | 16 | 16 |

The BWP size refers to the number of RBs included in a BWP. More specifically, in case that FDRA Type-0 resource allocation is indicated to a UE, the length of the FDRA field of the DCI received by the UE is equal to the number of RBGs ($N_{RBG}$) within the bandwidth part, and $N_{RBG} = \left\lceil (N_{BWP}^{size} + (N_{BWP}^{start} \bmod P))/ P \right\rceil$ . The first RBG in the bandwidth part includes as many RBs as $\mathrm{RBG}_0^{size} = P - \mathrm{N}_{BWP}^{size} \bmod P$ , and the last RBG in the bandwidth part includes as many RBs as $\mathrm{RBG}_{last}^{size} = \left( \mathrm{N}_{BWP}^{start} + \mathrm{N}_{BWP}^{size} \right) \bmod P$ if $\left( \mathrm{N}_{BWP}^{start} + \mathrm{N}_{BWP}^{size} \right) \bmod P > 0$ , and includes as many RBs as $\mathrm{RBG}_{last}^{size} = P$ otherwise. The other RBGs each include P RBs. Here, P refers to the number of nominal RBGs as determined according to Table 11.

Resource allocation type 2

The base station may notify the UE of RB allocation information as M interlace index sets.

The interlace index $m \in \{0, 1, ..., M - 1\}$ may be configured by common RBs $\{m, M + m, 2M + m, 3M + m, ...\}$, and $M$ may be defined as in Table 12.

[Table 12]

| $\mu$ | $M$ |
|---|---|
| 0 | 10 |
| 1 | 5 |

The relationship of RB $n_{\mathrm{IRB},m}^{\mu} \in \{0,1,\dots\}$ in interlace $m$ and bandwidth part i and the common RB $n_{\mathrm{CRB}}^{\mu}$ may be defined as follows.

$$n_{\mathrm{CRB}}^{\mu} = M n_{\mathrm{IRB},m}^{\mu} + N_{\mathrm{BWP},i}^{\mathrm{start},\mu} + \left(\left(m - N_{\mathrm{BWP},i}^{\mathrm{start},\mu}\right) \bmod M\right)$$

where $N_{\mathrm{BWP},i}^{\mathrm{start},\mu}$ is the common resource block where bandwidth part starts relative to common resource block 0. u is subcarrier spacing index

If the subcarrier spacing is 15kHz ($\mu$=0), the base station may notify the UE of the RB allocation information for the interlace sets with (m0 + 1) indexes. In addition, the resource assignment field may be configured by a resource indication value (RIV). If the RIV is $0 \leq RIV < M(M+1)/2$, $l = 0,1, \cdots L$ - 1, the same may be configured by the starting interlace $m_0$ and the number $L(L \geq 1)$ of continuous interlaces, and the value is as follows.

$$\text{if } (L-1) \leq \lfloor M/2 \rfloor \text{ then}$$
$$RIV = M(L-1) + m_0$$
$$\text{else}$$
$$RIV = M(M-L+1) + (M-1-m_0)$$

If the RIV is $RIV \geq M(M+1)/2$, the RIV is configured by the starting interlace index $m_0$ and $l$ values, and may be configured as in Table 13.

[Table 13]

| $RIV$ - $M(M+1)/2$ | m0 | $l$ |
|---|---|---|
| 0 | 0 | {0, 5} |
| 1 | 0 | {0, 1, 5, 6} |
| 2 | 1 | {0, 5} |
| 3 | 1 | {0, 1, 2, 3, 5, 6, 7, 8} |
| 4 | 2 | {0, 5} |
| 5 | 2 | {0, 1, 2, 5, 6, 7} |
| 6 | 3 | {0, 5} |
| 7 | 4 | {0, 5} |

If the subcarrier spacing is 30kHz ($\mu$=1), the base station may notify the UE of the RB allocation information in the form of a bitmap indicating the interlaces allocated to the UE. The size of the bitmap is M, and each 1 bit of the bitmap corresponds to an interlace. The interlace bitmap order may be such that interlace indices 0 to M-1 are mapped from MSB to LSB of the bitmap.

In addition, with regard to 15kHz and 30kHz, the least significant bit (LSB) $Y = \left\lceil log2 \frac{N_{RB-set}^{BWP}(N_{RB-set}^{BWP}+1)}{2} \right\rceil$ of the FDRA field may refer to consecutive RB sets scheduled by DCI format 0_1. The Y bit may be configured by a resource indication value ($RIV_{\mathrm{RBset}}$). In $0 \leq RIV_{RBset} < N_{RB-set}^{BWP}(N_{RB-set}^{BWP}+1)/2$, $l = 0,1, \cdots L_{RBset}$ - RBset value may be determined by the starting RB set ($RBset_{\mathrm{START}}$) and the number ($L_{RBset}(L_{RBset} \geq 1)$) of consecutive RB sets.

The RIV$_{RBset}$ value may be defined as follows.

$$\text{if } (L_{RBset} - 1) \leq \lfloor N^{BWP}_{RB-set}/2 \rfloor \text{ then}$$
$$RIV_{RBset} = N^{BWP}_{RB-set}(L_{RBset} - 1) + RBset_{\text{START}}$$
$$\text{else}$$
$$RIV_{RBset} = N^{BWP}_{RB-set}(N^{BWP}_{RB-set} - L_{RBset} + 1) + (N^{BWP}_{RB-set} - 1 - RBset_{\text{START}})$$

$N^{BWP}_{RB-set}$ refers to the number of RB sets included in the bandwidth part, and may be determined by the number of guard gaps (or bands) within the carrier configured by higher-layer signaling (or preconfigured).

In case that the UE is configured to use only resource allocation type 1 through upper-layer signaling (7-05), the DCI for allocating a PDSCH/PUSCH to the UE includes frequency domain resource allocation information (FDRA) configured by as many bits as $\lceil \log_2(N^{BWP}_{RB} * (N^{BWP}_{RB} + 1)/2 \rceil$. Here, $N^{BWP}_{RB}$ denotes the nuber of RBs included in the BWP. The base station may thereby configure a starting VRB 7-20 and the length 7-25 of a frequency domain resource allocated continuously therefrom.

In the case in which the UE is configured to use both resource allocation type-0 and resource allocation type-1 through higher layer signaling (7-10), partial DCI for allocating a PDSCH to the corresponding UE includes frequency domain resource allocation information including as many bits as the larger value 7-35 among the payload 7-15 for configuring resource allocation type-0 and the payload 7-20 and 7-25 for configuring resource allocation type 1. The conditions for this will be described again later. One bit may be added to the foremost part (MSB) of the frequency domain resource allocation information inside the DCI, and if the bit has the value of "0", use of resource allocation type- 0 may be indicated, and if the bit has the value of "1", use of resource allocation type-1 may be indicated.

[PDSCH/PUSCH: regarding time resource allocation]

Hereinafter, a time domain resource allocation method regarding a data channel in a next-generation mobile communication system (5G or NR system) will be described.

A base station may configure a table for time domain resource allocation information regarding a physical downlink shared channel (PDSCH) and a physical uplink shared channel (PUSCH) for a UE through upper layer signaling (for example, RRC signaling). A table including a maximum of maxNrofDL-Allocations=16 entries may be configured for the PDSCH, and a table including a maximum of maxNrofUL-Allocations=16 entries may be configured for the PUSCH. In an embodiment, the time domain resource allocation information may include PDCCH-to-PDSCH slot timing (for example, corresponding to a slot-unit time interval between a time point at which a PDCCH is received and a time point at which a PDSCH scheduled by the received PDCCH is transmitted; labeled K0), PDCCH-to-PUSCH slot timing (for example, corresponding to a slot-unit time interval between a time point at which a PDCCH is received and a time point at which a PUSCH scheduled by the received PDCCH is transmitted; hereinafter, labeled K2), information regarding the location and length of the start symbol by which a PDSCH or PUSCH is scheduled inside a slot, the mapping type of a PDSCH or PUSCH, and the like. For example, information such as in Table 14 or Table 15 below may be transmitted from the base station to the UE.

[Table 14]

| *PDSCH-TimeDomainResourceAllocationList information element* |
|---|
| PDSCH-TimeDomainResourceAllocationList ::=    SEQUENCE (SIZE(1..maxNrofDL-Allocations)) OF PDSCH-TimeDomainResourceAllocation |

```
PDSCH-TimeDomainResourceAllocation ::=        SEQUENCE {

    k0          INTEGER(0..32)                          OPTIONAL,     --
Need S

    (PDCCH-to-PDSCH timing, slot unit)

mappingType                              ENUMERATED {typeA, typeB},

    (PDSCH mapping type)

startSymbolAndLength                     INTEGER (0..127)

(start symbol and length of PDSCH)

    }
```

[Table 15]

| ***PUSCH-TimeDomainResourceAllocation information element*** |
|---|
| PUSCH-TimeDomainResourceAllocationList ::=        SEQUENCE (SIZE(1..maxNrofUL-Allocations)) OF PUSCH-TimeDomainResourceAllocation |
| PUSCH-TimeDomainResourceAllocation ::=        SEQUENCE { |
|     k2                              INTEGER(0..32)                    OPTIONAL,     -- Need S |
|     (PDCCH-to-PUSCH timing, slot unit) |
|     mappingType                              ENUMERATED {typeA, typeB}, |
|     (PUSCH mapping type) |
|     startSymbolAndLength                     INTEGER (0..127) |
|     (start symbol and length of PUSCH) |
| } |

The base station may notify the UF of one of the entries of the table regarding time domain resource allocation information described above through L1 signaling (for example, DCI)(for example, "time domain resource allocation" field in DCI may indicate the same). The UE may acquire time domain resource allocation information regarding a PDSCH or PUSCH, based on the DCI acquired from the base station.

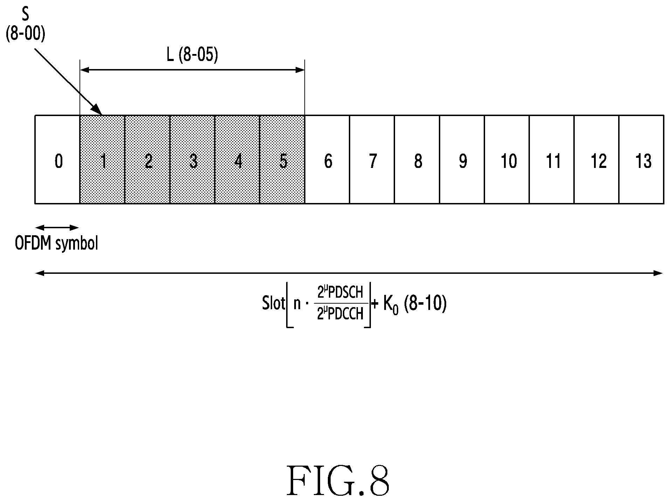

FIG. 8 illustrates an example of time domain resource allocation with regard to a PDSCH in a wireless communication system according to an embodiment of the disclosure.

Referring to FIG. 8, the base station may indicate the time domain location of a PDSCH resource according to the subcarrier spacing (SCS) ($\mu_{PDSCH}$, $\mu_{PPDCCH}$) of a data channel and a control channel configured by using a higher layer, the scheduling offset (K0) value, and the OFDM symbol start location 8-00 and length 8-05 within one slot dynamically indicated through DCI.

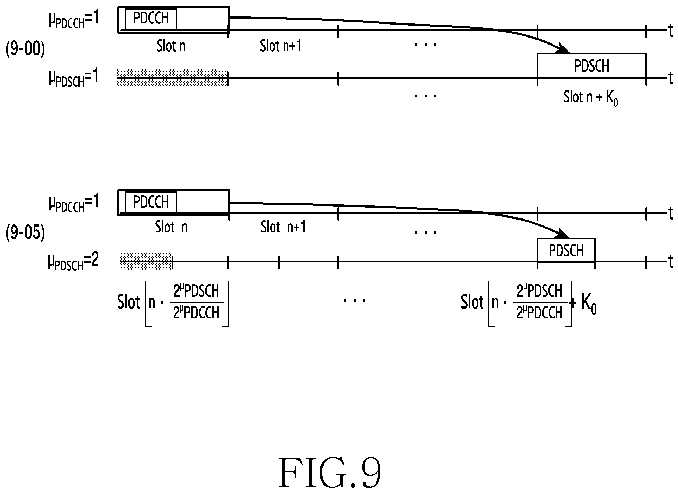

FIG. 9 illustrates an example of time domain resource allocation according to subcarrier spacings with regard to a data channel and a control channel in a wireless communication system according to an embodiment of the disclosure.

Referring to FIG. 9, if the data channel and the control channel have the same subcarrier spacing 9-00 ($\mu_{PDSCH}$ = $\mu_{PDCCH}$), the slot number for data and that for control are identical, and the base station and the UE may accordingly generate a scheduling offset in conformity with a predetermined slot offset K0. Contrarily, if the data channel and the control channel have different subcarrier spacings 9-05 ($\mu_{PDSCH}$ ≠ $\mu_{PDCCH}$), the slot number for data and that for control are different, and the base station and the UE may accordingly generate a scheduling offset in conformity with a predetermined slot offset K0 with reference to the subcarrier spacing of the PDCCH.

[PUSCH: regarding transmission scheme]

Next, a PUSCH transmission scheduling scheme will be described. PUSCH transmission may be dynamically scheduled by a UL grant inside DCI, or operated by means of configured grant Type 1 or Type 2. Dynamic scheduling indication regarding PUSCH transmission may be made by DCI format 0_0 or 0_1.

Configured grant Type 1 PUSCH transmission may be configured semi-statically by receiving configuredGrant-Config including rrc-ConfiguredUplinkGrant in Table 16 through upper signaling, without receiving a UL grant inside DCI. Configured grant Type 2 PUSCH transmission may be scheduled semi-persistently by a UL grant inside DCI after receiving configuredGrantConfig not including rrc-ConfiguredUplinkGrant in Table 16 through upper signaling. If PUSCH transmission is operated by a configured grant, parameters applied to the PUSCH transmission are applied through configuredGrantConfig (upper signaling) in Table 16 except for dataScramblingIdentityPUSCH, txConfig, codebookSubset, maxRank, and scaling of UCI-OnPUSCH, which are provided by pusch-Config (upper signaling) in Table 17. If provided with transformPrecoder inside configuredGrantConfig (upper signaling) in Table 16, the UE applies tp-pi2BPSK inside pusch-Config in Table 17 to PUSCH transmission operated by a configured grant.

[Table 16]

| ConfiguredGrantConfig ::=    SEQUENCE { |
|---|

```
      frequencyHopping                      ENUMERATED  {intraSlot, interSlot}
OPTIONAL,      -- Need S,
      cg-DMRS-Configuration                 DMRS-UplinkConfig,
      mcs-Table                              ENUMERATED  {qam256, qam64LowSE}
OPTIONAL,      -- Need S
      mcs-TableTransformPrecoder             ENUMERATED  {qam256, qam64LowSE}
OPTIONAL,      -- Need S
      uci-OnPUSCH                            SetupRelease { CG-UCI-OnPUSCH }
OPTIONAL,      -- Need M
      resourceAllocation                     ENUMERATED { resourceAllocationType0,
resourceAllocationType1, dynamicSwitch },
      rbg-Size                                ENUMERATED  {config2}
OPTIONAL,      -- Need S
      powerControlLoopToUse                 ENUMERATED {n0, n1},
      p0-PUSCH-Alpha                        P0-PUSCH-AlphaSetId,
      transformPrecoder                      ENUMERATED  {enabled, disabled}
OPTIONAL,      -- Need S
      nrofHARQ-Processes                    INTEGER(1..16),
      repK                                  ENUMERATED {n1, n2, n4, n8},
      repK-RV                                ENUMERATED {s1-0231, s2-0303, s3-
0000}                                        OPTIONAL,      -- Need R
      periodicity                           ENUMERATED {
                                                 sym2, sym7, sym1x14, sym2x14,
sym4x14, sym5x14, sym8x14, sym10x14, sym16x14, sym20x14,
                                                 sym32x14, sym40x14, sym64x14,
sym80x14, sym128x14, sym160x14, sym256x14, sym320x14, sym512x14,
                                                 sym640x14,         sym1024x14,
sym1280x14, sym2560x14, sym5120x14,
                                                 sym6,      sym1x12,    sym2x12,
sym4x12, sym5x12, sym8x12, sym10x12, sym16x12, sym20x12, sym32x12,
                                                 sym40x12, sym64x12, sym80x12,
sym128x12, sym160x12, sym256x12, sym320x12, sym512x12, sym640x12,
                                                 sym1280x12, sym2560x12
      },
```

**EP 4 779 919 A1**

```
        configuredGrantTimer                                INTEGER  (1..64)
OPTIONAL,      -- Need R
        rrc-ConfiguredUplinkGrant              SEQUENCE {
            timeDomainOffset                        INTEGER (0..5119),
            timeDomainAllocation                    INTEGER   (0..15),
            frequencyDomainAllocation               BIT STRING (SIZE(18)),
            antennaPort                             INTEGER (0..31),
            dmrs-SeqInitialization                          INTEGER   (0..1)
OPTIONAL,      -- Need R
            precodingAndNumberOfLayers              INTEGER (0..63),
            srs-ResourceIndicator                           INTEGER   (0..15)
OPTIONAL,      -- Need R
            mcsAndTBS                               INTEGER (0..31),
            frequencyHoppingOffset                            INTEGER   (1..
maxNrofPhysicalResourceBlocks-1)              OPTIONAL,      -- Need R
            pathlossReferenceIndex              INTEGER  (0..maxNrofPUSCH-
PathlossReferenceRSs-1),

            ...
        }
OPTIONAL,      -- Need R
        ...
}
```

Next, a PUSCH transmission method will be described. The DMRS antenna port for PUSCH transmission is identical to an antenna port for SRS transmission. PUSCH transmission may follow a codebook-based transmission method and a non-codebook-based transmission method according to whether the value of txConfig inside pusch-Config in Table 15, which is upper signaling, is "codebook" or "nonCodebook".

As described above, PUSCH transmission may be dynamically scheduled through DCI format 0_0 or 0_1, and may be semi-statically configured by a configured grant. Upon receiving indication of scheduling regarding PUSCH transmission through DCI format 0_0, the UE performs beam configuration for PUSCH transmission by using pucch-spatialRelationInfoID corresponding to a UE-specific PUCCH resource corresponding to the minimum ID inside an activated uplink BWP inside a serving cell, and the PUSCH transmission is based on a single antenna port. The UE does not expect scheduling regarding PUSCH transmission through DCI format 0_0 inside a BWP having no configured PUCCH resource including pucch-spatialRelationInfo. If the UE has no configured txConfig inside pusch-Config in Table 19, the UE does not expect scheduling through DCI format 0_1.

24

[Table 17]

```
PUSCH-Config ::=                          SEQUENCE {
       dataScramblingIdentityPUSCH                         INTEGER   (0..1023)
OPTIONAL,    -- Need S
       txConfig                                 ENUMERATED  {codebook,
nonCodebook}                                    OPTIONAL,    -- Need S
       dmrs-UplinkForPUSCH-MappingTypeA         SetupRelease { DMRS-UplinkConfig }
OPTIONAL,    -- Need M
       dmrs-UplinkForPUSCH-MappingTypeB         SetupRelease { DMRS-UplinkConfig }
OPTIONAL,    -- Need M


       pusch-PowerControl                                  PUSCH-PowerControl
OPTIONAL,    -- Need M
       frequencyHopping                         ENUMERATED {intraSlot, interSlot}
OPTIONAL,    -- Need S
       frequencyHoppingOffsetLists         SEQUENCE (SIZE (1..4)) OF INTEGER (1..
maxNrofPhysicalResourceBlocks-1)


OPTIONAL,    -- Need M
       resourceAllocation                                  ENUMERATED
{ resourceAllocationType0, resourceAllocationType1, dynamicSwitch},
       pusch-TimeDomainAllocationList                SetupRelease { PUSCH-
TimeDomainResourceAllocationList }       OPTIONAL,    -- Need M
       pusch-AggregationFactor                  ENUMERATED { n2, n4, n8 }
OPTIONAL,    -- Need S
       mcs-Table                                ENUMERATED {qam256,
qam64LowSE}                                     OPTIONAL,    -- Need S
       mcs-TableTransformPrecoder          ENUMERATED {qam256, qam64LowSE}
OPTIONAL,    -- Need S
```

```
    transformPrecoder                                    ENUMERATED  {enabled,  disabled}
OPTIONAL,      -- Need S
    codebookSubset                                                          ENUMERATED
{fullyAndPartialAndNonCoherent, partialAndNonCoherent,nonCoherent}


OPTIONAL, -- Cond codebookBased
    maxRank                                                             INTEGER  (1..4)
OPTIONAL, -- Cond codebookBased
    rbg-Size                                                    ENUMERATED  { config2}
OPTIONAL, -- Need S
    uci-OnPUSCH                                       SetupRelease { UCI-OnPUSCH}
OPTIONAL, -- Need M
    tp-pi2BPSK                                                 ENUMERATED  {enabled}
OPTIONAL, -- Need S

    ...

}
```

Hereinafter, codebook-based PUSCH transmission will be described. The codebook-based PUSCH transmission may be dynamically scheduled through DCI format 0_0 or 0_1, and may be semi-statically operated by a configured grant. If a codebook-based PUSCH is dynamically scheduled through DCI format 0_1 or configured semi-statically by a configured grant, the UE determines a precoder for PUSCH transmission, based on an SRS resource indicator (SRI), a transmission precoding matrix indicator (TPMI), and a transmission rank (the number of PUSCH transmission layers).

The SRI may be given through the SRS resource indicator (a field inside DCI) or configured through srs-ResourceIndicator (upper signaling). During codebook-based PUSCH transmission, the UE has at least one SRS resource configured therefor, and may have a maximum of two SRS resources configured therefor. If the UE is provided with the SRI through DCI, the SRS resource indicated by the corresponding SRI refers to the SRS resource corresponding to the SRI, among SRS resources transmitted prior to the PDCCH including the corresponding SRI. In addition, the TPMI and the transmission rank may be given through "precoding information and number of layers" (a field inside DCI) or configured through precodingAndNumberOfLayers (upper signaling). The TPMI is used to indicate a precoder to be applied to PUSCH transmission. If one SRS resource is configured for the UE, the TPMI may be used to indicate a precoder to be applied in the configured one SRS resource. If multiple SRS resources are configured for the UE, the TPMI is used to indicate a precoder to be applied in an SRS resource indicated through the SRI.

The precoder to be used for PUSCH transmission is selected from an uplink codebook having the same number of antenna ports as the value of nrofSRS-Ports inside SRS-Config (upper signaling). In connection with codebook-based PUSCH transmission, the UE determines a codebook subset, based on codebookSubset inside pusch-Config (upper signaling) and TPMI. The codebookSubset inside pusch-Config (upper signaling) may be configured to be one of "fullyAndPartialAndNonCoherent", "partialAndNonCoherent", or "nonCoherent", based on UE capability reported by the UE to the base station. If the UE reported "partialAndNonCoherent'" as UE capability, the UE does not expect that the value of codebookSubset (upper signaling) will be configured as "fullyAndPartialAndNonCoherent". In addition, if the UE reported "nonCoherent" as UE capability, UE does not expect that the value of codebookSubset (upper signaling) will be configured as "fullyAndPartialAndNonCoherent" or "partialAndNonCoherent". If nrofSRS-Ports inside SRS-ResourceSet (upper signaling) indicates two SRS antenna ports, the UE does not expect that the value of codebookSubset (upper signaling) will be configured as "partialAndNonCoherent".

The UE may have one SRS resource set configured therefor, wherein the value of usage inside SRS-ResourceSet (upper signaling) is "codebook", and one SRS resource may be indicated through an SRI inside the corresponding SRS resource set. If multiple SRS resources are configured inside the SRS resource set wherein the value of usage inside SRS-ResourceSet (upper signaling) is "codebook", the UE expects that the value of nrofSRS-Ports inside SRS-Resource (upper signaling) is identical for all SRS resources.

The UE transmits, to the base station, one or multiple SRS resources included in the SRS resource set wherein the value of usage is configured as "codebook" according to upper signaling, and the base station selects one from the SRS resources transmitted by the UE and indicates the UE to be able to transmit a PUSCH by using transmission beam information of the corresponding SRS resource. In connection with the codebook-based PUSCH transmission, the SRI is used as information for selecting the index of one SRS resource, and is included in DCI. Additionally, the base station adds information indicating the rank and TPMI to be used by the UE for PUSCH transmission to the DCI. Using the SRS resource indicated by the SRI, the UE applies, in performing PUSCH transmission, the precoder indicated by the rank and TPMI indicated based on the transmission beam of the corresponding SRS resource, thereby performing PUSCH transmission.

Next, non-codebook-based PUSCH transmission will be described. The non-codebook-based PUSCH transmission may be dynamically scheduled through DCI format 0_0 or 0_1, and may be semi-statically operated by a configured grant. If at least one SRS resource is configured inside an SRS resource set wherein the value of usage inside SRS-ResourceSet (upper signaling) is "nonCodebook", non-codebook-based PUSCH transmission may be scheduled for the UE through DCI format 0_1.

With regard to the SRS resource set wherein the value of usage inside SRS-ResourceSet (upper signaling) is "nonCodebook", one connected NZP CSI-RS resource (non-zero power CSI-RS) may be configured for the UE. The UE may calculate a precoder for SRS transmission by measuring the NZP CSI-RS resource connected to the SRS resource set. If the difference between the last received symbol of an aperiodic NZP CSI-RS resource connected to the SRS resource set and the first symbol of aperiodic SRS transmission in the UE is less than 42 symbols, the UE does not expect that information regarding the precoder for SRS transmission will be updated.

If the configured value of resourceType inside SRS-ResourceSet (upper signaling) is "aperiodic", the connected NZP CSI-RS may be indicated by an SRS request which is a field inside DCI format 0_1 or 1_1. If the connected NZP CSI-RS resource is an aperiodic NZP CSI-RS resource, the existence of the connected NZP CSI-RS may be indicated with regard to the case in which the value of SRS request (a field inside DCI format 0_1 or 1_1) is not "00". The corresponding DCI should not indicate cross carrier or cross BWP scheduling. In addition, if the value of SRS request indicates the existence of a NZP CSI-RS, the NZP CSI-RS is located in the slot used to transmit the PDCCH including the SRS request field. In this case, TCI states configured for the scheduled subcarrier are not configured as QCL-TypeD.

If there is a periodic or semi-persistent SRS resource set configured, the connected NZP CSI-RS may be indicated through associatedCSI-RS inside SRS-ResourceSet (upper signaling). With regard to non-codebook-based transmission, the UE does not expect that spatialRelationInfo which is upper signaling regarding the SRS resource and associatedCSI-RS inside SRS-ResourceSet (upper signaling) will be configured together.

If multiple SRS resources are configured for the UE, the UE may determine a precoder to be applied to PUSCH transmission and the transmission rank, based on an SRI indicated by the base station. The SRI may be indicated through the SRS resource indicator (a field inside DCI) or configured through srs-ResourceIndicator (upper signaling). Similarly to the above-described codebook-based PUSCH transmission, if the UE is provided with the SRI through DCI, the SRS resource indicated by the corresponding SRI refers to the SRS resource corresponding to the SRI, among SRS resources transmitted prior to the PDCCH including the corresponding SRI. The UE may use one or multiple SRS resources for SRS transmission, and the maximum number of SRS resources that can be transmitted simultaneously in the same symbol inside one SRS resource set and the maximum number of SRS resources are determined by UE capability reported to the base station by the UE. SRS resources simultaneously transmitted by the UE occupy the same RB. The UE configures one SRS port for each SRS resource. There may be only one configured SRS resource set wherein the value of usage inside SRS-ResourceSet (upper signaling) is "nonCodebook", and a maximum of four SRS resources may be configured for non-codebook-based PUSCH transmission.

The base station transmits one NZP-CSI-RS connected to the SRS resource set to the UE, and the UE calculates the precoder to be used when transmitting one or multiple SRS resources inside the corresponding SRS resource set, based on the result of measurement when the corresponding NZP-CSI-RS is received. The UE applies the calculated precoder when transmitting, to the base station, one or multiple SRS resources inside the SRS resource set wherein the configured usage is"nonCodebook", and the base station selects one or multiple SRS resources from the received one or multiple SRS resources. In connection with the non-codebook-based PUSCH transmission, the SRI indicates an index that may express one SRS resource or a combination of multiple SRS resources, and the SRI is included in DCI. The number of SRS resources indicated by the SRI transmitted by the base station may be the number of transmission layers of the PUSCH, and the UE transmits the PUSCH by applying the precoder applied to SRS resource transmission to each layer.

[Regarding CA/DC]

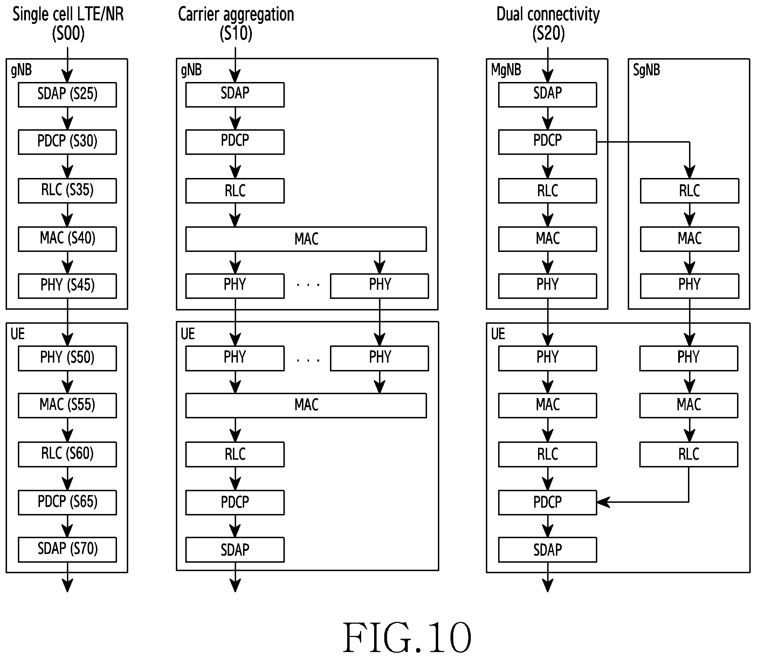

FIG. 10 illustrates radio protocol structures of a base station and a UE in single cell, carrier aggregation, and dual connectivity situations according to an embodiment of the disclosure.

Referring to FIG. 10, the radio protocol of a next-generation mobile communication system includes an NR service data adaptation protocol (SDAP) S25 or S70, an NR packet data convergence protocol (PDCP) S30 or S65, an NR radio link control (RLC) S35 or S60, and an NR medium access controls (MAC) S40 or S55, on each of UE and NR base station sides.

The main functions of the NR SDAP S25 or S70 may include some of functions below.

- Transfer of user plane data
- Mapping between a QoS flow and a DRB for both DL and UL
- Marking QoS flow ID in both DL and UL packets
- Reflective QoS flow to DRB mapping for the UL SDAP PDUs

With regard to the SDAP layer device, the UE may be configured, through an RRC message, whether to use the header of the SDAP layer device or whether to use functions of the SDAP layer device for each PDCP layer device or each bearer or each logical channel, and if an SDAP header is configured, the non-access stratum (NAS) QoS reflection configuration 1-bit indicator (NAS reflective QoS) and the AS QoS reflection configuration 1-bit indicator (AS reflective QoS) of the SDAP header may be indicated so that the UE can update or reconfigure mapping information regarding the QoS flow and data bearer of the uplink and downlink. The SDAP header may include QoS flow ID information indicating the QoS. The QoS information may be used as data processing priority, scheduling information, etc. for smoothly supporting services.

The main functions of the NR PDCP S30 or S65 may include some of functions below.

- Header compression and decompression: ROHC only
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink

In the above-mentioned functions, the reordering of the NR PDCP device refers to a function of reordering PDCP PDUs received from a lower layer in an order based on the PDCP sequence number (SN), and may include a function of transferring data to an upper layer in the reordered sequence. Alternatively, the reordering of the NR PDCP device may include a function of instantly transferring data without considering the order, may include a function of recording PDCP PDUs lost as a result of reordering, may include a function of reporting the state of the lost PDCP PDUs to the transmitting side, and may include a function of requesting retransmission of the lost PDCP PDUs.

The main functions of the NR RLC S35 or S60 may include some of functions below.

- Transfer of upper layer PDUs
- In-sequence delivery of upper layer PDUs
- Out-of-sequence delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

In the above-mentioned functions, the in-sequence delivery of the NR RLC device refers to a function of delivering RLC SDUs, received from the lower layer, to the upper layer in sequence. The in-sequence delivery of the NR RLC device may include a function of reassembling and delivering multiple RLC SDUs received, into which one original RLC SDU has been segmented, may include a function of reordering the received RLC PDUs with reference to the RLC sequence number (SN) or PDCP sequence number (SN), may include a function of recording RLC PDUs lost as a result of reordering, may include a function of reporting the state of the lost RLC PDUs to the transmitting side, and may include a function of requesting retransmission of the lost RLC PDUs. The in-sequence delivery of the NR RLC device may include a function of, if there is a lost RLC SDU, successively delivering only RLC SDUs before the lost RLC SDU to the upper layer, and may include a function of, if a predetermined timer has expired although there is a lost RLC SDU, successively delivering all RLC SDUs received before the timer was started to the upper layer. Alternatively, the in-sequence delivery of the NR RLC device may include a function of, if a predetermined timer has expired although there is a lost RLC SDU, successively delivering all RLC SDUs received until now to the upper layer. In addition, the in-sequence delivery of the NR RLC device may include a function of processing RLC PDUs in the received order (regardless of the sequence number order, in the order of arrival) and delivering same to the PDCP device regardless of the order (out-of-sequence delivery), and may include a function of, in the case of segments, receiving segments which are stored in a buffer or which are to be received later, reconfiguring same into one complete RLC PDU, processing, and delivering same to the PDCP device. The NR RLC layer may include no concatenation function, which may be performed in the NR MAC layer or replaced with a multiplexing function of the NR MAC layer.

In the above-mentioned functions, the out-of-sequence delivery of the NR RLC device refers to a function of instantly delivering RLC SDUs received from the lower layer to the upper layer regardless of the order, may include a function of, if multiple RLC SDUs received, into which one original RLC SDU has been segmented, are received, reassembling and delivering the same, and may include a function of storing the RLC SN or PDCP SN of received RLC PDUs, and recording RLC PDUs lost as a result of reordering.

The NR MAC S40 or S55 may be connected to multiple NR RLC layer devices configured in one UE, and the main functions of the NR MAC may include some of functions below.

- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

An NR PHY layer S45 or S50 may perform operations of channel-coding and modulating upper layer data, thereby obtaining OFDM symbols, and delivering the same through a radio channel, or demodulating OFDM symbols received through the radio channel, channel-decoding the same, and delivering the same to the upper layer.

The detailed structure of the radio protocol structure may be variously changed according to the carrier (or cell) operating scheme. For example, in case that the base station transmits data to the UE, based on a single carrier (or cell), the base station and the UE may use a protocol structure having a single structure with regard to each layer, such as S00. On the other hand, in case that the base station transmits data to the UE, based on carrier aggregation(CA) which uses multiple carriers in a single TRP, the base station and the UE may use a protocol structure which has a single structure up to the RLC, but multiplexes the PHY layer through a MAC layer, such as S10. As another example, in case that the base station transmits data to the UE, based on dual connectivity (DC) which uses multiple carriers in multiple TRPs, the base station and the UE may use a protocol structure which has a single structure up to the RLC, but multiplexes the PHY layer through a MAC layer, such as S20.

Referring to the above description relating to the PDCCH and beam configuration,PDCCH repetitive transmission is not supported in current Rel-15 and Rel-16 NR,and it may be thus difficult to achieve required reliability in a scenario requiring high reliability, such as URLLC. The disclosure may provide a PDCCH repetition transmission method through multiple transmission/reception points (TRPs). According to the disclosure, the PDCCH reception reliability of a UE may be improved. Specific methods thereof will be described hereinafter through the embodiments below.

Hereinafter, embodiments of the disclosure will be described in detail in conjunction with the accompanying drawings. An embodiment of the disclosure may be applied to systems such as frequency division duplex (FDD), time division duplex (TDD), and cross division duplex (XDD), but is not limited thereto. As used herein, upper signaling (or upper layer signaling) may refer to a method for transferring signals from a base station to a UE by using a downlink data channel of a physical layer, or from the UE to the base station by using an uplink data channel of the physical layer, or the signals thereof. For example, the upper signaling (or upper layer signaling) may also be referred to as "RRC signaling", "PDCP signaling", or "medium access control (MAC) control element (MAC CE)", but is not limited thereto.

Hereinafter, in the disclosure, the UE may use various methods to determine whether or not to apply cooperative communication, for example, PDCCH(s) that allocates a PDSCH to which cooperative communication is applied have a specific format, or PDCCH(s) that allocates a PDSCH to which cooperative communication is applied include a specific indicator indicating whether or not to apply cooperative communication, or PDCCH(s) that allocates a PDSCH to which cooperative communication is applied are scrambled by a specific RNTI, or cooperative communication application is assumed in a specific range indicated by an upper layer. In the following description, for the sake of descriptive convenience, non-coherent joint transmission (NC-JT) case may refer to a case in which the UE receives a PDSCH to which cooperative communication is applied, based on conditions similar to those described above. That is, the NC-JT case in the disclosure may include reception of a PDSCH to which cooperative communication is applied, and whether the cooperative communication is applied may be identified according to at least one of the above-described conditions/-methods or at least one combination thereof.

Hereinafter, determining priority between A and B may be variously described as, for example, selecting an entity having a higher priority according to a predetermined priority rule and performing an operation corresponding thereto, or omitting or dropping operations regarding an entity having a lower priority.

Hereinafter, the above examples may be described through several embodiments, but they are not independent of each other, and one or more embodiments may be applied simultaneously or in combination.

Hereinafter, embodiments of the disclosure will be described in detail in conjunction with the accompanying drawings. In the following description, a base station is an entity that allocates resources to terminals, and may be at least one of a gNode B, a gNB, an eNode B, an eNB, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. In the following description of embodiments of the disclosure, a 5G system will be described by way of example, but the embodiments of the disclosure may also be applied to other communication systems having similar technical backgrounds or channel types. Examples of such communication systems may include LTE or LTE-A mobile communication systems and mobile communication technologies developed beyond 5G. Therefore, based on determinations by those skilled in the art, the embodiments of the disclosure may also be applied to other communication systems through some modifications without significantly departing from the scope of the disclosure. An embodiment of the disclosure may be applied to FDD, TDD, or XDD systems, but is not limited thereto.

Furthermore, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description of the disclosure, upper layer signaling may refer to signaling corresponding to at least one signaling among the following signaling, or a combination of one or more thereof.

Master information block (MIB)
System information block (SIB) or SIB X (X=1, 2, ...)
Radio resource control (RRC)
Medium access control (MAC) control element (CE)

In addition, L1 signaling may refer to signaling corresponding to at least one signaling method among signaling methods using the following physical layer channels or signaling, or a combination of one or more thereof.

Physical downlink control channel (PDCCH)
Downlink control information (DCI)
UE-specific DCI
Group common DCI
Common DCI
Scheduling DCI (for example, DCI used for the purpose of scheduling downlink or uplink data)
Non-scheduling DCI (for example, DCI not used for the purpose of scheduling downlink or uplink data)
Physical uplink control channel (PUCCH)
Uplink control information (UCI)

[Regarding MC-DCI]

In the disclosure, one piece of DCI may be single-DCI or one piece of DCI format, and multiple pieces of DCI may be multi-DCI or multiple DCI formats. In the disclosure, one piece of DCI may be a single PDCCH and/or may be transmitted or received through a single PDCCH, and multiple pieces of DCI may be multiple PDCCHs and/or may be transmitted or received through multiple PDCCHs.

Generally, a UE receives one piece of DCI, and the one piece of DCI may include scheduling information for one cell. For example, in the case of DCI format 0_0/0_1/0_2, one PUSCH may be scheduled for one uplink cell. In addition, in the case of DCI format 1_0/1_1/1_2, one PDSCH may be scheduled for one downlink cell. The scheduled cell may be indicated by the DCI format's carrier indication field (CIF).

However, this approach requires multiple pieces of DCI to be transmitted and received when a PDSCH or PUSCH is scheduled in each of multiple cells. As a result, a large amount of DCI overhead may occur. In order to reduce the DCI overhead, one piece of DCI may schedule PDSCHs and PUSCHs in each of multiple cells. For the sake of convenience, this may be referred to as multi-cell DCI (MC-DCI). In the disclosure, the MC-DCI may be one piece of DCI that schedules PDSCH and/or PUSCH in each of the multiple cells. In the disclosure, the DCI which schedules a PDSCH for each of multiple cells may be DCI format 1_3. In addition, the DCI which schedules a PUSCH for each of multiple cells may be DCI format 0_3.

Cells which may be scheduled by the MC-DCI may be configured by the upper layer. For example, it is assumed that the MC-DCI is capable of scheduling (co-scheduling) cell 0, cell 1, cell 2, and cell 3. Upon receiving the MC-DCI, the UE may receive scheduling information for the cell 0, cell 1, cell 2, and cell 3. That is, the UE may receive scheduling information for cell 0, cell 1, cell 2, and cell 3 from the MC-DCI. For example, the MC-DCI being capable of scheduling cell 0, cell 1, cell 2, and cell 3 may be configured from the upper layer. Here, the scheduling information may include time domain resource assignment (TDRA) information and/or frequency domain resource assignment (FDRA) information by which data channels (PDSCH for downlink and PUSCH for uplink) are transmitted and received in each cell. Thus, the UE may obtain the scheduling information of each cell through the MC-DCI and transmit and receive data channels to and from each cell.

There may be a case in which the base station cannot schedule all cells configured for the UE in a specific situation. There may occur a case in which the base station cannot schedule at least some of multiple cells configured for the UE. For example, although the base station configures, for the UE, four cells (e.g., cell 0, cell 1, cell 2, and cell 3) for scheduling via the MC-DCI, scheduling for some of the cells may not possible because they are subject to scheduling for other UEs, because of poor channel conditions, or for other reasons. In this case, the base station should be able to indicate to the UE which of the preconfigured cells subject to scheduling via MC-DCI are cells subject to scheduling. In other words, the base station should be able to indicate, to the UE, one or more cells (actually) subject to scheduling among the multiple cells subject to scheduling via MC-DCI.

The UE may acquire information indicating co-scheduled cells by MC-DCI, among preconfigured cells (for example, cell 0, cell 1, cell 2, and cell 3), from MC-DCI. In other words, among the multiple cells configured to be scheduled via the MC-DCI, one or more cells that are (actually) co-scheduled via the MC-DCI may be identified based on the corresponding MC-DCI. More specifically, the base station may configure a table including the co-scheduled cells for the UE. For example, the rows in this table may have unique indices. The index of each row (and/or each row) may include the index of co-scheduled cells. For example, {cell 0, cell 1} may be configured for row 0, {cell 2, cell 3} may be configured for row 1, and {cell 0, cell 1, cell 2, cell 3} may be configured for row 2. Table 18 may be referred to as an example of the table configured for the UE.

[Table 18]

| index | Co-scheduled cell |
|---|---|
| 0 | {0, 1} |
| 1 | {2, 3} |
| 2 | {0, 1, 2, 3} |

The UE may acquire, from the MC-DCI, a value indicating the index of the row. Therefore, the UE may determine a scheduled cell, based on the value. For example, MC-DCI may include information regarding a row index, and the UE may identify a scheduled cell, based on the table and the row index acquired from MC-DCI. For example, in case that row 0 is indicated by MC-DCI, the UE may identify that cell 0 and cell 1 are scheduled cells. For example, in case that row 1 is indicated by MC-DCI, the UE may identify that cell 2 and cell 3 are scheduled cells. For example, in case that row 2 is indicated by MC-DCI, the UE may identify that cell 0, cell 1, cell 2, and cell 3 are scheduled cells.

In the disclosure, a table of the mapping relationship between co-scheduled cells (or indices of scheduled cells) and an index indicated by DCI may be configured, and scheduled cells may be identified based on the table and the index indicated by the DCI.

The UE may acquire a scheduled cell's information from MC-DCI. MC-DCI may include at least the following two types of DCI fields.

In the first type, information of one DCI field is commonly applied to multiple scheduled cells. For example, in the case of a downlink assignment index, a TPC command for a scheduled PUCCH, a PUCCH resource indicator, a PDSCH-to-HARQ_feedback timing indicator field, or the like, information of one DCI field may be commonly applied to multiple scheduled cells.

In the second type, one DCI field may include blocks corresponding to multiple scheduled cells, respectively, and each block's information may be applied to the corresponding cell. For example, at least one of a frequency domain resource assignment (FDRA) field, a modulation and coding scheme (MCS) field, a new data indication (NDI) field, and a HARQ process number field may be of the second type. If a DCI field of the second type includes multiple blocks, the blocks may have different lengths (payload sizes). For example, if a FDRA field includes a first block for a first cell and includes a second block for a second cell, the first and second blocks may have identical or different lengths. For example, the first block may have a length of 10 bits, and the second block may have a length of 5 bits. As an example, the FDRA field may be extended to DCI fields belonging to the second type.

The following table shows an example of DCI format 0_3.

---

**7.3.1.1.4 Format 0_3**

DCI format 0_3 is used for the scheduling of one PUSCH in one cell, or multiple PUSCHs in multiple cells with one PUSCH per cell.

The following information is transmitted by means of the DCI format 0_3 with CRC scrambled by C-RNTI or MCS-C-RNTI:

- Identifier for DCI formats - 1 bit

    - The value of this bit field is always set to 0, indicating an UL DCI format

- Scheduled cell set indicator - $\lceil \log_2 N_{set} \rceil$ bits, where $N_{set}$ is the number of cell sets which are configured by higher layer parameter *MC-DCI-SetofCellsToAddModList* to be respectively scheduled by DCI format 0_3/1_3 from the cell on which this format is carried by PDCCH. If present, this field is used to indicate the scheduled cell set according to Table 7.3.1.1.4-1; otherwise, the scheduled cell set is the cell set configured to be scheduled by DCI format 0_3/1_3 from the cell by higher layer parameter *MC-DCI-SetofCellsToAddModList.*

- Scheduled cells indicator- number of bits determined by the following:

    - 0 bit if the higher layer parameter *ScheduledCellCombo-ListDCI-0-3* for the scheduled cell set is not configured;

    - otherwise $\lceil \log_2 l_{UL} \rceil$ bits indicating the scheduled cells in the scheduled cell set according to Table 7.3.1.1.4-2, where $l_{UL}$ is the number of entries in the higher layer parameter *ScheduledCellCombo-ListDCI-0-3*. If only one entry is configured in the higher layer parameter *ScheduledCellCombo-ListDCI-0-3,* the scheduled cells are the cells configured by higher layer parameter *ScheduledCellCombo-ListDCI-0-3.*

- Bandwidth part indicator - 0, 1 or 2 bits determined as $\lceil \log_2 n_{BWP,max} \rceil$, where

    - $n_{BWP,max} = n_{BWP,RRC}^{max} + 1$ if $n_{BWP,RRC}^{max} \leq 3$, $n_{BWP,RRC}^{max}$ is the maximum number of UL BWPs configured by higher layers across all the cells configured by higher layer parameter *ScheduledCell-ListDCI-0-3* in the scheduled cell set, in which case the bandwidth part indicator is equivalent to the ascending order of the higher layer parameter *BWP-Id;*

    - otherwise $n_{BWP,max} = n_{BWP,RRC}^{max}$, in which case the bandwidth part indicator is defined in Table 7.3.1.1.2-1:

    The field is only applicable to a scheduled cell with the number of configured UL BWPs larger than 1, including the initial UL bandwidth part, and is applied to the applicable scheduled cells in the scheduled cell set independently. **If a** UE does not support active BWP change via DCI. the UE ignores this bit field.

- Frequency domain resource assignment -- number of bits determined by the following, where $N_{RB}^{UL,BWP}$ is the size of the active UL bandwidth part:

    - block number 1, block number 2,..., block number $N_{cell}^{UL}$

    If *ScheduledCellCombo-ListDCI-0-3* for the scheduled cell set is configured with more than one entry, $N_{cell}^{UL}$ is the number of scheduled cells indicated by Scheduled cells indicator field; if *ScheduledCellCombo-ListDCI-0-3* for the scheduled cell set is configured with only one entry, $N_{cell}^{UL}$ is the number of cells configured by higher layer parameter *ScheduledCellCombo-ListDCI-0-3;* otherwise, $N_{cell}^{UL}$ is the number of cells configured by higher layer parameter *ScheduledCell-ListDCI-0-3* in the scheduled cell set. Each block corresponds to the frequency domain resource assignment for a cell, and the blocks are placed according to an ascending order of a serving cell index, with block number 1 corresponding to the frequency domain resource assignment for the cell with the smallest serving cell index. Each block is defined by the following fields:

    - If higher layer parameter *useInterlacePUCCH-PUSCH* in *BWP-UplinkDedicated* is not configured

        - N_{RBG} bits if only resource allocation type 0 is configured, where N_{RBG} is defined in Clause 6.1.2.2.1 of [6, TS 18₊214]

---

| 7.3.1.1.4 Format 0_3 |
|---|
| $\qquad$ - $\lceil \log_2(N_{RBG,K1}(N_{RBG,K1}+1)/2) \rceil$ bits if only resource allocation type 1 is configured, or $\max(\lceil \log_2(N_{RBG,K1}(N_{RBG,K1}+1)/2) \rceil, N_{RBG})+1$ bits if *resourceAllocationDCI-0-3* is configured as 'dynamicS-witch', where $N_{RBG,K1} = \lceil (N_{RB}^{UL,BWP} + (N_{UL,BWP}^{start} \bmod K1))/K1 \rceil$, $N_{RB}^{UL,BWP}$ is the size of the active UL bandwidth part, $N_{UL,BWP}^{start}$ is defined as in clause 4.4.4.4 of [4, TS 38.211] and *K1* is given by higher layer |

parameter *resourceAllocationType1GranularityDCI-0-3*. If the higher layer parameter *resourceAllocationType1GranularityDCI-0-3* is not configured, K1 is equal to 1.

- If *resourceAllocationDCI-0-3* is configured *as 'dynamicSwitch'*, the MSB bit is used to indicate resource allocation type 0 or resource allocation type 1, where the bit value of 0 indicates resource allocation type 0 and the bit value of 1 indicates resource allocation type 1.

- For resource allocation type 0, the $N_{RBG}$ LSBs provide the resource allocation as defined in Clause 6.1.2.2.1 of [6, TS 38.214].

- For resource allocation type 1, the $\lceil \log_2(N_{RBG,K1}(N_{RBG,K1}+1)/2) \rceil$ LSBs provide the resource allocation as follows:

    - For PUSCH hopping with resource allocation type 1:

        - $N_{UL\_hop}$ MSB bits are used to indicate the frequency offset according to Clause 6.3 of [6, TS 38.214], where $N_{UL\_hop}$ = 1 if the higher layer parameter *frequencyHoppingOffsetLists* contains two offset values and $N_{UL\_hop}$ = 2 if the higher layer *parameter frenquencyHoppingOffsetList* contains four offset values

        - $\lceil \log_2(N_{RBG,K1}(N_{RBG,K1}+1)/2) \rceil - N_{UL\_hop}$ bits provide the frequency domain resource allocation according to Clause 6.1.2.2.2 of [6, TS 38.214]

    - For non-PUSCH hopping with resource allocation type 1:

        - $\lceil \log_2(N_{RBG,K1}(N_{RBG,K1}+1)/2) \rceil$ bits provide the frequency domain resource allocation according to Clause 6.1.2.2.2 of [6, TS 38.214]

If "Bandwidth part indicator" field indicates a bandwidth part other than the active bandwidth part and if *resourceAllocationDCI-0-3* is configured as *'dynamicSwitch'* for the indicated bandwidth part, the UE assumes resource allocation type 0 for the indicated bandwidth part if the bitwidth of the "Frequency domain resource assignment" field of the active bandwidth part is smaller than the hitwidth of the "Frequency domain resource assignment" field of the indicated bandwidth part.

- If the higher layer parameter *useInderlacePUCCH-PUSCH* in *BWP-UplinkDedicated* is configured

    - 5 + Y bits provide the frequency domain resource allocation according to Clause 6.1.2.2.3 of [6, TS 38.214] if the subcarrier spacing for the active UL bandwidth part is 30 kHz. The 5 MSBs provide the interlace allocation and the Y LSBs provide the RB set allocation.

    - 6 + Y bits provide the frequency domain resource allocation according to Clause 6.1.2.2.3 of [6, TS 38.214] if the subcarrier spacing for the active UL bandwidth part is 15 kHz. The 6 MSBs provide the interlace allocation and the Y LSBs provide the RB set allocation.

**The** value of Y is determined by $\lceil \log_2\left(\frac{N_{RB-set,UL}^{BWP}(N_{RB-set,UL}^{BWP}+1)}{2}\right) \rceil$ where $N_{RB-set,UL}^{BWP}$ is the number of RB sets contained in the active UL BWP as defined in clause 7 of [6, TS38.214].

If the higher layer parameter *ScheduledCellCombo-ListDCI-0-3* for the scheduled cell set is not configured, each block is also used to indicate whether the corresponding cell is scheduled or not as follows:

    - if all bits of a block are set to 0 for resource allocation type 0 or set to 1 for resource allocation type 1 or set to 0 or I for dynamic switch resource allocation type, the cell corresponding to the block is not scheduled;

    - otherwise, the cell corresponding to the block is scheduled.

7.3.1.1.4 Format 0_3

- Time domain resource assignment - $\lceil \log_2(I) \rceil$ bits, where *I* is the number of entries in the higher layer parameter *TDRA-FieldIndexListDCI-0-3.* This lield is used to indicate an entry in the higher layer parameter *TDRA-FieldIndexListDCI-0*-3 according to Table 7.3.1.1.4-3. Each entry in the higher layer parameter *TDRA-FieldIndexListDCI-0-3* contains the 'Time domain resource assignment' index for each cell in the scheduled cell set, where the 'Time domain resource assignment' indexes for all the cells are placed according to an ascending order of a serving cell index.

- Frequency hopping flag - 0 or 1 bit

    - 0 bit if the higher layer parameter *frequencyHopping* is not configured for any cell configured by higher layer parameter *ScheduledCell-ListDCI-0-3* in the scheduled cell set;

    - 1 bit according to Table 7.3.1.1.1-3 otherwise, only applicable to resource allocation type 1, as defined in Clause 6.3 of [6, TS 38.214].

    The field is only applicable to a scheduled cell configured with *frequencyHopping,* and is applied to the applicable scheduled cells independently.

  - Modulation and coding scheme - number of bits determined by the following:

    - block number 1, block number 2,..., block number $N_{cell}^{UL}$

    Each block corresponds to the modulation and coding scheme for a scheduled cell, and the blocks are placed according to an ascending order of a serving cell index, with block number 1 corresponding to the modulation and coding scheme for the cell with the smallest serving cell index. Each block is 5 bits as defined in Clause 6.1.4.1 of [6, TS 38.214].

  - New data indicator - number of bits determined by the following:

    - block number 1, block number 2,..., block number $N_{cell}^{UL}$

    Each block corresponds to the new data indicator for a scheduled cell, and the blocks are placed according to an ascending order of a serving cell index, with block number 1 corresponding to the new data indicator for the cell with the smallest serving cell index. Each block is 1 bit.

  - Redundancy version - number of bits determined by the following:

    - block number 1, block number 2...., block number $N_{cell}^{UL}$

    Each block corresponds to the redundancy version for a scheduled cell, and the blocks are placed according to an ascending order of a serving cell index, with block number 1 corresponding to the redundancy version for the cell with the smallest serving cell index. Each block is 0, 1 or 2 bits determined by higher layer parameter *numberOfBitsForRV-DCI-0-3* configured for the cell correponding to the block,

    - If 0 bit is configured, $rv_{id}$ to be applied is 0;

    - 1 bit according to Table 7.3.1.2.3-1;

    - 2 bits according to Table 7.3.1.1.1-2.

  - HARQ process number - number of bits determined by the following:

    - block number 1, block number 2,..., block number $N_{cell}^{UL}$

    Each block corresponds to the HARQ process number for a scheduled cell, and the blocks are placed according to an ascending order of a serving cell index, with block number 1 corresponding to the HARQ process number for the cell with the smallest serving cell index. Each block is 0, 1, 2, 3, 4 or 5 bits determined by higher layer parameter *harq-ProcessNumberSizeDCI-0-3* configured for the cell correponding to the block.

  - 1st downlink assignment index - 1 or 2 bits

    - 1 bit for semi-static HARQ-ACK codebook;

    - 2 bits for dynamic HARQ-ACK codebook.

    When two HARQ-ACK codebooks are configured for the same serving cell and if higher layer parameter *priorityIndicatorDCI-0-3* is configured, if the bit width of the 1st downlink assignment index in DCI format 0_3 for one HARQ-ACK codebook is not equal to that of the 1st downlink assignment index in DCI format 0_3 for the other HARQ-ACK codebook, a number of most significant bits with value set to '0' are inserted to smaller 1st downlink assignment index until the bit width of the 1st downlink assignment index in DCI format 0_3 for the two HARQ-ACK codebooks are the same.

  - 2nd downlink assignment index - 0 or 2 bits:

    - 2 bits for dynamic HARQ-ACK codebook with two HARQ-ACK sub-codebooks;

7.3.1.1.4 Format 0_3

- 0 bit otherwise.

When two HARQ-ACK codebooks are configured for the same serving cell and if higher layer parameter *priorityIndicatorDCI-0-3* is configured, if the bit width of the 2nd downlink assignment index in DCI format 0_3 for one HARQ-ACK codebook is not equal to that of the 2nd downlink assignment index in DCI format 0_3 for the other HARQ-ACK codebook, a number of most significant bits with value set to'0' are inserted to smaller 2nd downlink assignment index until the bit width of the 2nd downlink assignment index in DCI format 0_3 for the two HARQ-ACK codebooks are the same.

- TPC command for scheduled PUSCH - number of bits determined by the following:

- block number 1, block number 2,..., block number $N_{cell}^{UL}$

Each block corresponds to the TPC command for the scheduled PUSCH for a scheduled cell, and the blocks are placed according to an ascending order of a serving cell index, with block number 1 corresponding to the TPC command for the scheduled PUSCH for the cell with the smallest serving cell index. Each block is 2 bits as defined in Clause 7.1.1 of [5, TS38.213].

- SRS resource indicator - number of bits determined by the following:

- If *SAI-DCI0-3= typela* is configured by higher layer,

- $\max_{r \in \{1,2,...,N_{cell}^{UL,2}\}} M_s(r)$ bits applying to the scheduled cells with $M_s(r) > 0$ independently, where $N_{cell}^{UL,2}$ is the number of cells configured by higher layer parameter *ScheduledCell-ListDCI-0-3* in the scheduled cell set, *r* is mapped to the cells according to an ascending order of a serving cell index with r = 1 corresponding to the cell with the smallest serving cell index, and $M_s(r)$ is defined below.

- If *SRI-DCI0-3= type2* is configured by higher layer,

- block number 1, block number 2,..., block number $N_{cell}^{UL}$

Each block corresponds to the SRS resource indicator for a scheduled cell, and the blocks are placed according to an ascending order of a serving cell index, with block number 1 corresponding to the SRS resource indicator for the cell with the smallest serving cell index. Each block is defined below.

$M_s(r)$ above for the case of *SRI-DCI0-3= typela* or each block above for the case of *SRI-DCIO-3= type2* is defined by the following:

- $\left\lceil \log_2 \left( \sum_{k=1}^{\min\{L_{max}, N_{SRS}\}} \binom{N_{SRS}}{k} \right) \right\rceil$ bits according to Tables 7.3.1.1.2-28/29/30/31 if the higher layer parameter *txConfig = nonCodebook*, where $N_{SRS}$ is the number of configured SRS resources in the first SRS resource set configured by higher layer parameter *srs-ResourceSetToAddModList*, and associated with the higher layer parameter *usage* of value'nonCodeBook' and

- if UE supports operation with *maxMIMO-Layers* and the higher layer parameter *maxMIMO-Layers* of *PUSCH-ServingCellConfig* of the serving cell is configured, $L_{max}$ is given by that parameter
- otherwise, $L_{max}$ is given by the maximum number of layers for PUSCH supported by the UE for the serving cell for non-codebook based operation.

- [$\log_2(N_{SRS})$] bits according to Tables 7.3.1.1.2-32, 7.3.1.1.2-32A and 7.3.1.1.2-32B if the higher layer parameter *txConfig = codebook,* where $N_{SRS}$ is the number of configured SRS resources in the first SRS resource set configured by higher layer parameter *srs-ResourceSetToAddModList,* and associated with the higher layer parameter *usage* of value *'codeBook'.*

- Precoding information and number of layers - number of bits determined by the following:

- If *TPMI-DCI0-3= typela* is configured by higher layer,

- $\max_{r \in \{1,2,...,N_{cell}^{UL,2}\}} M_p(r)$ bits applying to the scheduled cells with $M_p(r) > 0$ independently, where r is mapped to the cells according to an ascending order of a serving cell index with $r = 1$ corresponding to the cell with the smallest serving cell index, and $M_p(r)$ is defined below.

- If *TPMI-DCI0-3= type2* is configured by higher layer,

- block number 1, block number 2,..., block number $N_{cell}^{UL}$

Each block corresponds to the precoding information and number of layers for a scheduled cell, and the blocks are placed according to an ascending order of a serving cell index, with block number 1 corresponding to the precoding information and number of layers for the cell with the smallest serving cell index. Each block is defined below.

#### 7.3.1.1.4 Format 0_3

$M_p(r)$ above for the case of *TPMI-DCI0-3= typela* or each block above for the case of *TPMI-DC0-3= type2* is defined by the following:

- 0 bits if the higher layer parameter *txCorifig = nonCodeBook;*

- 0 bits for 1 antenna port and if the higher layer parameter *txConfig - codebook;*

- 4, 5, or 6 bits according to Table 7.3.1.1.2-2 for 4 antenna ports, if *txConfig = codebook, ul-FullPower-Transmission* is not configured or configured to *fullpowerMode2* or configured to *fullpower,* transform precoder is disabled, and according to the values of higher layer parameters *maxRank,* and *codebookSubset;*

- 4 or 5 bits according to Table 7.3.1.1.2-2A for 4 antenna ports, if *txConfig = codebook, ul-FullPower-Transmission =fullpowerModel, maxRank=2,* transform precoder is disabled, and according to the value of higher layer parameter *codebookSubset;*

- 4 or 6 bits according to Table 7.3.1.1.2-2B for 4 antenna ports, if *txConfig = codebook, ul-FullPower-Transmission =fullpowerModel, maxRank=3 or 4,* transform precoder is disabled, and according to the value of higher layer parameter *codebookSubset;*

- 2, 4, or 5 bits according to Table 7.3.1.1.2-3 for 4 antenna ports, if *txConfig = codebook. ul-FullPower-Transmission* is not configured or configured to *fullpowerMode2* or configured to *fullpower,* and according to whether transform precoder is enabled or disabled, and the values of higher layer parameters *maxRank* and *codebookSubset;*

- 3 or 4 bits according to Table 7.3.1.1.2-3A for 4 antenna ports, if *txConfig = codebook, ul-FullPower-Transmission =fullpowerMode1, maxRark=1,* and according to whether transform precoder is enabled or disabled, and the value of higher layer parameter *codebookSubset;*

- 2 or 4 bits according to Table7.3.1.1.2-4 for 2 antenna ports, if *txConfig = codebook, ul-FullPowerTransmission* is not configured or configured to *fullpowerMode2* or configured to *fullpower,* transform precoder is disabled, and according to the values of higher layer parameters *maxRank* and *codebookSubset:*

- 2 bits according to Table 7.3.1.1.2-4A for 2 antenna ports, *if txConfig = codebook. ul-FullPowerTransmission =fullpowerModel,* transform precoder is disabled, *maxRank=2,* and *codebookSubset=nonCoherent;*

- 1 or3 bits according to Table7.3.1.1.2-3 for 2 antenna ports, if *txConfitg = codebook, ul-FullPowerTransmission* is not configured or configured to *fidipower Mode2* or configured to *fullpower,* and according to whether transform precoder is enabled or disabled, and the values of higher layer parameters *maxRank* and *codebookSubset;*

- 2 bits according to Table 7.3.1.1.2-5A for 2 antenna ports, if *txConfig = codebook, ul-FullPowerTransmission =fullpowerMode1, maxRank=1,* and according to whether transform precoder is enabled or disabled, and the value of higher layer parameter *codebookSubset.*

For the higher layer parameter *txConfig=codebook,* if *ul-FullPowerTransmission* is configured to *fullpowerMode2, maxRank* is configured to be larger than 2, and at least one SRS resource with 4 antenna ports is configured in the SRS resource set indicated by SRS resource set indicator field if present, otherwise in an SRS resource set with usage set to 'codebook', and an SRS resource with 2 antenna ports is indicated via SRI in the same SRS resource set, then Table 7.3.1.1.2-4 is used.

---

For the higher layer parameter *txConfig = codebook,* if different SRS resources with different number of antenna ports are configured, the bitwidth is determined according to the maximum number of ports in an SRS resource among the configured SRS resources in all SRS resource set(s) with usage set to 'codebook'. If the number of ports for a configured SRS resource in the set is less than the maximum number of ports in an SRS resource among the configured SRS resources, a number of most significant bits with value set to '0' are inserted to the field.

- Antenna ports - number of bits determined by the following:

    - If *AntennaPortsDC10-3= type1a* is configured by higher layer,

        - $\max_{r \in \{1,2,...,N_{cell}^{UL,2}\}} M_A(r)$ bits applying to the scheduled cells independently, where r is mapped to the cells according to an ascending order of a serving cell index with r = 1 corresponding to the cell with the smallest serving cell index, and $M_A(r)$ is defined below.

    - If *AntennaPortsDC10-3= type2* is configured by higher layer,

        - block number 1, block number 2,..., block number $N_{cell}^{UL}$

(continued)

7.3.1.1.4 Format 0_3

Each block corresponds to the Antenna ports information for a scheduled cell, and the blocks are placed according to an ascending order of a serving cell index, with block number 1 corresponding to the Antenna ports information for the cell with the smallest serving cell index. Each block is defined below.

$M_A(r)$ above for the case of *AntennaPortsDCI0-3= type1a* or each block above for the case of *AntennaPortsDCI0-3= type2* is defined by the following:

- 2 bits as defined by Tables 7.3.1.1.2-6, if transform precoder is enabled, *dmrs-Type=1,* and *maxLength*=1, except that *dmrs-UplinkTransformPrecoding* and *tp-pi2BPSK* are both configured and $\pi/2$ BPSK modulation is used:

- 2 bits as defined by Tables 7.3.1.1.2-6A, if transform precoder is enabled and *dmrs-UplinkTransformPrecoding* and *tp-pi2BPSK* are both configured, $\pi/2$ BPSK modulation is used, *dmrs-Type=1,* and *maxLength=1,* where $n_{SCID}$ is the scrambling identity for antenna ports defined in [Clause 6.4.1.1.1.2, TS38.211]:

- 4 bits as defined by Tables 7.3.1.1.2-7, if transform precoder is enabled, *dmrs-Type*=1, and *maxLength=2,* except that *dmrs-UplinkTransformPrecoding* and *tp-pi2BPSK* are both configured and $\pi/2$ BPSK modulation is used;

- 4 bits as defined by Tables 7.3.1.1.2-7A, if transform precoder is enabled and *dmrs-UplinkTransformPrecoding* and *tp-pi2BPSK* are both configured, $\pi/2$ BPSK modulation is used, *dmrs-Type*=1, and *maxLength=2,* where $n_{SCID}$ is the scrambling identity for antenna ports defined in [Clause 6.4.1.1.1.2, TS38.211];

- 3 bits as defined by Tables 7.3.1.1.2-8/9/10/11, if transform precoder is disabled, *dmrs-Type*=1, and *maxLength*=1, and the value of rank is determined according to the SRS resource indicator field if the higher layer parameter *txConfig = nonCodebook* and according to the Precoding information and number of layers field if the higher layer parameter *txConfig = codebook;*

- 4 bits as defined by Tables 7.3.1.1.2-12/13/14/15, if transform precoder is disabled, *dmrs-Type*=1, and *maxLength*=2, and the value of rank is determined according to the SRS resource indicator field if the higher layer parameter *txConfig = nonCodebook* and according to the Precoding information and number of layers field if the higher layer parameter *txConfig = codebook;*

- 4 bits as defined by Tables 7.3.1.1.2-16/17/18/19, if transform precoder is disabled, *dmrs-Type*=2, and *maxLength*=1, and the value of rank is detennined according to the SRS resource indicator field if the higher layer parameter *txConfig - nonCodebook* and according to the Precoding information and number of layers field if the higher layer parameter *txConfig = codebook;*

- 5 bits as defined by Tables 7.3.1.1.2-20/21/22/23, if transform precoder is disabled, *dmrs-Type*=2, and *maxLength*=2, and the value of rank is determined according to the SRS resource indicator field if the higher layer parameter *txCoufig = nonCodebook* and according to the Precoding information and number of layers field if the higher layer parameter *txConfig = codebook.*

where the number of CDM groups without data of values 1, 2, and 3 in Tables 7.3.1.1.2-6 to 7.3.1.1.2-23 refers to CDM groups {0}, {0,1}, and {0, 1,2} respectively.

---

If a UE is configured with both *dmrs-UplinkForPUSCH-MappingTypeA* and *dmrs-UplinkForPUSCH-MappingTypeB,* the bitwidth of this field equals max{$x_A$, $x_B$}, where $x_A$ is the "Antenna ports" bitwidth derived according to *dmrs-UplinkForPUSCH-MappingTypeA* and $x_B$ is the "Antenna ports" bitwidth derived according to *dmrs-UplinkForPUSCH-MappingTypeB*. A number of $|x_A - x_B|$ zeros are padded in the MSB of this field, if the mapping type of the PUSCH corresponds to the smaller value of $x_A$ and $x_B$.

- SRS request- [$\log_2(I_{SRS})$] bits, where $I_{SRS}$ is the number of entries in the higher layer parameter *srs-RequestListDCI-0-3*. This field is used to indicate an entry in the higher layer parameter *srs-RequestListDCI-0-3* according to Table 7.3.1.1.4-4. Each entry in the higher layer parameter *srs-RequestListDCI-0-3* contains the 'SRS request' index for each cell in the scheduled cell set, where the 'SRS request' indexes for all the cells are placed according to an ascending order of a serving cell index. Each 'SRS request' index is defined by the following:

- 2 bits as defined by Table 7.3.1.1.2-24 for UEs not configured with *supplementaryUplink* in *ServingCellConfig* in cell; 3 bits for UEs configured with *supplementaryUplink* in *ServingCellConfig* in the cell where the first bit is the non-SUL/SUL indicator as defined in Table 7.3.1.1.1-1 and the second and third bits are defined by Table 7.3.1.1.2-24. This bit field may also indicate the associated CSI-RS according to Clause 6.1.1.2 of [6, TS 38.214]. the

(continued)

7.3.1.1.4 Format 0_3

- SRS offset indicator - [$\log_2(I_{offset})$] bits, where $I_{offset}$ is the number of entries in the higher layer parameter srs-*OffsetListDCI-0-3*. This field is used to indicate an entry in the higher layer parameter *srs-OfferListDCI-0-3* according to Table 7.3.1.1.4-5. Each entry in the higher layer parameter *srs-CffsetListDCI-0-3* contains the 'SRS offset indicator' index for each cell in the scheduled cell set, where the 'SRS offset indicator' indexes for all the cells are placed according to an ascending order of a serving cell index. Each 'SRS offset indicator' index is defined by the following:

    - 0 bit if higher layer parameter *AvailableSlotOffset* is not configured for any aperiodic SRS resource set in the scheduled cell, or if higher layer parameter *AvailableSlotOffset* is configured for at least one aperiodic SRS resource set in the scheduled cell and the maximum number of entries of *availableSlotOffsetList* configured for all aperiodic SRS resource set(s) is **l**;

    - otherwise, [$\log_2(K)$] bits are used to indicate available slot offset according to Table 7.3.1.1.2-37 and Clause 6.2.1 of [6, TS 38.214], where K is the maximum number of entries of *availableSlotOffsetList* configured for all aperiodic SRS resource set(s) in the scheduled cell;

- CSI request - 0, 1, 2, 3, 4, 5, or 6 bits determined by higher layer parameter *reportTriggerSize.* This field is applied to the cell with the smallest serving cell index among the scheduled cells indicated by Scheduled cells indicator field or Frequency domain resource assignment field.

- PTRS-DMRS association - number of bits determined by the following:

    - block number 1, block number 2,..., block number $N_{cell}^{UL}$

    Each block corresponds to the PTRS-DMRS association information for a scheduled cell, and the blocks are placed according to an ascending order of a serving cell index, with block number 1 corresponding to the PTRS-DMRS association information for the cell with the smallest serving cell index. Each block is defined by the following:

    - 0 bit if *PTRS-UplinkConfig* is not configured in either *dmrs-UplinkForPUSCH-MappingTypeA* or *dmrs-UplinkForPUSCH-MappingTypeB* and transform precoder is disabled, or if transform precoder is enabled, or if *maxRankDCI=1*;

    - 2 bits otherwise, where Table 7.3.1.1.2-25 and 7.3.1.1.2-26 are used to indicate the association between PTRS port(s) and DMRS port(s) when one PT-RS port and two PT-RS ports are configured by *maxNrofPorts* in *PTRS-UplinkConfig* respectively, and the DMRS ports are indicated by the Antenna ports field.

    If "Bandwidth part indicator" field indicates a bandwidth part other than the active bandwidth part and the "PTRS-DMRS association" field is present for the indicated bandwidth part but not present for the active bandwidth part, the UE assumes the "PTRS-DMRS association" field is not present for the indicated bandwidth part.

- beta_offset indicator - 0 or 2 bits

    - 0 bit if *betaOffsets = semiStatic* is configured for all the cells configured by higher layer parameter *ScheduledCell-ListDCI-0-3* in the scheduled cell set;

    - otherwise 2 bits as defined by Table 9.3-3 in [5, TS 38.213].

---

    When two HARQ-ACK codebooks are configured for the same serving cell and if higher layer parameter *priorityIndicatorDCI-0-3* is configured, if the bit width of the beta_offset indicator in DCI format 0_3 for one HARQ-ACK codebook is not equal to that of the beta_offset indicator in DCI format 0_3 for the other HARQ-ACK codebook, a number of most significant bits with value set to '0' are inserted to smaller beta_offset indicator until the bit width of the beta_offset indicator in DCI format 0_3 for the two HARQ-ACK codebooks are the same.

    The field is only applicable to a scheduled cell configured with *betaOffsets = dynamic,* and is applied to the applicable scheduled cells independently.

- DMRS sequence initialization - 1 bit. This field is applied to all the scheduled cells indicated by Scheduled cells indicator field or Frequency domain resource assignment field independently.

- UL-SCH indicator - 1 bit. A value of "1" indicates UL-SCH shall be transmitted on the PUSCH and a value of "0" indicates UL-SCH shall not be transmitted on the PUSCH. A UE is not expected to receive a DCI format 0_3 with UL-SCH indicator of "0" and CSI request of all zero(s). This field is applied to the cell with the smallest serving cell index among the scheduled cells indicated by Scheduled cells indicator field or Frequency domain resource assignment field.

**7.3.1.1.4 Format 0_3**

- ChannelAccess-CPext-CAPC - $\max\limits_{r\in\{1,2,...,N_{cell}^2\}} M_c(r)$ bits applying to the scheduled cells with $M_c(r) > 0$ independently, where $N_{cell}^2$ is the number of cells configured by higher layer parameter *ScheduledCell-ListDCI-0-3* in the scheduled cell set, r is mapped to the cells according to an ascending order of a serving cell index with r = 1 corresponding to the cell with the smallest serving cell index, and $M_c(r)$ is defined by the following:

   - 0, I, 2, 3, 4, 5 or 6 bits. The bitwidth for this field is determined as $[\log_2(I)]$ bits, where *I* is the number of entries in the higher layer parameter *ul-AccessConfigListDCI-0-1* or in Table 7.3.1.1.1-4A *if channelAccessMode-r16 = "semiStatic"* is provided, for operation in a cell with shared spectrum channel access in frequency range 1, or for operation in frequency range 2-2 if *ChannelAccessMode2-r17* is provided; otherwise 0 bit. One or more entries from Table 7.3.1.1.2-35 or Table 7.3.1.1.2-35A are configured by the higher layer parameter *ul-AccesiConfigListDCI-0-1*.

- Open-loop power control parameter set indication - $\max\limits_{r\in\{1,2,...,N_{cell}^{UL2}\}} M_o(r)$ bits applying to the scheduled cells with $M_o(r) > 0$ independently, where *r* is mapped to the cells according to an ascending order of a serving cell index with r = 1 corresponding to the cell with the smallest serving cell index, and $M_o(r)$ is defined by the following:

   - 0 bit if the higher layer parameter *p0-PUSCH-SetList* is not configured:

   - 1 or 2 bits otherwise,

      - 1 bit if SRS resource indicator is present in the DCI format 0_3;

      - 1 or 2 bits as determined by higher layer parameter *olpc-ParameterSetDCI-0-1* if SRS resource indicator is not present in the DCI format 0_3.

- Priority indicator- 0 bit if higher layer parameter *priorityindicatorDCI-0-3* is not configured; otherwise 1 bit as defined in Clause 9 in [5, TS 38,213]. This field is applied to all the scheduled cells indicated by Scheduled cells indicator field or Frequency domain resource assignment field.

- Minimum applicable scheduling offset indicator - 0 or 1 bit

   - 0 bit if higher layer parameter *minimumSchedulingOffsetK0DCI-0-3* is not configured;

   - x bits otherwise.

- SCell dormancy indication - 0 bit if higher layer parameter *dormancyDCI-0-3* is not enabled; otherwise x bits.

- PDCCH monitoring adaptation indication - 0, 1 or 2 bits

   - 0 bit if higher layer parameter *pdechMonAdaptDCI-0-3* is not enabled;

   - otherwise,

      - 1 or 2 bits, if *searchSpaceGroupIdList-r17* is not configured and if *pdcch-SkippingDurationList* is configured

         - 1 bit if the UE is configured with only one duration by *pdech-SkippingDurationList;*

         - 2 bits if the UE is configured with more than one duration by *pdceh-SkippingDurationList,*

   - 1 or 2 bits, if *pdech-SkippingDurationList* is not configured and if *searchSpaceGroupidList-r17* is configured

      - 1 bit if the UE is configured by *searchSpaceGroupIdList-r17* with search space set(s) with group index 0 and search space set(s) with group index 1, and it the UE is not configured by *searchSpaceGroupIdList-r17* with any search space set with group index 2;

      - 2 bits if the UE is configured by *searchSpaceGroupIdList-r17* with search space set(s) with group index 0, search space set(s) with group index 1 and search space set(s) with group index 2;

   - 2 bits, if *pdech-SkippingDurationList* is configured and if *searchSpaceGroupIdList-r17* is configured

If *ScheduledCellCombo-ListDCI-0-3* for the cell set is configured, zeros shall be appended to DCI format 0_3 if needed until the payload size equals the size of DCI format 0_3 that is determined by the configuration of the corresponding active bandwidth part(s) of the scheduled cells in the entry which results in the largest size among the entries in the higher layer parameter *ScheduledCellCombo-ListDCI-0-3;* otherwise, zeros shall be appended to DCI format 0_3 if needed until the payload size equals the size of DCI format 0_3 that is determined by the configuration of the corresponding active bandwidth part(s) of all the cells within the scheduled cell set.

---

**7.3.1.2.4 Format 1_3**

DCI format 1_3 is used for the scheduling of one PDSCH in one cell, or multiple PDSCHs in multiple cells with one PDSCH per cell.

The following information is transmitted by means of the DCI format 1_3 with CRC scrambled by C-RNTI or MCS-C-RNTI:

- Identifier for DCI formats - 1 bits
    - The value of this bit field is always set to 1, indicating a DL DCI format

- Scheduled cell set indicator - $\lceil \log_2 N_{set} \rceil$ bits, where $N_{set}$ is the number of cell sets which are configured by higher layer parameter *MC-DCI-SetofCellsToAddModList* to be respectively scheduled by DCI format 0_3/1_3 from the cell on which this format is carried by PDCCH. If present, this field is used to indicate the scheduled cell set according to Table 7.3.1.1.4-1; otherwise, the scheduled cell set is the cell set configured to be scheduled by DCI format 0_3/1_3 from the cell by higher layer parameter *MC-DCI-SetofCellsToAddModList.*

- Scheduled cells indicator - number of bits determined by the following:
    - 0 bit if the higher layer parameter *ScheduledCellCombo-ListDCI-1-3* for the scheduled cell set is not configured;
    - otherwise [$\log_2 I_{DL}$] bits indicating the scheduled cells in the scheduled cell set according to Table 7.3.1.2.4-1, where $I_{DL}$ is the number of entries in the higher layer parameter *ScheduledCellCombo-ListDCI-1-3*. If only one entry is configured in the higher layer parameter *ScheduledCellCombo-ListDCI-1-3,* the scheduled cells are the cells configured by higher layer parameter *ScheduledCellCombo-ListDCI-1-3.*

- Bandwidth part indicator - 0, 1 or 2 bits determined as [$\log_2 n_{BWP,max}$], where
    - $n_{BWP,max} = n_{BWP,RRC}^{max} + 1$ if $n_{BWP,RRC}^{max} \leq 3$, $n_{BWP,RRC}^{max}$ is the maximum number of DL BWPs configured by higher layers across all the cells configured by higher layer parameter *ScheduledCell-ListDCI-1-3* in the scheduled cell set. in which case the bandwidth part indicator is equivalent to the ascending order of the higher layer parameter *BWP-Id;*
    - otherwise $n_{BWP,max} = n_{BWP,RRC}^{max}$ , in which case the bandwidth part indicator is defined in Table 7.3.1.1.2-1;

    The field is only applicable to a scheduled cell with the number of configured DL BWPs larger than 1, including the initial DL bandwidth part, and is applied to the applicable scheduled cells in the scheduled cell set independently. If a UE does not support active BWP change via DCI, the UE ignores this bit field.

- Frequency domain resource assignment - number of bits determined by the following:
    - block number 1, block number 2,..., block number $N_{cell}^{DL}$

    If *ScheduledCellCombo-ListDCI-1-3* for the scheduled cell set is configured with more than one entry, $N_{cell}^{DL}$ is the number of scheduled cells indicated by Scheduled cells indicator field; if *ScheduledCellCombo-ListDCI-1-3* for the scheduled cell set is configured with only one entry, $N_{cell}^{DL}$ is the number of cells configured by higher layer parameter *ScheduledCellcombo-ListDCI-1-3*; otherwise, $N_{cell}^{DL}$ is the number of cells in the scheduled cell set configured by higher layer parameter *ScheduledCell-ListDCI-1-3.* Each block corresponds to the frequency domain resource assignment for a cell, and the blocks are placed according to an ascending order of a serving cell index, with block number 1 corresponding to the frequency domain resource assignment for the cell with the smallest serving cell index. Each block is defined by the following fields:
    - $N_{RBG}$ bits if only resource allocation type 0 is configured, where $N_{RBG}$ is defined in Clause 5.1.2.2.1 of [6, TS 38.214]
    - [$\log_2(N_{RBG,K2}(N_{RBG,K2} + 1)/2)$] bits if only resource allocation type 1 is configured, or max([$\log_2(N_{RBG,K2}(N_{RBG,K2} + N_{RBG}) + 1$ bits if *resourceAllocationDCI-1-3* is configured as *'dynamicSwitch',* where $N_{RBG,K2} = \left\lceil \left( N_{RB}^{DL,BWP} + \left( N_{DL,BWP}^{start} \bmod K2 \right) \right) /K2 \right\rceil$, $N_{RB}^{DL,BWP}$ is the size of the active DL bandwidth part, $N_{DL,BWP}^{start}$ is defined as in clause 4.4.4.4 of [4, TS 38.211] and K2 is given by higher layer parameter *resourceAllocationType1GranularityDCI-1-3*. If the higher layer parameter *resourceAllocationType1GranularityDCI-1-3* is not configured, K2 is equal to 1.

- If *resourceAllocationDCI-1-3* is configured *as 'dynamicSwitch',* the MSB bit is used to indicate resource allocation type 0 or resource allocation type 1, where the bit value of 0 indicates resource allocation type 0 and the bit value of 1 indicates resource allocation type 1.
    - For resource allocation type 0, the $N_{RBG}$ LSBs provide the resource allocation as defined in Clause 5.1.2.2.1 of [6, TS 38.214].
    - For resource allocation type 1, the [$\log_2(N_{RBG,K2}(N_{RBG,K2} + 1)/2)$] LSBs provide the resource allocation as defined in Clause 5.1.2.2.2 of [6, TS 38.214].

(continued)

If "Bandwidth part indicator" field indicates a bandwidth part other than the active bandwidth part and if *resourceAllocationDCI-1-3* is configured as *'dynamicSwitch'* for the indicated bandwidth part, the UE assumes resource allocation type 0 for the indicated bandwidth part if the bitwidth of the "Frequency domain resource assignment" field of the active bandwidth part is smaller than the bitwidth of the "Frequency domain resource assignment" field of the indicated bandwidth part.

If the higher layer parameter *ScheduledCellCombo-ListDCI-1-3* for the scheduled cell set is not configured, each block is also used to indicate whether the corresponding cell is scheduled or not as follows:

    - if all bits of a block are set to 0 for resource allocation type 0 or set to 1 for resource allocation type 1 or set to 0 or 1 for dynamic switch resource allocation type, the cell corresponding to the block is not scheduled;

    - otherwise, the cell corresponding to the block is scheduled.

- Time domain resource assignment -[$\log_2(I)$] bits, where I is the number of entries in the higher layer parameter *TDRA-FieldIndexListDCI-1-3*. This field is used to indicate an entry in the higher layer parameter *TDRA-FieldIndexListDCI-1-3* according to Table 7.3.1.2.4-2. Each entry in the higher layer parameter *TDRA-FieldIndexListDCI-1-3* contains the 'Time domain resource assignment' index for each cell in the scheduled cell set, where the 'Time domain resource assignment' indexes for all the cells are placed according to an ascending order of a serving cell index.

- VRB-to-PRB mapping - 0 or 1 bit

    - 0 bit if the higher layer parameter *vrb-ToPRB-Inlerleaver* is not configured for any cell configured by higher layer parameter *ScheduledCell-ListDCI-1-3* in the scheduled cell set;

    - 1 bit according to Table 7.3.1.2.2-5 otherwise, only applicable to resource allocation type 1. as defined in Clause 7.3.1.6 of [4, TS 38.211].

The field is only applicable to a scheduled cell configured with *vrb-ToPRB-Interleaver,* and is applied to the applicable scheduled cells independently.

- PRB bundling size indicator - 0 or 1 bit

    - 0 bit if the higher layer parameter *prb-BundlingType* is not configured or is set to 'staticBundling' for any cell configured by higher layer parameter *ScheduledCell-ListDCI-1-3* in the scheduled cell set;

    - 1 bit according to Clause 5.1.2.3 of [6, TS 38.214] otherwise.

The field is only applicable to a scheduled cell configured with *prb-BundlingType* set to 'dynamicBundling', and is applied to the applicable scheduled cells independently.

- Rate matching indicator - [$\log_2(I_{RM})$] bits, where $I_{RM}$ is the number of entries in the higher layer parameter *rateMatchListDCI-1-3*. This field is used to indicate an entry in the higher layer parameter *rateMatchListDCI-1-3* according to Table 7.3.1.2.4-3. Each entry in the higher layer parameter *rateMatchListDCI-1-3* contains the 'Rate matching indicator' index for each cell in the scheduled cell set, where the 'Rate matching indicator' indexes for all the cells are placed according to an ascending order of a serving cell index. Each 'Rate matching indicator' index is defined by the following:

    - 0, 1, or 2 bits according to higher layer parameters *rateMatchPatternGroup1* and *rateMatchPatternGroup2,* where the MSB is used to indicate *rateMatchPatternGroup1* and the LSB is used to indicate *rateMatchPatternGroup2* when there are two groups.

- ZP CSI-RS trigger - [$\log_2(I_{CSIRS})$] bits, where $I_{CSIRS}$ is the number of entries in the higher layer parameter *zp-CSI-RSListDCI-1-3*. This field is used to indicate an entry in the higher layer parameter *zp-CSI-RSListDCI-1-3* according to

Table 7.3.1.2.4-4. Each entry in the higher layer parameter *zp-CSI-RSListDCI-1-3* contains the "ZP CSI-RS trigger' index for each cell in the scheduled cell set, where the 'ZP CSI-RS trigger' indexes for all the cells are placed according to an ascending order of a serving cell index. Each 'ZP CSI-RS trigger' index is delined by the following:

    - 0, 1, or 2 bits as defined in Clause 5.1.4.2 of[6, TS 38.214]. The bitwidth for this field is determined as $\lceil \log_2(n_{ZP} + 1) \rceil$ hits, where $n_{ZP}$ is the number of aperiodic ZP CSI-RS resource sets configured by higher layer parameter *aperodicZP-CSI-RS-ResourceSetsToAddModList*.

For transport block 1:

    - Modulation and coding scheme - number of bits determined by the following:

        - block number 1, block number 2,..., block number $N_{cell}^{DL}$

(continued)

Each block corresponds to the modulation and coding scheme for a scheduled cell, and the blocks are placed according to an ascending order of a serving cell index, with block number 1 corresponding to the modulation and coding scheme for the cell with the smallest serving cell index. Each block is 5 bits as defined in Clause 6.1.4.1 of [6, TS 38.214].

- New data indicator - number of bits determined by the following:

    - block number 1, block number 2,..., block number $N_{cell}^{DL}$

Each block corresponds to the new data indicator for a scheduled cell, and the blocks are placed according to an ascending order of a serving cell index, with block number 1 corresponding to the new data indicator for the cell with the smallest serving cell index. Each block is 1 bit.

- Redundancy version - number of bits determined by the following:

    - block number 1, block number 2,..., block number $N_{cell}^{DL}$

Each block corresponds to the redundancy version for a scheduled cell, and the blocks are placed according to an ascending order of a serving cell index, with block number 1 corresponding to the redundancy version for the cell with the smallest serving cell index. Each block is 0, 1 or 2 bits determined by higher layer parameter *numberOfBitsForRV-DCI-1-3* configured for the cell correponding to the block,

    - If 0 bit is configured, $rv_{id}$ to be applied is 0;

    - 1 bit according to Table 7.3.1.2.3-1;

    - 2 bits according to Table 7.3.1.1.1-2.

For transport block 2:

- Modulation and coding scheme - number of bits determined by the following:

    - block number 1, block number 2,..., block number $N_{cell}^{DL,3}$

If *ScheduledCellCombo-ListDCI-1-3* for the scheduled cell set is configured, $N_{cell}^{DL,3}$ is the number of scheduled cells indicated by Scheduled cells indicator field and configured with *maxNrofCodeWordsScheduledByDCI = 2;* otherwise, $N_{cell}^{DL,3}$ is the number of cells configured by higher layer parameter *ScheduledCell-ListDCI-1-3* in the scheduled cell set and configured with *maxNrofCodeWordsSchediledByDCI = 2.* Each block corresponds to the modulation and coding scheme for a scheduled cell, and the blocks are placed according to an ascending order of a serving cell index, with block number 1 corresponding to the modulation and coding scheme for the cell with the smallest serving cell index. Each block is 5 bits as defined in Clause 6.1.4.1 of [6, TS 38.214].

- New data indicator - number of bits determined by the following:

    - block number 1, block number 2,..., block number $N_{cell}^{DL,3}$

Each block corresponds to the new data indicator for a scheduled cell, and the blocks are placed according to an ascending order of a serving cell index, with block number 1 corresponding to the new data indicator for the cell with the smallest serving cell index. Each block is 1 bit.

- Redundancy version - number of bits determined by the following:

    - block number 1, block number 2,..., block number $N_{cell}^{DL,3}$

Each block corresponds to the redundancy version for a scheduled cell, and the blocks are placed according to an ascending order of a serving cell index, with block number 1 corresponding to the redundancy version for the cell with the smallest serving cell index. Each block is 0, 1 or 2 bits determined by higher layer parameter *numberOfBitsForRV-DCI-1-3* configured for the cell correponding to the block,

    - If 0 bit is configured, $rv_{id}$ to be applied is 0;

    - 1 bit according to Table 7.3.1.2.3-1;

    - 2 bits according to Table 7.3.1.1.1-2.

If "Bandwidth part indicator" field indicates a bandwidth part other than the active bandwidth part and the value of *maxNrofCodeWordsScheduledByDCI* for the indicated bandwidth part equals 2 and the value of *maxNrofCodeWordsScheduledByDCI* for the active bandwidth part equals 1, the UE assumes zeros are padded when interpreting the "Modulation and coding scheme", "New data indicator", and "Redundancy version" fields of transport block 2 according to Clause 12 of [5, TS38.213], and the UE ignores the "Modulation and coding scheme", "New data indicator", and "Redundancy version" fields of transport block 2 for the indicated bandwidth part.

- HARQ process number - number of bits determined by the following:

    - block number 1, block number 2,..., block number $N_{cell}^{DL}$

Each block corresponds to the HARQ process number for a scheduled cell, and the blocks are placed according to an ascending order of a serving cell index, with block number 1 corresponding to the HARQ process number for the cell with the smallest serving cell index. Each block is 0, 1, 2, 3. 4 or 5 bits determined by higher layer parameter *harq-ProcessNumberSizeDCI-1-3* configured for the cell correponding to the block.

- Downlink assignment index - number of bits as defined in the following
    - 4 bits if the higher layer parameter *pdsch-HARQ-ACK-Codebook=dynamic,* where the 2 MSB bits are the counter DAI and the 2 LSB bits are the total DAI;
    - 0 bits otherwise.

    If the UE is configured with a PUCCH-SCell, *pdsch-HARQ-ACK-Codebook* is replaced by *pdsch-HARQ-ACK-Codebook-secondaryPUCCHgroup-r16* if present for the secondary PUCCH group.

    If higher layer parameter *priorityIndicatorDCI-1-3* is configured, if the bit width of the Downlink assignment index in DCI format 1_3 for one HARQ-ACK codebook is not equal to that of the Downlink assignment index in DCI format 1_3 for the other HARQ-ACK codebook, a number of most significant bits with value set to '0' are inserted to smaller Downlink assignment index until the bit width of the Downlink assignment index in DCI format 1_3 for the two HARQ-ACK codebooks are the same.

- TPC command for scheduled PUCCH - 2 bits as defined in Clause 7.2.1 of [5, TS 38.213]
- PUCCH resource indicator - 3 bits as defined in Clause 9.2.3 of [5, TS 38.213]
- PDSCH-to-HARQ_feedback timing indicator - 0, 1, 2, or 3 bits as defined in Clause 9.2.3 of [5, TS 38.213]. The bitwidth for this field is determined as $\lceil \log_2(I) \rceil$ bits, where *I* is the number of entries in the higher layer parameter *dL-DataToUL-ACK.*

    If higher layer parameter *priorityIndicatorDCI-1-3* is configured, if the bit width of the PDSCH-to-HARQ_feedback timing indicator in DCI format 1_3 for one HARQ-ACK codebook is not equal to that of the PDSCH-to-HARQ_feedback timing indicator in DCI format 1_3 for the other HARQ-ACK codebook on the same cell for PUCCH transmission, a number of most significant bits with value set to '0' are inserted to smaller PDSCH-to-HARQ_feedback timing indicator until the bit width of the PDSCH-to-HARQ_feedback timing indicator in DCI format 1_3 for the two HARQ-ACK codebooks are the same.

    If higher layer parameter *pucch-sSCellDynDCI-1-3* is configured, if the bit width of the PDSCH-to-HARQ_feedback timing indicator in DCI format 1_3 associated with one cell for PUCCH transmission is not equal to that of the PDSCH-

to-HARQ_feedback timing indicator in DCI format 1_3 associated with the other cell for PUCCH transmission, a number of most significant bits with value set to '0' are inserted to smaller PDSCH-to-HARQ_feedback timing indicator until the bit width of the PDSCH-to-HARQ_feedback timing indicator in DCI format 1_3 associated with the two cells are the same.

- One-shot HARQ-ACK request - 0 or 1 bit.
    - 1 bit if higher layer parameter *pdsch-HARQ-ACK-OneShotFeedbackDCI-1-3* or*pdsch-HARQ-ACK-enhType3DCI-1*-3 is configured;
    - 0 bit otherwise.

- Enhanced Type 3 codebook indicator - 0, 1, 2, or 3 bits.
    - 0 bit if *pdsch-HARQ-ACK-enhType3DClfieldDCI-1-3* is not configured;
    - $\lceil \log_2(n_{CB}) \rceil$ bits otherwise, where $n_{CB}$ is the number of entries in the higher layer parameter *pdsch-HARQ-ACK-EnhType3ToAddModList.*

    If the UE is configured with a PUCCH-SCell, *pdsch-HARQ-ACK-EnhType3ToAddModList* is replaced by *pdsch-HARQ-ACK-EnhType3SecondaryList* for the secondary PUCCH group.

- HARQ-ACK retransmission indicator - 0 or 1 bit.
    - 1 bit if higher layer parameter *pdsch-HARQ-ACK-retxDCI-1-3* is configured.
    - 0 bit otherwise.

- Antenna ports - number of bits determined by the following:
    - If *AntennaPortsDCI-1-3= type1a* is configured by higher layer,
        - $\max_{r \in \{1, 2, ..., N_{cell}^{DL,2}\}} M_A(r)$ bits applying to the scheduled cells independently, where $N_{cell}^{DL,2}$ is the number of cells configured by higher layer parameter *ScheduledCell-ListDCI-1-3* in the scheduled cell set. *r* is mapped to the cells according to an ascending order of a serving cell index with r = 1 corresponding to the cell with the smallest serving cell index, and $M_A(r)$ is defined below.

(continued)

- If *AntennaPortsDCI-1-3= type2* is configured by higher layer,

- block number 1, block number 2,..., block number $N_{cell}^{DL}$

Each block corresponds to the Antenna ports information for a scheduled cell, and the blocks are placed according to an ascending order of a serving cell index, with block number 1 corresponding to the Antenna ports information for the cell with the smallest serving cell index. Each block is defined below.

$M_A(r)$ above for the case of *AntennaPortsDCI-1-3 = type1A* or each block above for the case of *Antenna-PortsDCI-1-3 = type2* is defined by the following:

- 4, 5, or 6 bits as defined by Tables 7.3.1.2.2-1/2/3/4 and Tables 7.3.1.2.2-1A/2A/3A/4A, where the number of CDM groups without data of values 1, 2, and 3 refers to CDM groups {0}, {0,1}, and {0, 1,2} respectively. The antenna ports $\{p_0, ... , p_{v-1}\}$ shall be determined according to the ordering of DMRS port(s) given by Tables 7.3.1.2.1-1/2/3/4 or Tables 7.3.1.2.2-1A/2A/3A/4A.

If a UE is configured with both *dmrs-DownlinkForPDSCH-MappingTypeA* and *dmrs-Downlink-ForPDSCH-MappingTypeB,* the bitwidth of this field equals max$\{x_A, x_B\}$, where $x_A$ is the "Antenna ports" bitwidth derived according to *dmrs-DownlinkForPDSCH-MappingTypeA* and $x_B$ is the "Antenna ports" bitwidth derived according to *dmrs-DownlinkForPDSCH-MappingTypeB.* A number of $|x_A - x_B|$ zeros are padded in the MSB of this field, if the mapping type of the PDSCH corresponds to the smaller value of $x_A$ and $x_B$.

- Transmission configuration indication - number of bits determined by the following:

- 0 bit if higher layer parameter *tci-PresentInDCI* is not enabled;

- otherwise $\lceil \log_2(I_{TCI}) \rceil$ bits, where $I_{TCI}$ is the number of entries in the higher layer parameter *tci-ListDCI-1-3.* This field is used to indicate an entry in the higher layer parameter *tci-ListDCI-1-3* according to Table 7.3.1.2.4-5. Each entry in the higher layer parameter *tci-ListDCI-1-3* contains the 'Transmission configuration indication' index for each cell in the scheduled cell set, where the 'Transmission configuration indication' indexes for all the cells are placed according to an ascending order of a serving cell index. Each 'Transmission configuration indication' index is 3 bits as defined in Clause 5.1.5 of [6, TS38.214].

If "Bandwidth part indicator" field indicates a bandwidth part other than the active bandwidth part,

- if the higher layer parameter *tci-PresentInDCI* is not enabled for the CORESET used for the PDCCH carrying the DCI format 1_3,

- the UE assumes *tci-PreseneInDCI* is not enabled for all CORESETs in the indicated bandwidth part;

- otherwise,

- the UE assumes *tci-PresentInDCI* is enabled for all CORESETs in the indicated bandwidth part.

- SRS request - $\lceil \log_2(I_{SRS}) \rceil$ bits, where $I_{SRS}$ is the number of entries in the higher layer parameter *srs-RequestListDCI-1-3*. This field is used to indicate an entry in the higher layer parameter *srs-RequestListDCI-1-3* according to Table 7.3.1.2.4-6. Each entry in the higher layer parameter *srs-RequestListDCI-1-3* contains the 'SRS request' index for each cell in the scheduled cell set, where the 'SRS request' indexes for all the cells are placed according to an ascending order of a serving cell index. Each 'SRS request' index is defined by the following:

- 2 bits as defined by Table 7.3.1.1.2-24 for UEs not configured with *supplementaryUplink* in *ServingCell-Config* in the cell; 3 bits for UEs configured with *supplementaryUplink* in *ServingCellConfig* in the cell where the first bit is the non-SUL/SUL indicator as defined in Table 7.3.1.1.1-1 and the second and third bits are defined by Table 7.3.1.1.2-24. This bit field may also indicate the associated CSI-RS according to Clause 6.1.1.2 of [6, TS 38.214].

- SRS offset indicator - $\lceil \log_2(I_{offset}) \rceil$ bits, where $I_{offset}$ is the number of entries in the higher layer parameter srs-*OffsetListDCI-1-3.* This field is used to indicate an entry in the higher layer parameter *srs-OffsetListDCI-1-3* according to Table 7.3.1.2.4-7. Each entry in the higher layer parameter *srs-OffsetListDCI-1-3* contains the 'SRS offset indicator' index for each cell in the scheduled cell set, where the 'SRS offset indicator' indexes for all the cells are placed according to an ascending order of a serving cell index. Each 'SRS offset indicator' index is defined by the following:

- 0 bit if higher layer parameter *AvailableSlotOffser* is not configured for any aperiodic SRS resource set in the scheduled cell, or if higher layer parameter *AvailableSlotOffset* is configured for at least one aperiodic SRS resource set in the scheduled cell and the maximum number of entries of *availableSlotOffsetList* configured for all aperiodic SRS resource set(s) is 1;

(continued)

- otherwise, $\lceil \log_2(K) \rceil$ bits are used to indicate available slot offset according to Table 7.3.1.1.2-37 and Clause 6.2.1 of [6, TS 38.214], where K is the maximum number of entries of *availableSlotOffsetList* configured for all aperiodic SRS resource set(s) in the scheduled cell;

- DMRS sequence initialization - 1 bit. This field is applied to all the scheduled cells indicated by Scheduled cells indicator field or Frequency domain resource assignment field independently.

- Priority indicator- 0 bit if higher layer parameter *priorityIndicatorDCI-1-3* is not configured; otherwise 1 bit as defined in Clause 9 in [5, TS 38.213].

- ChannelAccess-CPext - 0, 1, 2, 3 or 4 bits. The bitwidth for this field is determined as $\lceil \log_2(I) \rceil$ bits, where *I* is the number of entries in the higher layer parameter *ul-AccessConfigListDCI-1-1* or in Table 7.3.1.1.1-4A if *channelAccessMode-r16* = "*semiStatic*" is provided, for operation in a cell with shared spectrum channel access in frequency range 1, or for operation in frequency range 2-2 if *ChannelAccessMode2-r17* is provided: otherwise 0 bit. One or more entries from Table 7.3.1.2.2-6 or Table 7.3.1.2.2-6A are configured by the higher layer parameter ul-*AccessConfigListDCI-1-1*.

- Minimum applicable scheduling offset indicator - 0 or 1 bit

    - 0 bit if higher layer parameter *minimumSchedulingOffsetK0DCI-1-3* is not configured:

    - x bits otherwise.

---

- SCell dormancy indication - 0 bit if higher layer parameter *SCell-dormancy-indication-Present* is not enabled; otherwise x bits.

- PDCCH monitoring adaptation indication - 0, 1 or 2 bits

    - 0 bit if higher layer parameter *pdcchMonAdaptDCI-1-3* is not enabled;

    - otherwise,

        - 1 or 2 bits, if *searchSpaceGroupIdList-r17* is not configured and if *pdcch-SkippingDurationList* is configured

            - 1 bit if the UE is configured with only one duration by *pdcch-SkippingDurationList;*

            - 2 bits if the UE is configured with more than one duration by *pdcch-SkippingDurationList.*

        - 1 or 2 bits, if *pdcch-SkippingDurationList* is not configured and if *searchSpaceGroupIdList-r17* is configured

            - 1 bit if the UE is configured by *searchSpaceGroupIdList-r17* with search space set(s) with group index 0 and search space set(s) with group index 1, and if the UE is not configured by *searchSpaceGroupIdList-r17* with any search space set with group index 2;

            - 2 bits if the UE is configured by *searchSpaceGroupIdList-r17* with search space set(s) with group index 0, search space set(s) with group index 1 and search space set(s) with group index 2;

        - 2 bits, if *pdcch-SkippingDurationList* is configured and if *searchSpaceGroupIdList-r17* is configured

- PUCCH Cell indicator - 0 or 1 bit.

    - 1 bit if higher layer parameter *pucch-sSCellDynDCI-1-3* is configured.

    - 0 bit otherwise.

If *ScheduledCellCombo-ListDCI-1-3* for the cell set is configured, zeros shall be appended to DCI format 1_3 if needed until the payload size equals the size of DCI format 1_3 that is determined by the configuration of the corresponding active bandwidth part(s) of the scheduled cells in the entry which results in the largest size among the entries in the higher layer parameter *ScheduledCellCombo-ListDCI-1-3*; otherwise, zeros shall be appended to DCI format 1_3 if needed until the payload size equals the size of DCI format 1_3 that is determined by the configuration of the corresponding active bandwidth part(s) of all the cells within the scheduled cell set.

[Regarding BWP change]

The UE may receive a DCI format including a bandwidth part indicator field. The DCI format may be received in a PDCCH monitoring occasion of a currently activated BWP. The bandwidth part indicator field may indicate a BWP (i.e., a BWP to be newly activated after receiving a DCI including the bandwidth part indicator field) to be activated in the future. Therefore, after receiving the DCI format, the UE activates the BWP indicated in the bandwidth part indicator field. That is, after receiving the DCI format, the UE may receive a PDSCH or transmit a PUSCH in the BWP indicated in the bandwidth part indicator field. For convenience in the following description, the indicated BWP is referred to as the BWP indicated in the bandwidth part indicator field.

For reference, each BWP is assigned/allocated/configured with its own unique index. The bandwidth part indicator field may indicate the unique index.

In the following description, if the currently activated BWP and the indicated BWP are different, the DCI format may be referred to as DCI that indicates a BWP switching. In addition, the process in which the currently activated BWP is changed to the indicated BWP may be referred to as a BWP switching (or BWP change).

For reference, in the case of MC-DCI, the bandwidth part indicator field may indicate a single value for multiple cells. For example, when the bandwidth part indicator field indicates "1", the BWP indicated for each of the multiple cells may be a BWP corresponding to "1". Therefore, in the case of MC-DCI, BWP switching may be indicated for multiple cells simultaneously.

When the UE receives DCI in which a switching is indicated, the UE may interpret the information of the received DCI according to the information of the indicated BWP. A process in which the UE interprets the information of the received DCI according to the information of the indicated BWP may be as follows.

- The UE may determine the length of each DCI field and the DCI length, based on the information configured in the currently activated BWP. The UE may blind-decode a PDCCH in the PDCCH monitoring occasion of the currently activated BWP, based on the determined length of the DCI. For convenience, the DCI field obtained here may be referred to as a received DCI field.

- The UE may determine the length of the required DCI field, based on information configured in the indicated BWP. This length may be referred to as a required DCI field length. For reference, the length of the received DCI field (a DCI field length determined based on information configured in the currently activated BWP) may be irrelevant to the indicated BWP. That is, the length of the received DCI field may differ from the length of the DCI field required in the indicated BWP.

- If the received DCI field length is longer than the required DCI field length, the most significant bit (MSB) of the received DCI field may be removed to align the required DCI field length. For example, let the received DCI field length be 10 bits and be [b0,b1,b2,b3,b4,b5,b6,b7,b8,b9]. When the required DCI field length is 6 bits, MSB 4 bits may be excluded and the DCI field may be interpreted by using the remaining 6 bits of [b4, b5, b6, b7, b8, b9]. This process may be referred to as truncation.

- If the received DCI field length is shorter than the required DCI field length, "0" may be added to the most significant bit (MSB) of the received DCI field to align the required DCI field length. For example, let the received DCI field length be 10 bits and be [b0,b1,b2,b3,b4,b5,b6,b7,b8,b9]. When the required DCI field length is 2 bits, 2 bits of "00" is added to the MSB, and the DCI field may be interpreted by using 12 bits of [0, 0, b0, b1, b2, b3, b4, b5, b6, b7, b8, b9].

The series of processes may be referred to as DCI field length alignment (DCI field size alignment).

The disclosure describes a method for performing DCI field length alignment in MC-DCI. More specifically, the DCI field in the MC-DCI may be a second type DCI field. That is, each DCI field may include multiple blocks. Each block may correspond to each cell to be scheduled.

In the disclosure, DCI field length alignment may be performed by using following two methods.

As a first method, the UE may apply the DCI field length alignment described above for each block. This method may be referred to as block-level length alignment or "per block" length alignment. More specifically,

- The UE may determine the length of each DCI field and the DCI length, based on the information configured in the currently activated BWP. The UE may blind-decode a PDCCH in the PDCCH monitoring occasion of the currently activated BWP, based on the length of the DCI. For convenience, the DCI field obtained here may be referred to as a received DCI field. The received DCI field may include multiple blocks. The length of each of the multiple blocks included in the received DCI field may be determined.

- The UE may determine the length of the required DCI field, based on information configured in the indicated BWP. This length may be referred to as a required DCI field length. For reference, the length of the received DCI field may be irrelevant to the indicated BWP. That is, the length of the received DCI field may differ from the length of the DCI field required in the indicated BWP. For reference, the required DCI field may include multiple blocks. In addition, the length of each of the multiple blocks included in the required DCI fields may be determined.

- If the length of the block in the received DCI field is longer than the length of the block in the required DCI field, the most significant bit (MSB) of the block in the received DCI field may be removed to align the length of the block in the required DCI field. If the received DCI field includes multiple blocks, the length may be aligned for each block.

- If the length of the block in the received DCI field is shorter than the length of the block in the required DCI field, "0" may be added to the most significant bit (MSB) of the block in the received DCI field to align the length of the block in the required DCI field.

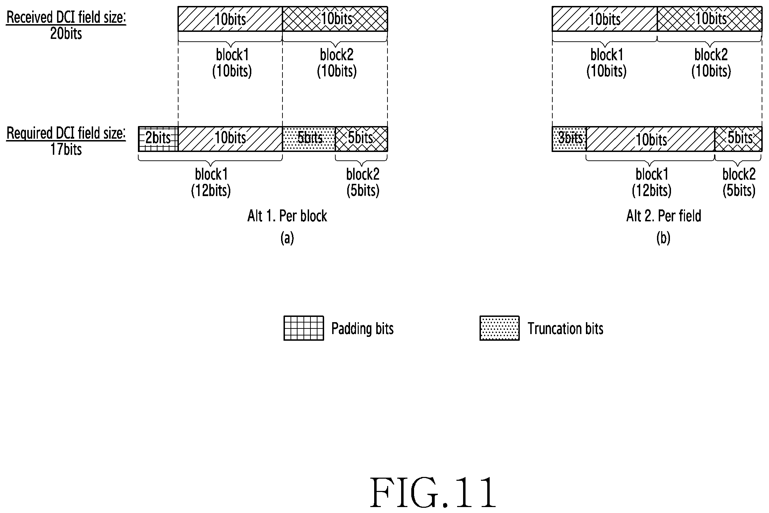

- FIG. 11A is a diagram illustrating an example. Referring to FIG. 11A, the received DCI field is assumed to include two blocks. Each block is assumed to be 10 bits. That is, the received DCI field length is 20 bits. This is assumed to be [b0, b1, b2, b3, b4, b5, b6, b7, b8, b9, b10, b11, b12, b13, b14, b15, b16, b17, b18, b19]. The first 10 bits are the 10 bits corresponding to the first block, and the last 10 bits are the 10 bits corresponding to the second block. Let the first block length included in the required DCI field be 12 bits and the second block length be 5 bits. That is, the required DCI field may require a total of 17 bits.

- The UE may align the first block length. The first block length of the received DCI field is 10 bits and the first block length of the required DCI field is 12 bits, so two bits "0,0" may be added to the MSB of the first block of the received DCI field. Therefore, the first block of the required DCI field may be [0,0,b0,b1,b2,b3,b4,b5,b6,b7,b8,b9]. The UE may align the second block length. The second block length of the received DCI field is 10 bits and the second block length of the required DCI field is 5 bits, so 5 bits may be removed from the MSB of the second block of the received DCI field. Therefore, the second block of the required DCI field may be [b15, b16, b17, b18, b19].

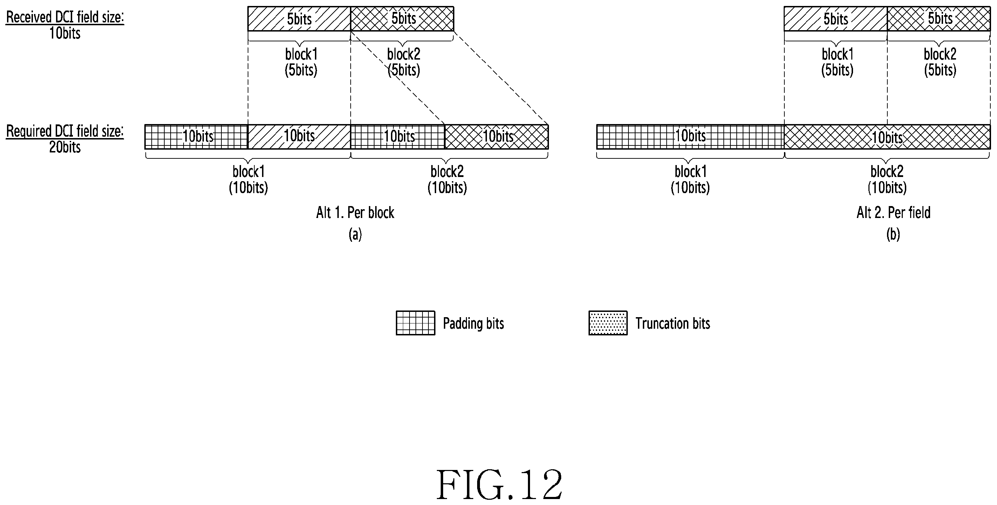

- FIG. 12A is a diagram illustrating an example. Referring to FIG. 12A, the received DCI field is assumed to include two blocks. Each block is assumed to be 5 bits. That is, the received DCI field length is 10 bits. This is assumed to be [b0, b1, b2, b3, b4, b5, b6, b7, b8, b9]. The first 5 bits are the 5 bits corresponding to the first block, and the last 5 bits are the 5 bits corresponding to the second block. Let the first block length included in the required DCI field be 10 bits and the second block length be 10 bits. That is, the required DCI field may require a total of 20 bits.

- The UE may align the first block length. The first block length of the received DCI field is 5 bits and the first block length of the required DCI field is 10 bits, so 5 bits "0,0,0,0,0" may be added to the MSB of the first block of the received DCI field. Therefore, the first block of the required DCI field may be [0,0,0,0,0,b0,b1,b2,b3,b4]. The UE may align the second block length. The second block length of the received DCI field is 5 bits and the second block length of the required DCI field is 10 bits, so 5 bits "0,0,0,0,0" may be added to the MSB of the second block of the received DCI field. Therefore, the second block of the required DCI field may be [0,0,0,0,0,b5,b6,b7,b8,b9].

As a second method, the UE may use the DCI field length alignment described above. This method may be referred to as field-level length alignment or "per field" length alignment. More specifically,

- The UE may determine the length of each DCI field and the DCI length, based on the information configured in the currently activated BWP. The UE may blind-decode a PDCCH in the PDCCH monitoring occasion of the currently activated BWP, based on the length of the DCI. For convenience, the DCI field obtained here may be referred to as a received DCI field. The received DCI field may include multiple blocks. The length of each of the multiple blocks included in the received DCI field may be determined.

- The UE may determine the length of the required DCI field, based on information configured in the indicated BWP. This length may be referred to as a required DCI field length. For reference, the length of the received DCI field may be irrelevant to the indicated BWP. That is, the length of the received DCI field may differ from the length of the DCI field required in the indicated BWP. For reference, the required DCI field may include multiple blocks. In addition, the length of each of the multiple blocks included in the required DCI fields may be determined.

- If the received DCI field length is longer than the required DCI field length, the most significant bit (MSB) of the received DCI field may be removed to align the required DCI field length. In this case, the length of each block included in the received DCI field and the length of each block included in the required DCI field may not be considered.

- FIG. 11B is a diagram illustrating an example. Referring to FIG. 11B, the received DCI field is assumed to include two blocks. Each block is assumed to be 10 bits. That is, the received DCI field length is 20 bits. This is assumed to be [b0,b1,b2,b3,b4,b5,b6,b7,b8,b9,b10,b11,b12,b13,b14,b15,b16,b17,b18,b19]. The first 10 bits are the 10 bits corresponding to the first block, and the last 10 bits are the 10 bits corresponding to the second block. Let the first block length included in the required DCI field be 12 bits and the second block length be 5 bits. That is, the required DCI field may require a total of 17 bits. Therefore, the UE may remove the MSB 3 bits of the received DCI field to obtain 17 bits of [b3, b4, b5, b6, b7, b8, b9, b10, b11, b12, b13, b14, b15, b16, b17, b18, b19]. In addition, 12 bits of [b3, b4, b5, b6, b7, b8, b9, b10, b11, b12, b13, bl4] may be used for the first block interpretation, and 5 bits of [b15, b16, b17, b18, b19] may be used for the second block interpretation.

- If the received DCI field length is shorter than the required DCI field length, "0" may be added to the most significant bit (MSB) of the received DCI field to align the required DCI field length. In this case, the length of each block included in the received DCI field and the length of each block included in the required DCI field may not be considered.

- FIG. 12B is a diagram illustrating an example. Referring to FIG. 12B, the received DCI field is assumed to include two blocks. Each block is assumed to be 5 bits. That is, the received DCI field length is 10 bits. This is assumed to be [b0,b1,b2,b3,b4,b5,b6,b7,b8,b9]. The first 5 bits are the 5 bits corresponding to the first block, and the last 5 bits are the 5 bits corresponding to the second block. Let the first block length included in the required DCI field be 10 bits and the second block length be 10 bits. That is, the required DCI field may require a total of 20 bits. Therefore, the UE may add 10 bits of "0,0,0,0,0,0,0,0,0,0" to the MSB of the received DCI field to obtain 20 bits of [0,0,0,0,0,0,0,0,0,0,b0,b1,b2,b3,b4,b5,b6,b7,b8,b9]. In addition, the first 10 bits of [0,0,0,0,0,0,0,0,0,0] may be used for the first block interpretation, and the last 10 bits of [b1,b2,b3,b4,b5,b6,b7,b8,b9] may be used for the second block interpretation.

The UE may be configured with one of the first to second methods by the base station. That is, the higher layer signal of the base station may configure the MC-DCI and may also be configured with one of the first to second methods by the base station. The UE may use one of the first to second methods according to the configured method. The UE may align the length of each DCI field based on the configured method. In addition, the may interpret the DCI field. The UE may receive a PDSCH or transmit a PUSCH in a BWP indicated for multiple cells according to the interpretation.

For reference, the UE may be configured with one of the first to second methods for all DCI fields. As another method, the UE may be configured with one of the first to second methods for each DCI field. That is, the first DCI field may be configured with the first method and the second DCI field may be configured with the second method.

For reference, the UE may be configured with one of the first to second methods for all BWP changes. As another method, the UE may be configured with one of the first to second methods according to the currently activated BWP. That is, the first method may be configured when the currently activated BWP is BWP#1 and the second method may be configured when the currently activated BWP is BWP#2.

For reference, the UE may be configured with one of the first to second methods for all BWP changes. As another method, the UE may be configured with one of the first to second methods according to the indicated BWP. That is, the first method may be configured when the indicated BWP is BWP#1 and the second method may be configured when the indicated BWP is BWP#2.

For reference, the UE may be configured with one of the first to second methods for all BWP changes. As another method, the UE may be configured with one of the first to second methods according to a combination of the currently activated BWP and the indicated BWP. That is, the first method may be configured when the currently activated BWP is BWP#1 and the indicated BWP is BWP#2, and the second method may be configured when the currently activated BWP is BWP#2 and the indicated BWP is BWP#1.

In the above example, BWP#1 and BWP#2 are just examples, and the same idea of disclosure may be applied to other BWPs.

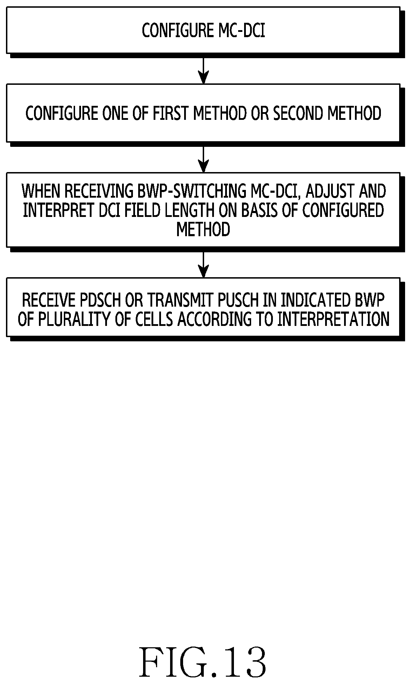

This process is illustrated in the flowchart of FIG. 13.

In the disclosure, the UE may optionally use one of the first method to the second method without a separate configuration. Referring to FIGS. 11 to 12, the following may be observed.

- Referring to FIG. 11, the received DCI field length is 20 bits and the required DCI field length is 17 bits. However, in the case of the first method, 15 bits may be used among 20 bits. In addition, 2 bits of "0,0" may be added to determine 17 bits. In the case of the second method, 17 bits may be used among 20 bits. Therefore, the first method is inefficient in using bits. That is, when the received DCI field length is the same as or longer than the required DCI field length, the second method may be more efficient.
- Referring to FIG. 12, the received DCI field length is 10 bits and the required DCI field length is 20 bits. In the second method, all the bits of the first block may be all "0". However, in the first method, the first block and the second block may include 5 bits. That is, when the received DCI field length is shorter than the required DCI field length, the first method may be more efficient.

Based on the above observation, in an embodiment of the disclosure, the UE may determine the first method and the second method as follows.

The UE may be configured with MC-DCI by the base station. When the UE receives MC-DCI indicating a BWP change, the UE may determine the received DCI field length and the required DCI field length for each DCI field. The received DCI field length is determined based on the configurations configured in the BWP (or BWP pair) that monitors the MC-DCI by the DCI field length included in the received MC-DCI. The required DCI field length is determined based on the configurations configured in the indicated BWP (or BWP pair). The UE may select one of the first and second methods for each DCI field, based on the received DCI field length and the required DCI field length.

For example, when the received DCI field length is equal to or longer than the required DCI field length, the UE may select the second method. When the received DCI field length is shorter than the required DCI field length, the UE may select the first method.

For example, when the received DCI field length is longer than the required DCI field length, the UE may select the second method. When the received DCI field length is shorter than the required DCI field length, the UE may select the first method. When the received DCI field length is equal to the required DCI field, a separate length alignment may not be performed.

For example, when the received DCI field length is equal to or longer than the required DCI field length, the UE may select the second method. When the received DCI field length is shorter than the required DCI field length, the UE may be configured with the first method to the second method by the base station. That is, the UE may be configured with the first method to the second method by the base station through a higher layer signal (an RRC signal). The configured method may be used when the received DCI field length is shorter than the required DCI field length.

The UE may perform DCI field length alignment for each DCI field, based on the determined method. In addition, the UE may interpret the DCI field. The UE may perform PDSCH reception or PUSCH transmission in the indicated BWP of multiple cells according to the interpretation.

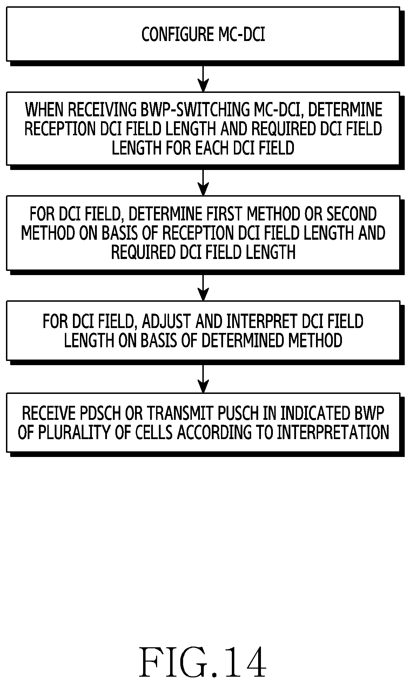

This process is illustrated in the flowchart of FIG. 14.

The UE operation corresponding to FIG. 14 is shown in the following table.

| < First description> |
| --- |
| If a bandwidth part indicator field is configured in a DCI format and indicates an UL BWP or a DL BWP different from the active UL BWP or DL BWP, respectively, the UE shall<br>- for each information field in the MC-DCI format<br>    - if the size of the information field is larger than the one required for the DCI format interpretation for the UL BWP or DL BWP that is indicated by |
| the bandwidth part indicator, **the UE prepends zeros to the information field until its size is the one required for the interpretation of the information field** for the UL BWP or DL BWP prior to interpreting the DCI format information fields, respectively<br>    - if the size of the information field is smaller than the one required for the DCI format interpretation for the UL BWP or DL BWP that is indicated by the bandwidth part indicator, **the UE prepends zeros to each block in the information field until its size is the one required for the interpretation of the block of the information field** for the UL BWP or DL BWP prior to interpreting the DCI format information fields, respectively<br>- set the active UL BWP or DL BWP to the UL BWP or DL BWP indicated by the bandwidth part indicator in the DCI format |

| < Second description > |
| --- |
| If a bandwidth part indicator field is configured in a DCI format and indicates an UL BWP or a DL BWP different from the active UL BWP or DL BWP, respectively, the UE shall<br>- if the size of the information field is larger than the one required for the DCI format interpretation for the UL BWP or DL BWP that is indicated by the bandwidth part indicator,<br>    - for each information field in the MC-DCI format, the UE prepends zeros to the information field until its size is the one required for the interpretation of the information field for the UL BWP or DL BWP prior to interpreting the DCI format information fields, respectively<br>- if the size of the information field is smaller than the one required for the DCI format interpretation for the UL BWP or DL BWP that is indicated by the bandwidth part indicator,<br>    - for each block of each information in the MC-DCI format, the UE prepends zeros to the block in the information field until its size is the one required for the interpretation of the block of the information field for the UL BWP or DL BWP prior to interpreting the DCI format information fields, respectively<br>- set the active UL BWP or DL BWP to the UL BWP or DL BWP indicated by the bandwidth part indicator in the DCI format |

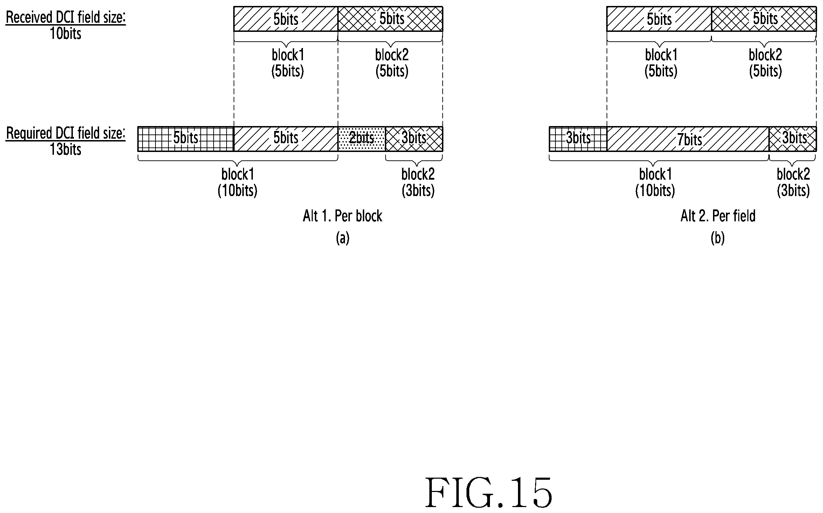

FIG. 15 illustrates another example considered in the disclosure.

The received DCI field in FIG. 15 may include two blocks. The first block length of the received DCI field may be 5 bits and the second block length may be 5 bits. Therefore, the received DCI field length may be 10 bits. The required DCI field may include two blocks. The first block length of the received DCI field may be 10 bits and the second block length may be 3 bits. Therefore, the required DCI field length may be 13 bits.

FIG. 15A illustrates DCI field length alignment according to the first method. The first block may add 5 bits of "0,0,0,0,0" to the MSB, and the second block may exclude 2 bits from the MSB. Therefore, according to the first method, the UE may use just 8 bits among 10 bits included in the received DCI field.

FIG. 15A illustrates DCI field length alignment according to the second method. 3 bits of "0,0,0" may be added to the MSB of the received DCI field, so 13 bits for the required DCI field may be determined. Among the 13 bits, the first 10 bits may correspond to the first block and the last 3 bits may correspond to the second block. Therefore, 3 bits of "0,0,0" may be included the 10 bits of the first block. According to the second method, the UE may use all 10 bits included in the received DCI field.

Therefore, the second method may be a better method from the perspective of bit usage efficiency of the received DCI field.

As an embodiment of the disclosure, the UE may select a method for maximizing bit usage efficiency.

The UE may be configured with MC-DCI by the base station. When the UE receives MC-DCI indicating a BWP change, the UE may determine the received DCI field length and the required DCI field length for each DCI field. The received DCI field length is determined based on the configurations configured in the BWP (or BWP pair) that monitors the MC-DCI by the DCI field length included in the received MC-DCI. The required DCI field length is determined based on the configurations configured in the indicated BWP (or BWP pair).

The UE may determine the number of bits included in the required DCI field among the bits included in the received DCI field by using the first method. That is, the number of bits used for interpretation may be determined among the bits included in the received DCI field. The UE may determine the number of bits included in the required DCI field among the bits included in the received DCI field by using the second method. That is, the number of bits used for interpretation may be determined among the bits included in the received DCI field.

The UE may determine one method based on the number of bits according to the first method and the number of bits according to the second method. Here, a method corresponding to the number of bits may be selected. For example, when the number of bits according to the first method is greater than the number of bits according to the second method, the first method may be selected. For reference, when the two methods have the same number, the UE may determine one of the first method to the second method as the other method. Here, the other method may be a determined method (e.g., the second method) or a method configured by a higher layer signal.

The UE may perform DCI field length alignment for each DCI field, based on the determined method. In addition, the UE may interpret the DCI field. The UE may perform PDSCH reception or PUSCH transmission in the indicated BWP of multiple cells according to the interpretation.

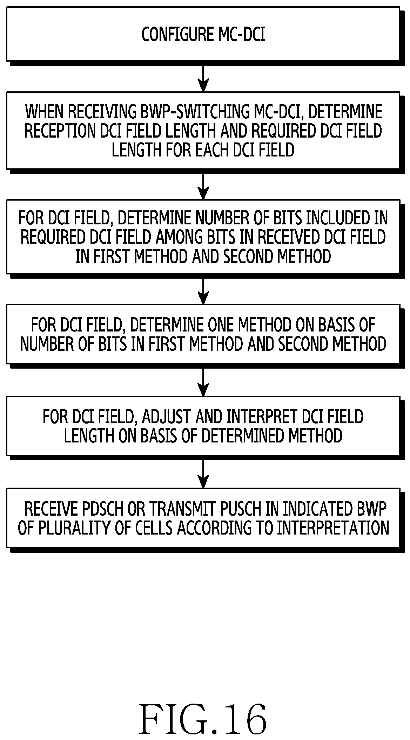

This process is illustrated in the flowchart of FIG. 16.

In the preceding embodiment, the UE maximized the bit usage efficiency of the received DCI field. Referring to FIG. 15, the UE may select the second method. However, referring to FIG. 15B, the UE may identify that "0"s are added only to one block. That is, although the bit usage efficiency of the received DCI field is maximized, there may be a difference between blocks.

Another embodiment of the disclosure is a method of equally distributing bits to each block while maximizing the bit usage efficiency of the received DCI field.

The UE may determine the length of the received DCI field. This length may be referred to as L. For reference, the received DCI field may include multiple blocks. It is assumed that N blocks are included. Let the length of each block be $L\_1$, $L\_2$, ..., and $L\_N$, respectively. Here, $L\_1 + L\_2 + ... + L\_N = L$.

The UE may determine the length of the required DCI field. This length may be referred to as R. For reference, the received DCI field may include multiple blocks. It is assumed that N blocks are included. Let the length of each block be $R\_1$, $R\_2$, ..., and $R\_N$, respectively. Here, $R\_1 + R\_2 + ... + R\_N = R$.

The UE may change the lengths of the blocks in the received DCI field to be proportional to the lengths of the blocks in the required DCI field. Let the lengths of the blocks in the received DCI field be $S\_1$, $S\_2$, ..., and $S\_N$. $S\_1+S\_2+...+S\_N=L$. To make it proportional to the lengths of the blocks in the required DCI field, $S\_i$ may be obtained as follows.

$$S\_i = f(L*(R\_i/R)), i=1,\ldots, N-1$$

$$S\_N = L-(S\_1+S\_2+\ldots S\_\{N-1\})$$

Here, f(x) may be one of ceil(x), floor(x), and round(x). ceil(x) is a ceiling function, floor(x) is a floor function, and round(x) is a rounding function.

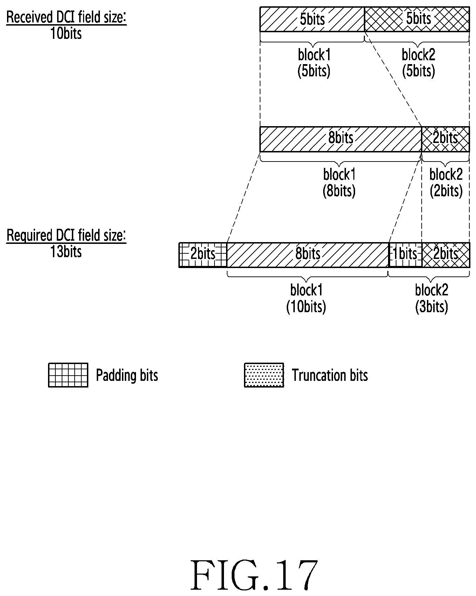

Referring to FIG. 17, this is an example in which L=10, $R\_1$=10, and $R\_2$=3. The UE may calculate $S\_1$ = ceil(L*$R\_1$/R) = ceil(10*10/13)=8, $S\_2$ = L-$S\_1$= 2. That is, although 10 bits of the received DCI field are composed of 5 bits of the first block and 5 bits of the second block, but the UE may assume that the 10 bits of the received DCI field are composed of 8 bits of the first block and 2 bits of the second block for DCI field length alignment. In addition, since the first block of the required DCI field is 10 bits, 2 bits of "0,0" may be added to the first block (8 bits) of the received DCI field. Since the second block of the required DCI field is 3 bits 1 bit of "0" may be added to the second block (2 bits) of the second block (2 bits) of the received DCI field. Therefore, according to an embodiment of the disclosure, the UE may use all 10 bits of the received DCI field, and may equally add "0" to the blocks.

As another method of the disclosure, the UE may minimize the number of blocks to which "0" is added. If "0" is added to a block by DCI field length alignment, a fixed bit value is added to the block. Therefore, the base station may be unable to perform free indication. This method is for correctly indicating information of as many blocks as possible.

The UE may determine the length of the received DCI field. This length may be referred to as L. For reference, the received DCI field may include multiple blocks. It is assumed that N blocks are included. Let the length of each block be $L\_1$, $L\_2$, ..., and $L\_N$, respectively. Here, $L\_1 + L\_2 + ... + L\_N = L$.

The UE may determine the required length of the DCI field. This length may be referred to as R. For reference, the received DCI field may include multiple blocks. It is assumed that N blocks are included. Let the length of each block be $R\_1$, $R\_2$, ..., and $R\_N$, respectively. Here, $R\_1 + R\_2 + ... + R\_N = R$.

The UE may change the lengths of the blocks in the received DCI field to be proportional to the lengths of the blocks in the required DCI field. Let the lengths of the blocks in the received DCI field be $S\_1, S\_2, ...,$ and $S\_N$. $S\_1+S\_2+...+S\_N=L$. To make it proportional to the lengths of the blocks in the required DCI field, $S\_i$ may be obtained as follows.

If $R\_1 \leq L$, $S\_1 = R\_1$. If $S\_1+R\_2 \leq L$, $S\_2 = R\_2$. In addition, if $S\_1+S\_2+...+S\_\{k-l\}+R\_k \leq L$, $S\_k = R\_k$. If $S\_1+S\_2+...+S\_\{k-l\}+R\_k > L$, $S\_k = L-(S\_1+S\_2+...+S\_\{k-1\})$ and $S\_\{k+1\}= S\_\{k+2\}=... S\_N=0$. That is, the required number of bits may be allocated in ascending order of the block index.

In the disclosure, the ascending order of the block index is used. The block index may be in the order included in the DCI field. As another method, the block index may be determined according to the lengths of the blocks included in the DCI field. For example, a block having a shorter length may have a lower index, and a block having a longer length may have a higher index. When this method is used, bits may be preferentially allocated to the block of short length, and the number of blocks to which "0" is not added may be maximized.

In another embodiment of the disclosure, the UE may preferentially allocate bits to a block corresponding to one cell (or a predetermined number of cells), thereby preventing "0" from being added to the block corresponding to the cell. This may be possible when one cell (or a predetermined number of cells) is (are) to perform a more important role than other cells. For example, one cell may be a cell for monitoring a PDCCH, a Pcell, or a cell for transmitting a PUCCH. Alternatively, it may be a cell having the lowest cell index.

Another embodiment of the disclosure relates to a case where one block in the FDRA field corresponds to all "0"s added by DCI field length alignment. Referring to FIG. 12B, the first block may be [0, 0, 0, 0, 0, 0, 0, 0, 0, 0], and all "0"s here may be "0"s added by the DCI field length alignment. In this case, the UE may perform the following operations.

The UE may consider that there is no PDSCH (or PUSCH) scheduled according to the FDRA field. That is, the UE may not receive the PDSCH (or PUSCH) in a cell corresponding to the first block. This may be independent of the FDRA type configured for the UE.

In another method, the UE may consider the above case to be an error case. That is, the base station may not configure the UE with the above configuration in which all bits are "0". In case of receiving the DCI indicating the above operation, the UE may discard the DCI. The UE may not perform an operation indicated by the discarded DCI.

The UE may configure or determine the number of blocks corresponding to the BWP indices of the cells from the base station. More specifically, the UE may be configured with one or multiple BWPs for each cell, and each BWP may have a unique index. The unique index may be one of 1, 2, 3, and 4. For example, Cell A (or Cell#A) may be configured with two BWPs and the two BWPs may have indices 1 and 2, Cell B (or Cell#B) may be configured with two BWPs and the three BWPs may have indices 1, 2, and 3, Cell C (or Cell#C) may be configured with two BWPs and the two BWPs may have indices 1 and 2, and Cell D (or Cell#D) may be configured with four BWPs and the four BWPs may have indices 1, 2, 3, and 4.

Each BWP in each cell may include different higher-layer configuration. The UE may determine the DCI format length or the field length included in the DCI format, based on the higher-layer configuration. For example, maxNrofCodeWordsScheduledByDCI may be configured as higher-layer configuration information for configuring the number of transport blocks in one BWP of one cell. When maxNrofCodeWordsScheduledByDCI is configured to 2, the UE may determine that the PDSCH scheduled by the DCI format in the BWP of the cell may include up to two transport blocks. Therefore, the DCI field corresponding to the BWP of the cell in the DCI format may include a modulation and coding scheme (MCS) value, a new data indicator (NDI) value, and a redundancy value (RV) for the first transport block, and an MCS value, an NDI value, and an RV value for the second transport block. If maxNrofCodeWordsScheduledByDCI is not configured to 2 in one BWP of one cell, the UE may determine that DCI format may schedule up to 1 transport block in the BWP of the cell. Therefore, the DCI field corresponding to the BWP of the cell in the DCI format may include a modulation and coding scheme (MCS) value, a new data indicator (NDI) value, and a redundancy value (RV) for the first transport block, but may not include an MCS value, an NDI value, and an RV value for the second transport block.

When the UE monitors a DCI format that schedules PDSCHs in multiple cells, the length of the DCI format or the lengths of DCI fields included in the DCI format may be determined based on the BWP already activated in each cell. That is, the already activated BWPs in cell A (Cell#A) to cell D (Cell#D) may be BWPs having index 1.

A DCI format that schedules PDSCHs in multiple cells may include a single BWP index. For example, the DCI format may indicate 1 as a BWP index value. In this case, the DCI format may schedule PDSCHs for scheduling PDSCHs in multiple cells in a BWP having a BWP index of 1 in multiple cells. If there is no BWP corresponding to the index in one cell, the UE may schedule a PDSCH in an already activated BWP, which does not correspond to the index, in the cell.

When the DCI format that schedules PDSCHs in multiple cells indicates a BWP other than an already activated BWP, the UE may have a different required DCI field length. More specifically, the length of a DCI field, which is determined according to the higher-layer configuration of an activated BWP may be a first length, and the length of a DCI field, which is determined according to the higher-layer configuration of an indicated BWP may be a second length. The UE may obtain a DCI field of the first length from the DCI format, but since the BWP in which the PDSCH is scheduled is the indicated BWP, a DCI field of the second length may be required. To this end, the UE operation as shown in Table 19 is defined.

[Table 19]

| If a bandwidth part indicator field is configured in a DCI format and indicates an UL BWP or a DL BWP different from the active UL BWP or DL BWP, respectively, the UE shall |
| --- |
| - for each information field in the DCI format<br><br>    - if the size of the information field is smaller than the one required for the DCI format interpretation for the UL BWP or DL BWP that is indicated by the bandwidth part indicator, the UE prepends zeros to the information field until its size is the one required for the interpretation of the information field for the UL BWP or DL BWP prior to interpreting the DCI format information fields, respectively<br><br>    - if the size of the information field is larger than the one required for the DCI format interpretation for the UL BWP or DL BWP that is indicated by the bandwidth part indicator, the UE uses a number of least significant bits of the DCI format equal to the one required for the UL BWP or DL BWP indicated by bandwidth part indicator prior to interpreting the DCI format information fields, respectively<br><br>    - for a DCI format 0_3, or for a DCI format 1_3, and for an information field that includes a number of blocks [5, TS 38.212], the above procedures apply separately for each block of the information field<br><br>- set the active UL BWP or DL BWP to the UL BWP or DL BWP indicated by the bandwidth part indicator in the DCI format |

Referring to Table 19, when the first length is longer than the second length, the UE may interpret the DCI field by using only the first length of the DCI field having the first length. When the first length is shorter than the second length, the UE may interpret the DCI field by padding "0" to the most significant bit (MSB) of the DCI field having the first length, thereby making the first length.

Referring to Table 19, when the DCI field includes multiple blocks, the above operation may be performed for each block. In the following description, performing the above operation for each block may be referred to as block-based DCI field length alignment. In the disclosure, a specific method for performing the above operation for each block is proposed.

In the following description, a DCI field may be included in a DCI format that schedules PDSCHs in multiple cells and may include at least one block.

The DCI field corresponding to the activated BWP in the cells may include a first number of blocks, and the DCI field corresponding to the indicated BWP in the cells may include a second number of blocks. The first number and the second number may be the same or different from each other.

For convenience of description, let the blocks of the first number (N1) corresponding to the active BWP be {active-Block#1, active-Block#2, ..., active-Block#N1}, and let the blocks of the second number (N2) corresponding to the indicated BWP be {indicated-Block#1, indicated-Block#2, ..., indicated-Block#N2}. Here, active-Block#X denotes the block having index X in the block. X may have one of the values from the number of blocks (N1) starting from 1. Indicated-Block#Y denotes the block having index Y in the block. Y may have one of the values from the number of blocks (N2) starting from 1. The index of the block in a DCI field may be determined in ascending order.

The first number and the second number may be the same, but the cells corresponding to the blocks of the first number may be different from the cells corresponding to the blocks of the second number. More specifically, let the first and second numbers be 3. The three blocks included in the DCI field corresponding to the already activated BWPs in the cells may be blocks corresponding to cells A, C, and D (active-Block#1 corresponds to cell A, active-Block#2 corresponds to cell C, and active-Block#3 corresponds to cell D). However, the three blocks included in the DCI field corresponding to the indicated BWPs in the cells may be blocks corresponding to cells A, B, and C (indicated-Block#1 corresponds to cell A, indicated-Block#2 corresponds to cell B, and indicated-Block#3 corresponds to cell C).

The UE may perform DCI field length alignment for each block as follows.

As a first method, the DCI field length alignment for each block by the UE may be performed based on blocks (active-Block#X and indicated-Block#Y, X=Y) having the same block index.

- The length of active-Block#1 may be considered as the first length and indicated-Block#1 as the second length, so that the first length may be aligned to the second length.
- The length of active-Block#2 may be considered as the first length and indicated-Block#2 as the second length, so that the first length may be aligned to the second length.
- The length of active-Block#3 may be considered as the first length and indicated-Block#3 as the second length, so that the first length may be aligned to the second length.

As a second method, the DCI field length alignment for each block by the UE may be performed based on blocks (active-Block#X and indicated-Block#Y, the cell index corresponding to active-Block#X and the cell index corresponding to indicated-Block#Y are the same) having the same cell index corresponding to the cell. For reference, a block corresponding to a specific cell may not be included in the DCI field. For example, the DCI field corresponding to the BWP already activated in the cells may include blocks corresponding to cells A, C, and D (active-Block#1 corresponds to cell A, active-Block#2 corresponds to cell C, and active-Block#3 corresponds to cell D), but may not include a block corresponding to cell B. The DCI field corresponding to the indicated BWP in the cells may include blocks corresponding to cells A, B, and C (indicated-Block#1 corresponds to cell A, indicated-Block#2 corresponds to cell B, and indicated-Block#3 corresponds to cell C), but may not include a block corresponding to cell D. According to the disclosure, the length of the block that is not included may be considered as 0 bit.

- The length of active-Block#1 corresponding to cell A may be considered as the first length and indicated-Block#1 as the second length, so that the first length may be aligned to the second length.
- Since there is no block corresponding to cell B among the blocks {active-Block#1, active-Block#2, and active-Block#3} corresponding to the already activated BWP, the first length may be considered as 0 bit and indicated-Block#2 may be considered as the second length, so that the first length may be aligned to the second length.
- The length of active-Block#2 corresponding to cell C may be considered as the first length and indicated-Block#3 as the second length, so that the first length may be aligned to the second length.
- The length of active-Block#1 corresponding to cell D may be considered as a first length, and since there is no block corresponding to cell D among the blocks {indicated-Block#1, indicated-Block#2, and indicated-Block#3} corresponding to the indicated BWP, the second length may be considered as 0 bit so that the first length may be aligned to the second length.

When the first number and the second number are different, the cells corresponding to the blocks of the first number may be different from the cells corresponding to the blocks of the second number. Let the first number be 3 and the second number be 4. The three blocks included in the DCI field corresponding to the already activated BWPs in the cells may be blocks corresponding to cells A, C, and D (active-Block#1 corresponds to cell A, active-Block#2 corresponds to cell C, and active-Block#3 corresponds to cell D). However, the four blocks included in the DCI field corresponding to the indicated BWPs in the cells may be blocks corresponding to cells A, B, C, and D (indicated-Block#1 corresponds to cell A, indicated-Block#2 corresponds to cell B, indicated-Block#3 corresponds to cell C, and indicated-Block#4 corresponds to cell D)

The UE may perform DCI field length alignment for each block as follows.

As a first method, the DCI field length alignment for each block by the UE may be performed based on blocks (active-Block#X and indicated-Block#Y, X=Y) having the same block index. If a block having a specific index is not included in the DCI field, the UE may regard the length of the block as 0 bit.

- The length of active-Block#1 may be considered as the first length and indicated-Block#1 as the second length, so that the first length may be aligned to the second length.
- The length of active-Block#2 may be considered as the first length and indicated-Block#2 as the second length, so that the first length may be aligned to the second length.
- The length of active-Block#3 may be considered as the first length and indicated-Block#3 as the second length, so that the first length may be aligned to the second length.
- The length of active-Block#4 may be considered as the first length and indicated-Block#4 as the second length, so that the first length may be aligned to the second length. Here, since the DCI field does not include indicated-Block#4, indicated-Block#4 may be considered as 0 bit.

As a second method, the DCI field length alignment for each block by the UE may be performed based on blocks (active-Block#X and indicated-Block#Y, the cell index corresponding to active-Block#X and the cell index corresponding to indicated-Block#Y are the same) having the same cell index corresponding to the cell. For reference, a block corresponding to a specific cell may not be included in the DCI field. For example, the DCI field corresponding to the BWP already activated in the cells may include blocks corresponding to cells A, C, and D (active-Block#1 corresponds to cell A, active-Block#2 corresponds to cell C, and active-Block#3 corresponds to cell D), but may not include a block corresponding to cell B.

- The length of active-Block#1 corresponding to cell A may be considered as the first length and indicated-Block#1 as the second length, so that the first length may be aligned to the second length.
- Since there is no block corresponding to cell B among the blocks {active-Block#1, active-Block#2, and active-Block#3} corresponding to the already activated BWP, the first length may be considered as 0 bit and indicated-Block#2 may be considered as the second length, so that the first length may be aligned to the second length.
- The length of active-Block#2 corresponding to cell C may be considered as the first length and indicated-Block#3 as the second length, so that the first length may be aligned to the second length.

- The length of active-Block#3 corresponding to cell D may be considered as the first length and indicated-Block#3 as the second length, so that the first length may be aligned to the second length.

Table 20 shows the UE's operations according to method 1. Compared to Table 19, Table 20 shows that when performing DCI field length alignment for each block, the UE may perform length alignment for blocks having the same index, based on the index of the block.

[Table 20]

| If a bandwidth part indicator field is configured in a DCI format and indicates an UL BWP or a DL BWP different from the active UL BWP or DL BWP, respectively, the UE shall<br>    - for each information field in the DCI format<br>        - if the size of the information field is smaller than the one required for the DCI format interpretation for the UL BWP or DL BWP that |
|---|
| is indicated by the bandwidth part indicator, the UE prepends zeros to the information field until its size is the one required for the interpretation of the information field for the UL BWP or DL BWP prior to interpreting the DCI format information fields, respectively<br>        - if the size of the information field is larger than the one required for the DCI format interpretation for the UL BWP or DL BWP that is indicated by the bandwidth part indicator, the UE uses a number of least significant bits of the DCI format equal to the one required for the UL BWP or DL BWP indicated by bandwidth part indicator prior to interpreting the DCI format information fields, respectively<br>        - for a DCI format 0_3, or for a DCI format 1_3, and for an information field that includes a number of blocks [5, TS 38.212], the above procedures apply separately for each block **with the same index** of the information field<br>    - set the active UL BWP or DL BWP to the UL BWP or DL BWP indicated by the bandwidth part indicator in the DCI format |

Table 21 shows the UE's operations according to method 2. Compared to Table 19, Table 21 shows that when performing DCI field length alignment for each block, the UE may perform length alignment for blocks having the same index, based on the cell index corresponding to the block.

[Table 21]

| If a bandwidth part indicator field is configured in a DCI format and indicates an UL BWP or a DL BWP different from the active UL BWP or DL BWP, respectively, the UE shall<br>    - for each information field in the DCI format<br>        - if the size of the information field is smaller than the one required for the DCI format interpretation for the UL BWP or DL BWP that is indicated by the bandwidth part indicator, the UE prepends zeros to the information field until its size is the one required for the interpretation of the information field for the UL BWP or DL BWP prior to interpreting the DCI format information fields, respectively |
|---|
| - if the size of the information field is larger than the one required for the DCI format interpretation for the UL BWP or DL BWP that is indicated by the bandwidth part indicator, the UE uses a number of least significant bits of the DCI format equal to the one required for the UL BWP or DL BWP indicated by bandwidth part indicator prior to interpreting the DCI format information fields, respectively<br>    - for a DCI format 0_3, or for a DCI format 1_3, and for an information field that includes a number of blocks **for more than one serving cells** [5, TS 38.212], the above procedures apply separately for each block **with the same serving cell index** of the information field<br>    - set the active UL BWP or DL BWP to the UL BWP or DL BWP indicated by the bandwidth part indicator in the DCI format |

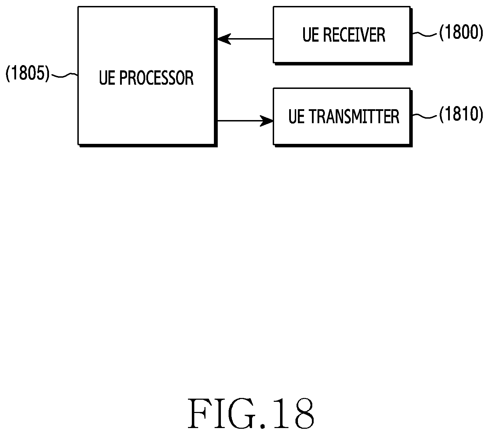

FIG. 18 illustrates a structure of a UE in a wireless communication system according to an embodiment of the disclosure.

Referring to FIG. 18, the UE may include a transceiver, which refers to a UE receiver 1800 and a UE transmitter 1810 as a whole, a memory (not illustrated), and a UE processor 1805 (or UE controller or processor). The UE transceiver 1800 and 1810, the memory, and the UE processor 1805 may operate according to the above-described communication

EP 4 779 919 A1

methods of the UE. However, components of the UE are not limited to the above-described example. For example, the UE may include a larger or smaller number of components than the above-described components. Furthermore, the transceiver, the memory, and the processor may be implemented in the form of a single chip.

The transceiver may transmit/receive signals with base stations. The signals may include control information and data. To this end, the transceiver may include an RF transmitter configured to up-convert and amplify the frequency of transmitted signals, an RF receiver configured to low-noise-amplify received signals and down-convert the frequency thereof, and the like. However, this is only an embodiment of the transceiver, and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for the operation of the UE. In addition, the memory may store control information or data included in signals transmitted/received by the UE. The memory may include storage media such as a ROM, a RAM, a hard disk, a CD-ROM, and a DVD, or a combination of storage media. In addition, the memory may include multiple memories.

Furthermore, the processor may control a series of processes so that the UE can operate according to the above-described embodiments. For example, the processor may control components of the UE to receive DCI configured in two layers so as to simultaneously receive multiple PDSCHs. The processor may include multiple processors, and the processor may perform operations of controlling the components of the UE by executing programs stored in the memory.

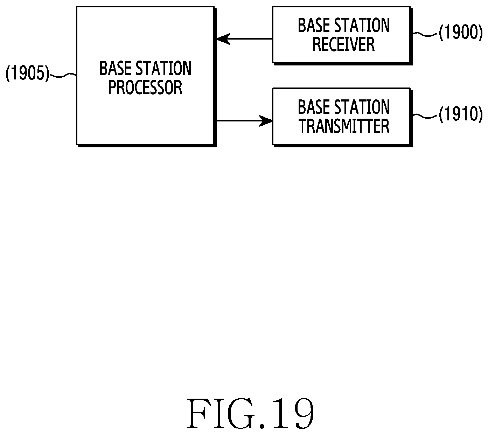

FIG. 19 illustrates a structure of a base station in a wireless communication system according to an embodiment of the disclosure.

Referring to FIG. 19, the base station may include a transceiver, which refers to a base station receiver 1900 and a base station transmitter 1910 as a whole, a memory (not illustrated), and a base station processor 1905 (or base station controller or processor). The base station transceiver 1900 and 1910, the memory, and the base station processor 1905 may operate according to the above-described communication methods of the base station. However, components of the base station are not limited to the above-described example. For example, the base station may include a larger or smaller number of components than the above-described components. Furthermore, the transceiver, the memory, and the processor may be implemented in the form of a single chip.

The transceiver may transmit/receive signals with UEs. The signals may include control information and data. To this end, the transceiver may include an RF transmitter configured to up-convert and amplify the frequency of transmitted signals, an RF receiver configured to low-noise-amplify received signals and down-convert the frequency thereof, and the like. However, this is only an embodiment of the transceiver, and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for the operation of the base station. In addition, the memory may store control information or data included in signals transmitted/received by the base station. The memory may include storage media such as a ROM, a RAM, a hard disk, a CD-ROM, and a DVD, or a combination of storage media. In addition, the memory may include multiple memories.

The processor may control a series of processes so that the base station can operate according to the above-described embodiments of the disclosure. For example, the processor may control components of the base station to configure DCI configured in two layers including allocation information regarding multiple PDSCHs and to transmit the same. The processor may include multiple processors, and the processor may perform operations of controlling the components of the base station by executing programs stored in the memory.

Methods disclosed in the claims or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a terminal. As an example, a part of a first embodiment of the disclosure may be combined with a part of a second embodiment to operate a base station and a terminal. Moreover, although the above embodiments have been described based on the FDD LTE system, other variants based on the technical idea of the embodiments may also be implemented in other communication systems such as TDD LTE, and 5G, or NR systems.

In the drawings in which methods of the disclosure are described, the order of the description does not always correspond to the order in which steps are performed, and the order relationship between the steps may be changed or the steps may be performed in parallel.

Alternatively, in the drawings in which methods of the disclosure are described, some elements may be omitted and only some elements may be included therein without departing from the essential spirit and scope of the disclosure.

In addition, in methods of the disclosure, some or all of the contents of each embodiment may be implemented in combination without departing from the essential spirit and scope of the disclosure.

Various embodiments of the disclosure have been described above. The above description of the disclosure is for the purpose of illustration, and is not intended to limit embodiments of the disclosure to the embodiments set forth herein. Those skilled in the art will appreciate that other specific modifications and changes may be easily made to the forms of the disclosure without changing the technical idea or essential features of the disclosure. The scope of the disclosure is defined by the appended claims, rather than the above detailed description, and the scope of the disclosure should be construed to include all changes or modifications derived from the meaning and scope of the claims and equivalents thereof.

**Claims**

1. A method performed by a terminal in a wireless communication system, the method comprising:

   receiving, from a base station, downlink control information including a bandwidth part (BWP) indicator field and a first field; and
   performing DCI size alignment for the first field included in the DCI and a second field corresponding to the first field, the second field being required for DCI format interpretation for a BWP indicated by the BWP indicator field, wherein the DCI is associated with multi-cell scheduling, and in case that the first field includes a plurality of first blocks corresponding to respective cells configured for the multi-cell scheduling, the DCI size alignment is applied on a per-block unit basis.

2. The method of claim 1, wherein the DCI size alignment applied on the per-block unit basis is applied separately for each of the plurality of first blocks.

3. The method of claim 2, further comprising receiving, from the base station, information indicating a scheme for the DCI size alignment,
   wherein the information indicates one of a scheme on the per-block unit basis and a scheme on a per-field unit basis.

4. The method of claim 3, wherein the performing of the DCI size alignment further comprises:

   in case that a size of a first block among the plurality of first blocks is smaller than a size of a second block, corresponding to the first block, in the second field, adding at least one bit having a value of 0 to the first block until the size of the first block is equal to the size of the second block; and
   in case that a size of a first block among the plurality of first blocks is larger than a size of a second block, corresponding to the first block, in the second field, using least significant bits of the first block, corresponding to the size of the second block.

5. The method of claim 3, wherein the DCI is associated with multi-cell scheduling, and in case that the first field does not include a plurality of first blocks corresponding to respective cells configured for the multi-cell scheduling, the DCI size alignment is applied on the per-field unit basis, and
wherein the performing of the DCI size alignment further comprises:

   in case that a size of the first field is smaller than a size of the second field, adding at least one bit having a value of 0 to the first field until the size of the first field is equal to the size of the second field; and
   in case that a size of the first field is larger than a size of the second field, using least significant bits of the first field, corresponding to the size of the second field.

6. The method of claim 1, wherein the DCI size alignment is applied further on a per-field unit basis.

7. The method of claim 6, wherein the performing of the DCI size alignment further comprises:

   determining a field having a larger field size among the first field and the second field; and
   based on a result of the determination, performing the DCI size alignment either on the per-block unit basis or on the per-field unit basis,
   wherein, in case that a size of the first field is larger than a size of the second field, the DCI size alignment is applied on the per-field unit basis, and
   wherein, in case that a size of the first field is smaller than a size of the second field, the DCI size alignment is applied on the per-block unit basis.

8. The method of claim 6, wherein the performing of the DCI size alignment further comprises determining a number of bits to be included in the second field among the bits included in the first field when the DCI size alignment on the per-block unit basis is applied, and a number of bits to be included in the second field among the bits included in the first field when the DCI size alignment on the per-field unit basis is applied,

   wherein, in case that the number of bits to be included in the second field among the bits included in the first field when the DCI size alignment on the per-block unit basis is applied is larger than the number of bits to be included in the second field among the bits included in the first field when the DCI size alignment on the per-field unit basis is applied, the DCI size alignment is applied on the per-block unit basis, and
   wherein, in case that the number of bits to be included in the second field among the bits included in the first field when the DCI size alignment on the per-block unit basis is applied is smaller than the number of bits to be included in the second field among the bits included in the first field when the DCI size alignment on the per-field unit basis is applied, the DCI size alignment is applied on the per-field unit basis

9. A terminal in a wireless communication system, the terminal comprising:

   a transceiver; and
   a controller connected to the transceiver,
   wherein the controller is configured to:

      receive, from a base station, downlink control information including a bandwidth part (BWP) indicator field and a first field; and
      perform DCI size alignment for the first field included in the DCI and a second field corresponding to the first field, the second field being required for DCI format interpretation for a BWP indicated by the BWP indicator field,
      wherein the DCI is associated with multi-cell scheduling, and in case that the first field includes a plurality of first blocks corresponding to respective cells configured for the multi-cell scheduling, the DCI size alignment is applied on a per-block unit basis.

10. The terminal of claim 9, wherein the DCI size alignment applied on the per-block unit basis is applied separately for each of the plurality of first blocks.

11. The terminal of claim 10, wherein the controller is further configured to receive, from the base station, information indicating a scheme for the DCI size alignment, and

wherein the information indicates one of a scheme on the per-block unit basis or a scheme on a per-field unit basis.

12. The terminal of claim 11, wherein, in order to perform the DCI size alignment, the controller is further configured to:

in case that a size of a first block among the plurality of first blocks is smaller than a size of a second block, corresponding to the first block, in the second field, add at least one bit having a value of 0 to the first block until the size of the first block is equal to the size of the second block; and
in case that a size of a first block among the plurality of first blocks is larger than a size of a second block, corresponding to the first block, in the second field, use least significant bits of the first block, corresponding to the size of the second block.

13. The terminal of claim 11, wherein the DCI is associated with multi-cell scheduling, and in case that the first field does not include a plurality of first blocks corresponding to respective cells configured for the multi-cell scheduling, the DCI size alignment is applied on the per-field unit basis, and
wherein, in order to the perform the DCI size alignment, the controller is further configured to:

in case that a size of the first field is smaller than a size of the second field, add at least one bit having a value of 0 to the first field until the size of the first field is equal to the size of the second field; and
in case that a size of the first field is larger than a size of the second field, use least significant bits of the first field, corresponding to the size of the second field.

14. The terminal of claim 9, wherein the DCI size alignment is applied further on a per-field unit basis.

15. The terminal of claim 14, wherein, in order to perform the DCI size alignment, the controller is further configured to:

determine a field having a larger field size among the first field and the second field; and
base on a result of the determination, perform the DCI size alignment either on the per-block unit basis or on the per-field unit basis,
wherein, in case that a size of the first field is larger than a size of the second field, the DCI size alignment is applied on the per-field unit basis, and
wherein, in case that a size of the first field is smaller than a size of the second field, the DCI size alignment is applied on the per-block unit basis.
wherein the DCI size alignment is applied based on the field unit when the

FIG.1

1 frame (200)

1 subframe
(201)

μ=0
(204)

| 0 | 1 | 2 | 3 | 4 | 5 | 6 | 7 | 8 | 9 |

slot
(202)

μ=1
(205)

| 0 | 1 | 2 | 3 | 4 | 5 | 6 | 7 | 8 | 9 | 10 | 11 | 12 | 13 | 14 | 15 | 16 | 17 | 18 | 19 |

slot
(203)

# FIG.2

BWP#1
(301)

BWP#2
(302)

Frequency

UE bandwidth
(300)

FIG.3

FIG.4

FIG.5

FIG.6

RA type 0
(7-00)

7-15

Bitmap

RA type 1
(7-05)

7-20

Starting VRB

7-25

Length

Both RA type
0 & 1
(7-10)

7-30

1 bit for RA
type indication

7-35

Max{payload for RA type 0, payload for RA type 1}

# FIG.7

FIG.8

FIG.9

FIG.10

Single cell LTE/NR (S00), Carrier aggregation (S10), Dual connectivity (S20)

EP 4 779 919 A1

Received DCI field size:
20bits

| ///10bits/// | XXX10bitsXXX |

block1
(10bits)

block2
(10bits)

Required DCI field size:
17bits

| 2bits | ///10bits/// | 5bits | 5bits |

block1
(12bits)

block2
(5bits)

Alt 1. Per block
(a)

| ///10bits/// | XXX10bitsXXX |

block1
(10bits)

block2
(10bits)

| 3bits | ///10bits/// | 5bits |

block1
(12bits)

block2
(5bits)

Alt 2. Per field
(b)

| Padding bits   Truncation bits |

FIG.11

EP 4 779 919 A1

Received DCI field size: 10bits

Required DCI field size: 20bits

5bits · block1 (5bits) · 5bits · block2 (5bits)

10bits · block1 (10bits) · 10bits · block2 (10bits)

Alt 1. Per block
(a)

5bits · block1 (5bits) · 5bits · block2 (5bits)

10bits · block1 (10bits) · 10bits · block2 (10bits)

Alt 2. Per field
(b)

Padding bits

Truncation bits

FIG.12

CONFIGURE MC-DCI

↓

CONFIGURE ONE OF FIRST METHOD OR SECOND METHOD

↓

WHEN RECEIVING BWP-SWITCHING MC-DCI, ADJUST AND INTERPRET DCI FIELD LENGTH ON BASIS OF CONFIGURED METHOD

↓

RECEIVE PDSCH OR TRANSMIT PUSCH IN INDICATED BWP OF PLURALITY OF CELLS ACCORDING TO INTERPRETATION

# FIG.13

```
┌─────────────────────────────────────────────┐
│              CONFIGURE MC-DCI                 │
└─────────────────────────────────────────────┘
                      │
                      ▼
┌─────────────────────────────────────────────┐
│ WHEN RECEIVING BWP-SWITCHING MC-DCI, DETERMINE│
│ RECEPTION DCI FIELD LENGTH AND REQUIRED DCI   │
│      FIELD LENGTH FOR EACH DCI FIELD          │
└─────────────────────────────────────────────┘
                      │
                      ▼
┌─────────────────────────────────────────────┐
│ FOR DCI FIELD, DETERMINE FIRST METHOD OR      │
│ SECOND METHOD ON BASIS OF RECEPTION DCI FIELD │
│   LENGTH AND REQUIRED DCI FIELD LENGTH        │
└─────────────────────────────────────────────┘
                      │
                      ▼
┌─────────────────────────────────────────────┐
│ FOR DCI FIELD, ADJUST AND INTERPRET DCI FIELD │
│   LENGTH ON BASIS OF DETERMINED METHOD        │
└─────────────────────────────────────────────┘
                      │
                      ▼
┌─────────────────────────────────────────────┐
│ RECEIVE PDSCH OR TRANSMIT PUSCH IN INDICATED  │
│ BWP OF PLURALITY OF CELLS ACCORDING TO        │
│             INTERPRETATION                     │
└─────────────────────────────────────────────┘
```

# FIG.14

Received DCI field size: 10bits

5bits / 5bits

block1 (5bits) block2 (5bits)

Required DCI field size: 13bits

5bits 5bits 2bits 3bits

block1 (10bits) block2 (3bits)

Alt 1. Per block
(a)

Received DCI field size: 10bits

5bits / 5bits

block1 (5bits) block2 (5bits)

Required DCI field size: 13bits

3bits 7bits 3bits

block1 (10bits) block2 (3bits)

Alt 2. Per field
(b)

FIG.15

CONFIGURE MC-DCI

↓

WHEN RECEIVING BWP-SWITCHING MC-DCI, DETERMINE RECEPTION DCI FIELD LENGTH AND REQUIRED DCI FIELD LENGTH FOR EACH DCI FIELD

↓

FOR DCI FIELD, DETERMINE NUMBER OF BITS INCLUDED IN REQUIRED DCI FIELD AMONG BITS IN RECEIVED DCI FIELD IN FIRST METHOD AND SECOND METHOD

↓

FOR DCI FIELD, DETERMINE ONE METHOD ON BASIS OF NUMBER OF BITS IN FIRST METHOD AND SECOND METHOD

↓

FOR DCI FIELD, ADJUST AND INTERPRET DCI FIELD LENGTH ON BASIS OF DETERMINED METHOD

↓

RECEIVE PDSCH OR TRANSMIT PUSCH IN INDICATED BWP OF PLURALITY OF CELLS ACCORDING TO INTERPRETATION

FIG.16

Received DCI field size:
10bits

5bits | 5bits

block1
(5bits)

block2
(5bits)

8bits | 2bits

block1
(8bits)

block2
(2bits)

Required DCI field size:
13bits

2bits | 8bits | 1bits | 2bits

block1
(10bits)

block2
(3bits)

Padding bits          Truncation bits

FIG.17

FIG.18

(1905) BASE STATION
PROCESSOR

BASE STATION
RECEIVER (1900)

BASE STATION
TRANSMITTER (1910)

FIG.19

## INTERNATIONAL SEARCH REPORT

| International application No. |
|---|
| **PCT/KR2024/014743** |

| A. | CLASSIFICATION OF SUBJECT MATTER |
|---|---|

**H04L 5/00**(2006.01)i; **H04W 72/232**(2023.01)i; **H04W 72/0457**(2023.01)i

According to International Patent Classification (IPC) or to both national classification and IPC

| B. | FIELDS SEARCHED |
|---|---|

Minimum documentation searched (classification system followed by classification symbols)

H04L 5/00(2006.01); H04B 7/0413(2017.01); H04B 7/06(2006.01); H04W 72/12(2009.01); H04W 72/23(2023.01); H04W 72/232(2023.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 하향링크 제어 정보(downlink control information, DCI), 대역폭 부분(bandwidth part, BWP), 지시자 필드(indication field), DCI 포맷(format), DCI 크기 정렬(size alignment), 다중 셀 스케줄링(multi cell scheduling), 블록 단위(per block), 필드 단위(per field)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y<br>A | MODERATOR (NTT DOCOMO, INC.). Summary of discussion on higher layer signalling for MC-Enh. R1-2308626, 3GPP TSG RAN WG1 #114. Toulouse, France. 25 August 2023.<br>See pages 10-11. | 1-6,9-14<br>7-8,15 |
| Y | KR 10-2023-0069091 A (SAMSUNG ELECTRONICS CO., LTD.) 18 May 2023 (2023-05-18)<br>See paragraphs [0093], [0101]-[0102], [0107] and [0111]. | 1-6,9-14 |
| Y | KR 10-2021-0007997 A (TELEFONAKTIEBOLAGET LM ERICSSON(PUBL)) 20 January 2021 (2021-01-20)<br>See paragraphs [0036]-[0042], [0097] and [0143]-[0148]; and claims 1-18. | 4,12 |
| A | US 2023-0217456 A1 (OFINNO, LLC) 06 July 2023 (2023-07-06)<br>See paragraphs [0219]-[0225] and [0283]. | 1-15 |

| ✓ Further documents are listed in the continuation of Box C. | ✓ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **09 January 2025** | **10 January 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
|---|
| **PCT/KR2024/014743** |

**C. DOCUMENTS CONSIDERED TO BE RELEVANT**

| Category* | Citation of document, with indication, where appropriate, of the relevant passages | Relevant to claim No. |
|---|---|---|
| A | SAMSUNG. Multi-cell PUSCH/PDSCH scheduling with a single DCI. R1-2206844, 3GPP TSG RAN WG1 #110. Toulouse, France. 12 August 2022.<br>See sections 3-4. | 1-15 |

Form PCT/ISA/210 (second sheet) (July 2022)

**INTERNATIONAL SEARCH REPORT**
Information on patent family members

International application No.

**PCT/KR2024/014743**

| Patent document cited in search report | | | Publication date (day/month/year) | Patent family member(s) | | | Publication date (day/month/year) |
|---|---|---|---|---|---|---|---|
| KR | 10-2023-0069091 | A | 18 May 2023 | CN | 116134934 | A | 16 May 2023 |
| | | | | EP | 4165942 | A1 | 19 April 2023 |
| | | | | US | 2022-0086894 | A1 | 17 March 2022 |
| | | | | US | 2023-0309106 | A1 | 28 September 2023 |
| | | | | US | 2023-0332605 | A1 | 19 October 2023 |
| | | | | WO | 2022-055333 | A1 | 17 March 2022 |
| KR | 10-2021-0007997 | A | 20 January 2021 | CN | 112119606 | A | 22 December 2020 |
| | | | | CN | 112119606 | B | 08 December 2023 |
| | | | | EP | 3791528 | A1 | 17 March 2021 |
| | | | | JP | 2021-523639 | A | 02 September 2021 |
| | | | | JP | 7387642 | B2 | 28 November 2023 |
| | | | | RU | 2755148 | C1 | 13 September 2021 |
| | | | | US | 2021-0160035 | A1 | 27 May 2021 |
| | | | | WO | 2019-215706 | A1 | 14 November 2019 |
| US | 2023-0217456 | A1 | 06 July 2023 | WO | 2022-066599 | A1 | 31 March 2022 |

Form PCT/ISA/210 (patent family annex) (July 2022)